(19) **Europäisches Patentamt / European Patent Office / Office européen des brevets**

(11) **EP 4 510 576 A1**

(12) **EUROPEAN PATENT APPLICATION**
published in accordance with Art. 153(4) EPC

(43) Date of publication:
**19.02.2025 Bulletin 2025/08**

(21) Application number: **22936848.5**

(22) Date of filing: **12.04.2022**

(51) International Patent Classification (IPC):
**H04N 19/159** (2014.01)

(52) Cooperative Patent Classification (CPC):
**H04N 19/159**

(86) International application number:
**PCT/CN2022/086471**

(87) International publication number:
**WO 2023/197194 (19.10.2023 Gazette 2023/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HUO, Junyan**
  **Dongguan, Guangdong 523860 (CN)**
• **MA, Yanzhuo**
  **Dongguan, Guangdong 523860 (CN)**
• **YANG, Fuzheng**
  **Dongguan, Guangdong 523860 (CN)**
• **DU, Hongqing**
  **Dongguan, Guangdong 523860 (CN)**
• **LI, Ming**
  **Dongguan, Guangdong 523860 (CN)**

(74) Representative: **Taor, Simon Edward William**
**Venner Shipley LLP**
**200 Aldersgate**
**London EC1A 4HD (GB)**

(54) **CODING METHOD AND APPARATUS, DECODING METHOD AND APPARATUS, CODING DEVICE, DECODING DEVICE, AND STORAGE MEDIUM**

(57) A coding method and apparatus, an encoding device, a decoding device, and a storage medium are provided. The method includes the following. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block, where the number of prediction values of the second colour component of the first prediction block is greater than the number of second-colour-component samples in the current block. First filtering is performed on the first prediction block to determine a second prediction block for the second colour component of the current block. A reconstructed value of the second-colour-component sample in the current block is determined according to the second prediction block. In this way, it is possible not only to improve accuracy of chroma prediction and save bit-rate, but also to improve coding performance.

FIG. 5

**Description**

TECHNICAL FIELD

Embodiments of the disclosure relate to the field of video coding technology, and more particularly, to a coding method and apparatus, an encoding device, a decoding device, and a storage medium.

BACKGROUND

With increase in people's requirements on video display quality, new video application forms such as high definition video and ultra high definition video emerge. Joint video expert team (JVET) of international standard organizations (international organization for standardization (ISO)/international electrotechnical commission (IEC) and international telecommunication union telecommunication standardization sector (ITU-T)) has proposed a next-generation video coding standard, namely H.266/versatile video coding (VVC).

A cross-colour-component prediction technology is applied in H.266/VVC. However, a deviation between a prediction value and an original value of a coding block that is calculated with the cross-colour-component prediction technology in H.266/VVC is large, which results in low prediction accuracy and quality degradation of a decoded video, thus degrading encoding performance.

SUMMARY

Embodiments of the disclosure provide a coding method and apparatus, an encoding device, a decoding device, and a storage medium, which can not only improve accuracy of chroma prediction and save bit-rate, but also improve coding performance.

The technical solutions of embodiments of the disclosure can be implemented as follows.

In a first aspect, a decoding method is provided in embodiments of the disclosure. The method includes the following. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block, where the number of prediction values of the second colour component of the first prediction block is greater than the number of second-colour-component samples in the current block. First filtering is performed on the first prediction block to determine a second prediction block for the second colour component of the current block. A reconstructed value of the second-colour-component sample in the current block is determined according to the second prediction block.

In a second aspect, an encoding method is provided in embodiments of the disclosure. The method includes the following. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block, where the number of prediction values of the second colour component of the first prediction block is greater than the number of second-colour-component samples in the current block. First filtering is performed on the first prediction block to determine a second prediction block for the second colour component of the current block. A residual value of the second-colour-component sample in the current block is determined according to the second prediction block.

In a third aspect, an encoding apparatus is provided in embodiments of the disclosure. The encoding apparatus includes a first determining unit, a first predicting unit, and a first filtering unit. The first determining unit is configured to determine a reference sample value for a first colour component of a current block, and determine a weighting factor according to the reference sample value for the first colour component of the current block. The first predicting unit is configured to determine a first prediction block for a second colour component of the current block according to the weighting factor and a reference sample value for the second colour component of the current block, where the number of prediction values of the second colour component of the first prediction block is greater than the number of second-colour-component samples in the current block. The first filtering unit is configured to perform first filtering on the first prediction block to determine a second prediction block for the second colour component of the current block. The first determining unit is further configured to determine a residual value of the second-colour-component sample in the current block according to the second prediction block.

In a fourth aspect, an encoding device is provided in embodiments of the disclosure. The encoding device includes a first memory and a first processor. The first memory is configured to store computer programs executable by the first processor. The first processor is configured to execute the computer programs to perform the method described in the second aspect.

In a fifth aspect, a decoding apparatus is provided in embodiments of the disclosure. The decoding apparatus includes a second determining unit, a second predicting unit, and a second filtering unit. The second determining unit is configured to determine a reference sample value for a first colour component of a current block, and determine a weighting factor according to the reference sample value for the first colour component of the current block. The second predicting unit is configured to determine a first prediction block for a second colour component of the current block according to the weighting factor and a reference sample value for the second colour component of the current block, where the number of prediction values of the second colour component of the first prediction block is greater than the number of second-colour-component samples in the current block. The second filtering unit is configured to perform first filtering on the first prediction block to determine a second prediction block for the second colour component of the current block. The second determining unit is further configured to determine a reconstructed value of the second-colour-component sample in the current block according to the second prediction block.

In a sixth aspect, a decoding device is provided in embodiments of the disclosure. The decoding device includes a second memory and a second processor. The second memory is configured to store computer programs executable by the second processor. The second processor is configured to execute the computer programs to perform the method described in the first aspect.

In a seventh aspect, a computer-readable storage medium is provided in embodiments of the disclosure. The computer-readable storage medium is configured to store computer programs which, when executed, are operable to implement the method described in the first aspect is implemented or implement the method described in the second aspect.

Embodiments of the disclosure provide a coding method and apparatus, an encoding device, a decoding device, and a storage medium. At an encoding end or at a decoding end, the reference sample value for the first colour component of the current block is determined. The weighting factor is determined according to the reference sample value for the first colour component of the current block. The first prediction block for the second colour component of the current block is determined according to the weighting factor and the reference sample value for the second colour component of the current block, where the number of prediction values of the second colour component of the first prediction block is greater than the number of second-colour-component samples in the current block. First filtering is performed on the first prediction block to determine the second prediction block for the second colour component of the current block. In this way, at the encoding end, the residual value of the second-colour-component sample in the current block can be determined according to the second prediction block, such that at the decoding end, the reconstructed value of the second-colour-component sample in the current block can be determined according to the second prediction block. As such, with aid of the reference sample neighbouring the current block and colour component information of the current block, existing colour component information is taken into consideration so that a more accurate nonlinear mapping model can be constructed without loss of luma information so as to allocate a weight to each reference sample value for the chroma component for weighted prediction, in addition, different colour format information is also taken into consideration when performing the first filtering, and chroma and/or luma sampling filtering is performed according to different colour format information, which can ensure that the spatial resolution of the chroma component is consistent with the spatial resolution of the luma component. As such, accuracy of existing luma information is ensured, and it is possible to improve accuracy of chroma prediction, save bit-rate, and thus improve coding performance when performing chroma component prediction by using lossless luma information.

BRIEF DESCRIPTION OF THE DRAWINGS

FIG. 1 is a schematic diagram illustrating distribution of valid neighbouring areas.

FIG. 2 is a schematic diagram illustrating distribution of selection areas in different prediction modes.

FIG. 3 is a schematic flowchart of a model parameter derivation scheme.

FIG. 4A is a schematic block diagram of an encoder provided in embodiments of the disclosure.

FIG. 4B is a schematic block diagram of a decoder provided in embodiments of the disclosure.

FIG. 5 is schematic flowchart I of a decoding method provided in embodiments of the disclosure.

FIG. 6A is a schematic diagram illustrating reference areas for a current block provided in embodiments of the disclosure.

FIG. 6B is a schematic diagram illustrating up-sampling interpolation on reference chroma information provided in embodiments of the disclosure.

FIG. 7 is a schematic diagram illustrating weighted prediction based on a weighted chroma prediction (WCP) mode and another prediction mode(s) provided in embodiments of the disclosure.

FIG. 8 is a schematic diagram illustrating a framework of WCP provided in embodiments of the disclosure.

FIG. 9 is schematic flowchart II of a decoding method provided in embodiments of the disclosure.

FIG. 10 is schematic flowchart III of a decoding method provided in embodiments of the disclosure.

FIG. 11 is schematic flowchart IV of a decoding method provided in embodiments of the disclosure.

FIG. 12 is schematic diagram I illustrating up-sampling interpolation provided in embodiments of the disclosure.

FIG. 13 is schematic diagram II illustrating up-sampling interpolation provided in embodiments of the disclosure.

FIG. 14 is a schematic diagram illustrating weight values in up-sampling interpolation provided in embodiments of the disclosure.

FIG. 15 is schematic diagram III illustrating up-sampling interpolation provided in embodiments of the disclosure.

FIG. 16 is schematic flowchart V of a decoding method provided in embodiments of the disclosure.

FIG. 17 is schematic flowchart VI of a decoding method provided in embodiments of the disclosure.

FIG. 18 is schematic flowchart I of an encoding method provided in embodiments of the disclosure.

FIG. 19 is schematic flowchart II of an encoding method provided in embodiments of the disclosure.

FIG. 20 is a schematic structural diagram of an encoding apparatus provided in embodiments of the disclosure.

FIG. 21 is a schematic structural diagram illustrating hardware of an encoding device provided in embodiments of the disclosure.

FIG. 22 is a schematic structural diagram of a decoding apparatus provided in embodiments of the disclosure.

FIG. 23 is a schematic structural diagram illustrating hardware of a decoding device provided in embodiments of the disclosure.

FIG. 24 is a schematic structural diagram of a coding system provided in embodiments of the disclosure.

DETAILED DESCRIPTION

In order for more comprehensive understanding of the features and technical contents of embodiments of the disclosure, the implementation of embodiments of the disclosure will be described in detail below with reference to the accompanying drawings. The accompanying drawings are only intended for illustration rather than limiting embodiments of the disclosure.

Unless defined otherwise, all technology and terminology used herein have the same meaning as that commonly understood by those of skilled in the technical field of the disclosure. The terminology used herein is only for the purpose of describing embodiments of the disclosure rather than limiting the disclosure.

In the following elaborations, "some embodiments" refers to a sub-set of all possible embodiments, but it can be understood that "some embodiments" can be the same sub-set or different sub-sets of all possible embodiments, and can be combined with each other without conflict. It should also be noted that, the terms "first/second/third" in embodiments of the disclosure are merely intended for distinguishing similar objects, and do not mean a specific ordering of the objects. It can be understood that, the order or sequence of "first/second/third" can be changed when allowed, so that embodiments of the disclosure described herein can be implemented in an order other than that illustrated or described herein.

In a video picture, a first colour component, a second colour component, and a third colour component are usually used to represent a coding block (CB). The three colour components are a luma component, a blue chroma component, and a red chroma component respectively. Exemplarily, the luma component is usually represented by a symbol Y, the blue chroma component is usually represented by a symbol Cb or U, and the red chroma component is usually represented by a symbol Cr or V. In this way, the video picture can be expressed in a YCbCr format or a YUV format. In addition, the video picture can also be expressed in a red green blue (RGB) format, a luminance chrominance-green chrominance-orange (YCgCo) format, and the like, which is not limited in embodiments of the disclosure.

It can be understood that, in a current video picture or video coding process, a cross-component prediction technology mainly includes a cross-component linear model (CCLM) prediction mode and a multi-directional linear model (MDLM) prediction mode. No matter whether it is a model parameter derived according to the CCLM prediction mode or a model parameter derived according to the MDLM prediction mode, the prediction model corresponding thereto can be used to implement cross-colour-component prediction, for example, from the first colour component to the second colour component, from the second colour component to the first colour component, from the first colour component to the third colour component, from the third colour component to the first colour component, from the second colour component to the third colour component, or from the third colour component to the second colour component, etc.

Taking prediction from the first colour component to the second colour component as an example, assuming that the first colour component is a luma component and the second colour component is a chroma component, in order to reduce redundancy between the luma component and the chroma component, the CCLM prediction mode is used in versatile video coding (VVC), that is, a chroma prediction value (also known as predicted chroma value) is constructed according to a reconstructed luma value of the same coding block, such as $\text{Pred}_C(i,j) = \alpha \cdot \text{Rec}_L(i,j) + \beta$.

i, j represents a position coordinate of a sample to-be-predicted in a coding block, where i represents a horizontal direction, and j represents a vertical direction. $\text{Pred}_C(i,j)$ represents a chroma prediction value corresponding to the sample to-be-predicted at the position coordinate (i, j) in the coding block, and $\text{Rec}_L(i, j)$ represents a reconstructed luma (down-sampled) value corresponding to the sample to-be-predicted at the position coordinate (i, j) in the same coding block. In addition, $\alpha$ and $\beta$ represent model parameters, and the model parameters can be derived according to a reference sample.

A neighbouring area of the coding block can include five parts: a left neighbouring area, a top neighbouring area, a bottom-left neighbouring area, a top-left neighbouring area, and a top-right neighbouring area. In H.266/VVC, there are three CCLM prediction modes, i. e. a neighbouring left and top intra-CCLM prediction mode (which can be represented by INTRA_LT_CCLM), a neighbouring left and bottom-left intra-CCLM prediction mode (which can be represented by INTRA_L_CCLM), and a neighbouring top and top-right intra-CCLM prediction mode (which can be represented by INTRA_T_CCLM). For each of the three prediction modes, a preset number (for example, four) of reference samples can be selected for derivation of the model parameters $\alpha$ and $\beta$, and the major difference between the three prediction modes lies in that selection areas corresponding to the reference sample for derivation of the model parameters $\alpha$ and $\beta$ are different.

Specifically, for a coding block with a size of W $\times$ H corresponding to a chroma component, assuming that a top selection area corresponding to the reference sample is W' and a left selection area corresponding to the reference sample is H', then for the INTRA_LT CCLM mode, the reference sample can be selected from the top neighbouring area and the left neighbouring area, i. e. W' = W and H' = H; for the INTRA_L_CCLM mode, the reference sample can be selected from a left neighbouring area and a bottom-left neighbouring area, i. e. H' = W + H and W' = 0 ; for the INTRA T_CCLM mode, the reference sample can be selected from a top neighbouring area and a top-right neighbouring area, i. e. W' = W + H and H' = 0.

It should be noted that, in VVC test model (VTM), for the top-right neighbouring area, at most samples within the range W are stored, and for the bottom-left neighbouring area, at most samples within the range H are stored. Although the range of the selection area for the INTRA_L_CCLM mode or the INTRA_T_CCLM mode is defined as W + H, in practice, the selection area for the INTRA_L_CCLM mode is limited to H + H, and the selection area for the INTRA T_CCLM mode is limited to W + W. In this way, for the INTRA_L_CCLM mode, the reference sample can be selected from the left neighbouring area and the bottom-left neighbouring area, where H' = min {W + H, H + H}; for the INTRA T_CCLM mode, the reference sample can be selected from the top neighbouring area and the top-right neighbouring area, where W' = min {W + H, W + W}.

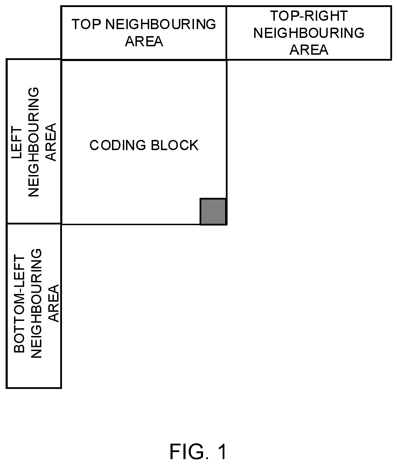

Referring to FIG. 1, FIG. 1 is a schematic diagram illustrating distribution of valid neighbouring areas. In FIG. 1, the left neighbouring area, the bottom-left neighbouring area, the top neighbouring area, and the top-right neighbouring area are all valid. In addition, the gray-filled block represents the sample to-be-predicted whose position coordinate is (i, j) in the coding block.

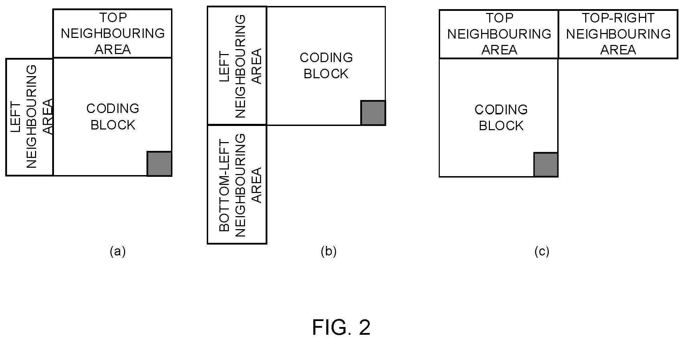

In this way, on the basis of FIG. 1, selection areas for the three prediction modes are illustrated in FIG. 2. In FIG. 2, (a) illustrates the selection area for the INTRA_LT_CCLM mode, which includes the left neighbouring area and the top neighbouring area; (b) illustrates the selection area for the INTRA_L_CCLM mode, which includes the left neighbouring area and the bottom-left neighbouring area; (c) illustrates the selection area for the INTRA T_CCLM mode, which includes the top neighbouring area and the top-right neighbouring area. As such, after the selection areas for the three prediction modes are determined, a sample for model parameter derivation can be selected from the selection areas. The sample thus selected can be referred to as a reference sample, and the number of reference samples is usually four. In addition, for a coding block with the size of W × H, the position of the reference sample thereof is usually fixed.

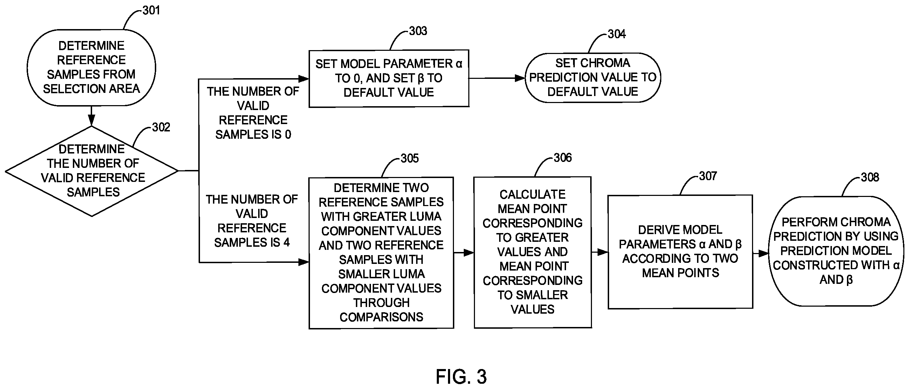

After the preset number of reference samples are determined, at present, chroma prediction is performed according to a schematic flowchart of a model parameter derivation scheme illustrated in FIG. 3. Assuming that the preset number is four, then according to the flows illustrated in FIG. 3, the process can include the following.

S301, reference samples are determined from a selection area.

S302, the number of valid reference samples are determined.

S303, if the number of valid reference samples is 0, model parameter $\alpha$ is set to 0 and model parameter $\beta$ is set to a default value.

S304, a chroma prediction value is set to the default value.

S305, if the number of valid reference samples is four, two reference samples with greater luma component values and two reference samples with smaller luma component values are determined through comparisons.

S306, a mean point corresponding to the greater values and a mean point corresponding to the smaller values are calculated.

S307, the model parameters $\alpha$ and $\beta$ are derived according to the two mean points.

S308, chroma prediction is performed by using a prediction model constructed with $\alpha$ and β.

It should be noted that, in VVC, the determination that the number of valid reference samples is 0 is made according to validity of the neighbouring area.

It should be further noted that, the prediction model is constructed based on the principle of "two points determine one straight line", where the two points can be referred to as fitting points. In an existing technical solution, after four reference samples are determined, two reference samples with greater luma component values and two reference samples with smaller luma component values are determined through comparisons. Then a mean point (which can be represented by $mean_{max}$) is calculated according to the two reference samples with greater values, and another mean point (which can be represented by $mean_{min}$) is calculated according to the two reference samples with smaller values, so as to obtain the two mean points $mean_{max}$ and $mean_{min}$. Then $mean_{max}$ and $mean_{min}$ are taken as two fitting points, so as to derive the model parameters (represented by $\alpha$ and $\beta$). The prediction model is constructed according to $\alpha$ and $\beta$, and chroma component prediction is implemented with the prediction model.

However, in the related art, for each coding block, a simple linear model $Pred_C(i,j) = \alpha \cdot Rec_L(i, j) + \beta$ is used for chroma component prediction, and a sample at any position in the coding block is predicted with the same model parameters $\alpha$ and $\beta$. This can cause the following disadvantages. On one hand, for coding blocks with different content characteristics, a simple linear model is used for luma-to-chroma mapping so as to implement chroma prediction, but for some coding blocks, a luma-to-chroma mapping function cannot be fitted accurately with the simple linear model, and as a result, prediction effect for some coding blocks is not accurate enough. On the other hand, during prediction, the same model parameters $\alpha$ and $\beta$ are used for samples at different positions in the coding block, and prediction accuracy at different positions in the coding block also has big difference. On the other hand, during prediction with the CCLM technology, it is necessary to perform down-sampling on a reconstructed luma value when obtaining a reference luma sample in the neighbouring area and a reconstructed luma sample in the current block from a video with a chroma sub-sampling format such as YUV422, YUV411, and YUV420. However, human eyes have high acuity for a luma signal. Loss of luma information caused by luma down-sampling will affect accuracy of a luma-to-chroma mapping model, thus degrading accuracy of chroma prediction. To summarize, in the existing CCLM technology, for some coding blocks, a deviation between a prediction value and an original value is large, which results in low prediction accuracy and quality degradation, thus degrading coding efficiency.

To this end, embodiments of the disclosure provide an encoding method. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block, where the number of prediction values of the second colour component of the first prediction block is greater than the number of second-colour-component samples in the current block. First filtering is performed on the first prediction block to determine a second prediction block for the second colour component of the current block. A residual value of the second-colour-component sample in the current block is determined according to the second prediction block.

Embodiments of the disclosure further provide a decoding method. A reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block, where the number of prediction values of the second colour component of the first prediction block is greater than the number of second-colour-component samples in the current block. First filtering is performed on the first prediction block to determine a second prediction block for the second colour component of the current block. A reconstructed value of the second-colour-component sample in the current block is determined according to the second prediction block.

In this way, with aid of the reference sample neighbouring the current block and colour component information of the current block, existing colour component information is taken into consideration so that a more accurate nonlinear mapping model can be constructed without loss of luma information so as to allocate a weight to each reference sample value for the chroma component for weighted prediction, in addition, different colour format information is also taken into consideration when performing the first filtering, and chroma and/or luma sampling filtering is performed according to different colour format information, which can ensure that the spatial resolution of the chroma component is consistent with the spatial resolution of the luma component. As such, accuracy of existing luma information is ensured, and with aid of accurate luma information, it is beneficial to improving accuracy and stability of a nonlinear mapping model when performing chroma component prediction by using lossless luma information, thereby improving accuracy of chroma prediction, saving bit-rate, improving coding efficiency, and thus improving coding performance.

Embodiments of the disclosure will be described in detail below with reference to the accompanying drawings.

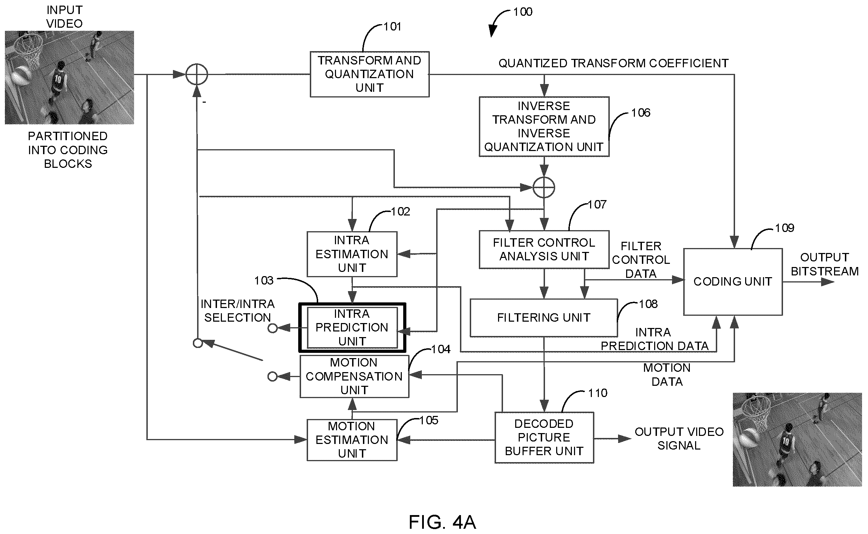

Referring to FIG. 4A, FIG. 4A is a schematic block diagram of an encoder provided in embodiments of the disclosure. As illustrated in FIG. 4A, the encoder (which is specifically a "video encoder") 100 can include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, a coding unit 109, a decoded picture buffer unit 110, and the like. The filtering unit 108 can implement deblocking filtering and sample adaptive offset (SAO) filtering. The coding unit 109 can implement header information encoding and context-based adaptive binary arithmetic coding (CABAC). For an input original video signal, one video coding block can be obtained through partitioning of a coding tree unit (CTU). Then, for residual sample information obtained after intra prediction or inter prediction, the video coding block is transformed by the transform and quantization unit 101, including transforming the residual information from the sample domain to the transform domain, and the obtained transform coefficients are quantized, so as to further reduce bit rate. The intra estimation unit 102 and the intra prediction unit 103 are configured to perform intra prediction on the coding block. Specifically, the intra estimation unit 102 and the intra prediction unit 103 are configured to determine an intra prediction mode to-be-used to encode the video coding block. The motion compensation unit 104 and the motion estimation unit 105 are configured to perform inter prediction encoding on the received video coding block relative to one or more blocks in one or more reference pictures, to provide temporal prediction information. The motion estimation performed by the motion estimation unit 105 is a process of generating a motion vector, where the motion vector can be used to estimate motion of the video coding block. Then the motion compensation unit 104 is configured to perform motion compensation based on the motion vector determined by the motion estimation unit 105. After the intra prediction mode is determined, the intra prediction unit 103 is configured to provide the selected intra prediction data to the coding unit 109, and the motion estimation unit 105 is configured to send the calculated motion vector data to the coding unit 109. In addition, the inverse transform and inverse quantization unit 106 is configured for reconstruction of the configured coding block. A residual block is reconstructed in the sample domain, and blockiness artifacts of the reconstructed residual block are removed by the filter control analysis unit 107 and the filtering unit 108, and then the reconstructed residual block is added to a prediction block of a picture in the decoded picture buffer unit 110, to generate a reconstructed coding block. The coding unit 109 is configured to encode various coding parameters and quantized transform coefficients. In the CABAC-based encoding algorithm, the context can be based on neighbouring coding blocks, and the coding unit 109 can be configured to encode information indicating the determined intra prediction mode and output a bitstream of the video signal. The decoded picture buffer unit 110 is configured to store reconstructed video coding blocks in order for prediction reference. As the video picture encoding progresses, reconstructed video coding blocks will be continuously generated, and these reconstructed video coding blocks will be stored into the decoded picture buffer unit 110.

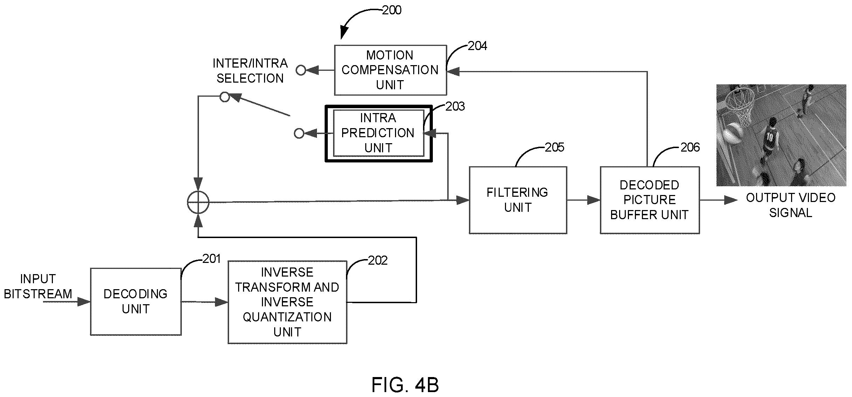

Referring to FIG. 4B, FIG. 4B is a schematic block diagram a decoder provided in embodiments of the disclosure. As illustrated in FIG. 4B, the decoder (which is specifically a "video decoder") 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 can implement header information decoding and CABAC decoding. The filtering unit 205 can implement deblocking filtering and SAO filtering. After the input video signal is encoded (as illustrated in FIG. 4A), the bitstream of the video signal is output. The bitstream is input into the decoder 200. First, decoded transform coefficients are obtained by the decoding unit 201. The decoded transform coefficients are processed by the inverse transform and inverse quantization unit 202, so as to generate a residual block in the sample domain. The intra prediction unit 203 can be configured to generate prediction data of the current video coding block based on the determined intra prediction mode and data from the previous decoded block of the current frame or picture. The motion compensation unit 204 is configured to determine prediction information for the video coding block by analyzing motion vectors and other associated syntax elements, and use the prediction information to generate a prediction block of the video coding block that is being decoded. The decoded video block is formed by summing the residual block from the inverse transform and inverse quantization unit 202 and the corresponding prediction block generated by the intra prediction unit 203 or the motion compensation unit 204. The blockiness artifacts of the decoded video signal are removed by the filtering unit 205, which can improve quality of the video. The decoded video block is then stored into the decoded picture buffer unit 206. The decoded picture buffer unit 206 is configured to store reference pictures used for subsequent intra prediction or motion compensation, and is also configured to output the video signal, that is, the restored original video signal is obtained.

It should be noted that, the method in embodiments of the disclosure is mainly applied to the intra prediction unit 103 illustrated in FIG. 4A and the intra prediction unit 203 illustrated in FIG. 4B. That is, embodiments of the disclosure can be applied to an encoder, a decoder, or even both an encoder and a decoder, but embodiments of the disclosure are not limited in this regard.

It should be further noted that, when applied to the intra prediction unit 103, the "current block" specifically refers to a coding block on which intra prediction is currently to be performed. When applied to the intra prediction unit 203, the "current block" specifically refers to a coding block on which intra prediction is currently to be performed.

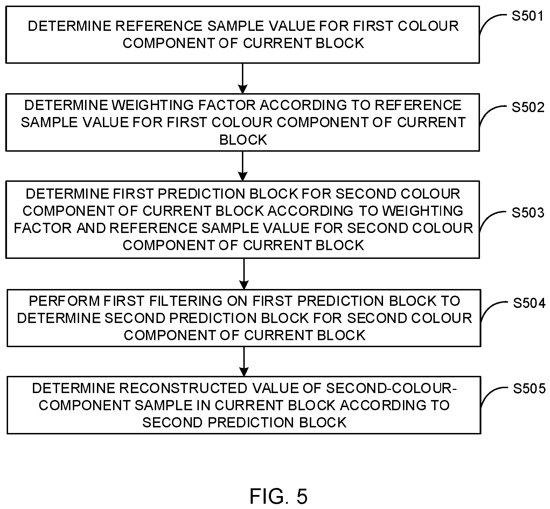

In an embodiment of the disclosure, referring to FIG. 5, FIG. 5 is schematic flowchart I of a decoding method provided in embodiments of the disclosure. As illustrated in FIG. 5, the method can include the following.

S501, a reference sample value for a first colour component of a current block is determined.

It should be noted that, the decoding method in embodiments of the disclosure can be applied to a decoding apparatus, or a decoding device (can also be referred to as a "decoder" for short) integrating the decoding apparatus. In addition, the decoding method in embodiments of the disclosure can specifically refer to an intra prediction method, and more specifically, to a weighted chroma prediction (WCP) method.

In embodiments of the disclosure, a video picture can be partitioned into multiple coding blocks, and each coding block can include a first colour component, a second colour component, and a third colour component. The current block herein refers to a coding block on which intra prediction is currently to be performed in the video picture. In addition, assuming that a first colour component of the current block is to be predicted and the first colour component is a luma component, that is, a colour component to-be-predicted is a luma component, the current block can also be called a luma prediction block. Alternatively, assuming that a second colour component of the current block is to be predicted and the second colour component is a chroma component, that is, the colour component to-be-predicted is a chroma component, the current block can also be called a chroma prediction block.

It should be further noted that, in embodiments of the disclosure, reference information for the current block can include a value of a first-colour-component sample in a neighbouring area of the current block and a value of a second-colour-component sample in the neighbouring area of the current block, and these samples can be determined from decoded samples in the neighbouring area of the current block. In some embodiments, the neighbouring area of the current block can include at least one of: a top neighbouring area, a top-right neighbouring area, a left neighbouring area, or a bottom-left neighbouring area.

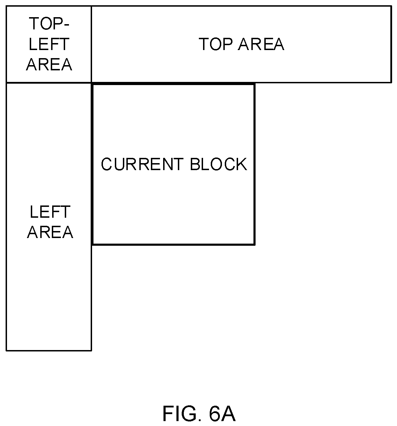

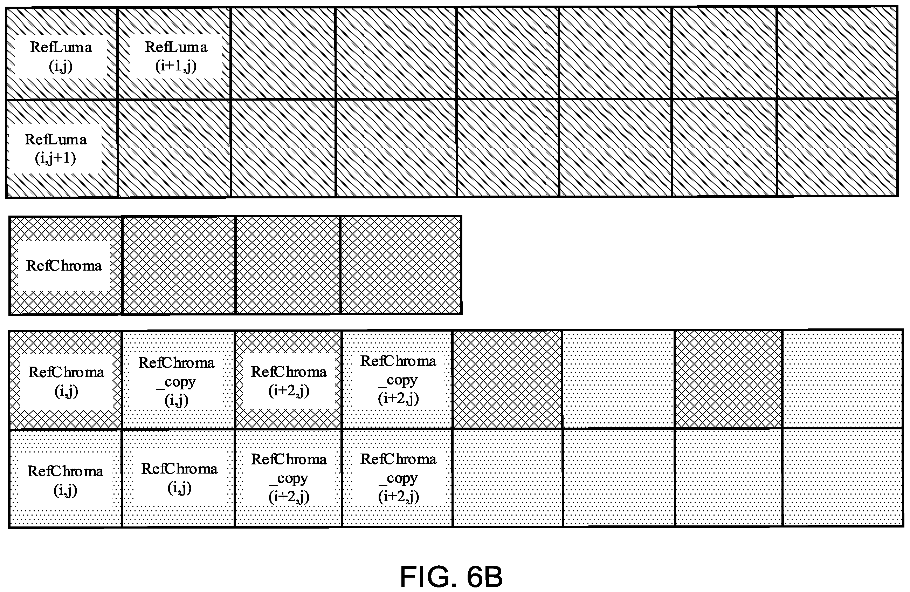

Here, the top neighbouring area and the top-right neighbouring area can be collectively regarded as a top area, and the left neighbouring area and the bottom-left neighbouring area can be collectively regarded as a left area. In addition, the neighbouring area can further include a top-left area, as illustrated in FIG. 6. When predicting the second colour component of the current block, the top area, the left area, and the top-left area, which are neighbouring areas of the current block, can all be referred to as reference areas for the current block, and all samples in the reference areas are decoded reference samples.

It should be further noted that, in embodiments of the disclosure, the neighbouring area of the current block can be multiple rows or multiple columns neighbouring the current block. For example, the left area can include one or more columns, and the top area can include one or more rows, the number of rows or columns can be increased or decreased, which are not limited in embodiments of the disclosure.

In some embodiments, the reference sample value for the first colour component of the current block can be determined as follows. The reference sample value for the first colour component of the current block is determined according to a value of a first-colour-component sample in the neighbouring area of the current block.

It should be noted that, in embodiments of the disclosure, the reference sample for the current block can refer to a reference sample neighbouring the current block, and can also be referred to as a first-colour-component sample and a second-colour-component sample in the neighbouring area of the current block, which are referred to as "neighbouring sample" or "reference sample". Here, "neighbouring" can be spatially neighbouring, but is not limited thereto. For example, "neighbouring" can also be temporally neighbouring or spatially and temporally neighbouring. Alternatively, the reference sample for the current block can also be a reference sample obtained through some processing on a spatially neighbouring reference sample, a temporally neighbouring reference sample, or a spatially and temporally neighbouring reference sample, etc., and embodiments of the disclosure are not limited in this regard.

It should be further noted that, in embodiments of the disclosure, the first colour component is a luma component, and the second colour component is a chroma component. In this case, the value of the first-colour-component sample in the neighbouring area of the current block refers to reference luma information corresponding to the reference sample for the current block, and a value of the second-colour-component sample in the neighbouring area of the current block refers to reference chroma information corresponding to the reference sample for the current block.

It should be further noted that, in embodiments of the disclosure, the value of the first-colour-component sample is determined from the neighbouring area of the current block. Here, the neighbouring area can include only the top neighbouring area, or can include only the left neighbouring area, or can include the top neighbouring area and the top-right neighbouring area, or can include the left neighbouring area and the bottom-left neighbouring area, or can include the top neighbouring area and the left neighbouring area, or can even include the top neighbouring area, the top-right neighbouring area, and the left neighbouring area, etc., which is not limited in embodiments of the disclosure.

It should be further noted that, in embodiments of the disclosure, the neighbouring area can also be determined according to a prediction mode for the current block. In an embodiment, if the prediction mode for the current block is a horizontal mode, the reference sample is determined from samples in the top neighbouring area and/or the top-right neighbouring area; if the prediction mode for the current block is a vertical mode, the reference sample is determined from samples in the left neighbouring area and/or the bottom-left neighbouring area.

Exemplarily, if the prediction mode for the current block is the horizontal mode, the neighbouring area for chroma component prediction can be only the top neighbouring area and/or the top-right neighbouring area. If the prediction mode for the current block is the vertical mode, the neighbouring area for chroma component prediction can be only the left neighbouring area and/or the bottom-left neighbouring area.

Further, in some embodiments, in terms of determining the value of the first-colour-component sample, the method can further include the following. The value of the first-colour-component sample is determined by selecting from first-colour-component samples in the neighbouring area.

It should be noted that, among the first-colour-component samples in the neighbouring area, there can be some unimportant samples (for example, these samples have poor correlation) or some abnormal samples. To ensure accuracy of prediction, these samples need to be removed, so as to obtain a value of a valid first-colour-component sample. That is, in embodiments of the disclosure, a first sample set is formed from the first-colour-component samples in the neighbouring area of the current block. In this case, the value of the first-colour-component sample can be determined by selecting from the first sample set.

In an embodiment, the value of the first-colour-component sample can be determined by selecting from the first-colour-component samples in the neighbouring area as follows. A sample position to-be-selected is determined according to a position and/or a colour component intensity of the first-colour-component sample in the neighbouring area. The value of the first-colour-component sample is determined from the neighbouring area according to the sample position to-be-selected.

It should be noted that, in embodiments of the disclosure, the colour component intensity can be represented by colour component information, for example, reference luma information and reference chroma information. Here, a greater value of the colour component information represents a higher colour component intensity. In this way, selection from the first-colour-component samples in the neighbouring area can be performed according to the sample position or according to the colour component intensity, so as to determine a valid first-colour-component sample from the sample thus selected, thereby determining the value of the first-colour-component sample.

In some embodiments, the reference sample value for the first colour component of the current block can be further determined as follows. Second filtering is performed on the value of the first-colour-component sample to obtain a filtered neighbouring sample value for the first colour component of the current block. The reference sample value for the first colour component of the current block is determined according to the filtered neighbouring sample value for the first colour component of the current block.

In embodiments of the disclosure, the number of filtered neighbouring sample values for the first colour component of the current block is greater than the number of values of the first-colour-component samples.

In embodiments of the disclosure, the second filtering can be up-sampling filtering. The first colour component is a luma component. In order to ensure that the reference luma information is lossless, the reference luma information can remain unchanged, or up-sampling filtering can be performed on the reference luma information. Exemplarily, if the size of the current block is 2M × 2N, and the amount of reference luma information is 2M + 2N, then the amount of reference luma information can become 4M + 4N after up-sampling filtering.

In some embodiments, the reference sample value for the first colour component of the current block can be further determined as follows. The reference sample value for the first colour component of the current block is determined based on a reconstructed value of a first-reference-colour-component sample in the current block.

It should be noted that, in embodiments of the disclosure, the first reference colour component can be a luma component. In this case, the reconstructed value of the first-reference-colour-component sample in the current block is reconstructed luma information of the current block.

Further, in some embodiments, the reference sample value for the first colour component of the current block can be further determined as follows. Third filtering is performed on the reconstructed value of the first-reference-colour-component sample in the current block to obtain a filtered sample value of the first-reference-colour-component sample in the current block. The reference sample value for the first colour component of the current block is determined according to the filtered sample value of the first-reference-colour-component sample in the current block.

In embodiments of the disclosure, the number of filtered sample values of the first-reference-colour-component samples in the current block is greater than the number of reconstructed values of the first-reference-colour-component samples in the current block.

In embodiments of the disclosure, the third filtering can be up-sampling filtering. The first reference colour component is a luma component. In order to ensure that the reconstructed luma information of the current block is lossless and obtain a more accurate chroma prediction value, the reconstructed luma information of the current block can remain unchanged, or up-sampling filtering can be performed on the reconstructed luma information of the current block. For example, if the amount of reconstructed luma information of the current block is $2M \times 2N$, then the amount of reconstructed luma information of the current block can become $4M \times 4N$ after up-sampling filtering.

It should be noted that, in embodiments of the disclosure, with regard to the filtering of the reference information before weighted prediction, filtering can be performed only on the reference luma information, or can be performed only on the reconstructed luma information, or can be performed on both the reference luma information and the reconstructed luma information, which is not limited herein. Then, with regard to calculating a luma difference, the luma difference can be an absolute value of a difference between the reference luma information and the reconstructed luma information, or can be an absolute value of a difference between the reference luma information subject to filtering and the reconstructed luma information, or can be an absolute value of a difference between the reference luma information and the reconstructed luma information subject to filtering, or can even be an absolute value of a difference between the reference luma information subject to filtering and the reconstructed luma information subject to filtering.

It should be further noted that, in embodiments of the disclosure, the reference sample value for the first colour component of the current block can also be set to luma difference information. Therefore, in a possible implementation, the reference sample value for the first colour component of the current block is set to an absolute value of a difference between the value of the first-colour-component sample and the reconstructed value of the first-reference-colour-component sample.

In another possible implementation, the reference sample value for the first colour component of the current block is set to an absolute value of a difference between the filtered neighbouring sample value for the first colour component and the reconstructed value of the first-reference-colour-component sample.

In another possible implementation, the reference sample value for the first colour component of the current block is set to an absolute value of a difference between the filtered neighbouring sample value for the first colour component and the filtered sample value of the first-reference-colour-component sample.

In another possible implementation, the reference sample value for the first colour component of the current block is set to an absolute value of a difference between the value of the first-colour-component sample and the filtered sample value of the first-reference-colour-component sample.

That is, while keeping the luma information to be lossless, up-sampling filtering can be performed on the reference luma information of the neighbouring area of the current block, or up-sampling filtering can be performed on the reconstructed luma information of the current block, or up-sampling filtering can be performed on both the reference luma information and the reconstructed luma information, or no up-sampling filtering is performed on the reference luma information and the reconstructed luma information. Then, the luma difference information can be determined according to different combinations of the above cases, and the luma difference information is used as the reference sample value for the first colour component of the current block.

S502, a weighting factor is determined according to the reference sample value for the first colour component of the current block.

It should be noted that, in embodiments of the disclosure, the weighting factor can determined according to the reference sample value for the first colour component of the current block as follows. A value corresponding to the reference sample value for the first colour component in a preset mapping is determined. The weighting factor is set to be equal to the value.

It can be understood that, in embodiments of the disclosure, the reference sample value for the first colour component can be the absolute value of the difference between the filtered neighbouring sample value for the first colour component of the current block and the filtered sample value of the first-reference-colour-component sample in the current block. The first reference colour component is the first colour component, and the first colour component is a colour component different from a second colour component to-be-predicted in embodiments of the disclosure.

Exemplarily, it is assumed that the first colour component is a chroma component and the second colour component is a luma component, and embodiments of the disclosure mainly aims at predicting a chroma component of a sample to-be-predicted in the current block. Firstly, at least one sample to-be-predicted in the current block is selected, and a luma difference (represented by $|\Delta C_k|$) between reconstructed chrominance thereof and reference chrominance of the neighbouring area is calculated. Chroma differences of samples to-be-predicted at different positions relative to the neighbouring area are different. The position of the reference sample with the minimum chroma difference will vary according to the sample to-be-predicted in the current block. Generally, the chroma difference represents the degree of similarity between chrominance. A smaller $|\Delta C_k|$ indicates higher similarity between chroma values, and the corresponding weighting factor (represented by $w_k$) can be given a greater value; on the contrary, a greater $|\Delta C_k|$ indicates lower similarity between chroma values, and $w_k$ can be given a smaller value. That is, $w_k$ and $|\Delta C_k|$ are in approximately inverse proportion. In this way, the preset mapping can be established according to $|\Delta C_k|$, as illustrated below:

$$w_k = f(|\Delta C_k|) \tag{1}$$

Here, taking formula (1) as an example, $|\Delta C_k|$ represents the reference sample value for the first colour component, $f(|\Delta C_k|)$ represents the value corresponding to the reference sample value for the first colour component in the preset mapping, and $w_k$ represents the weighting factor, that is, $w_k$ is set to be equal to $f(|\Delta C_k|)$.

It should be further noted that, in embodiments of the disclosure, if the number of reference sample values for the second colour component is N, the number of weighting factors is N accordingly, where the sum of the N weighting factors is equal to 1, and each of the weighting factors is a value greater than or equal to 0 and less than or equal to 1, i. e. $0 \leq w_k \leq 1$. However, it should be noted that, "the sum of the N weighting factors is equal to 1" is only a theoretical concept, and in actual implementation of fixed-point, the absolute value of the weighting factor can be greater than 1.

It can be understood that, in the probability theory and related fields, a normalized exponential function, or referred to as a Softmax function, is a generalization of a logic function. It can "convert" an *N*-dimensional vector *z* of arbitrary real numbers into another *N*-dimensional vector $\sigma(z)$, such that the range of each element is within (0, 1), and the sum of all the elements is 1. The Softmax function is often used as a nonlinear activation function for a multi-class classification neural network. The Softmax function is as follows:

$$\text{Softmax}(x_i) = \frac{e^{x_i}}{\sum_j e^{x_j}} \tag{2}$$

However, although the Softmax function can satisfy conditional constraints of $w_k$, its function value increases as the value of the vector element increases, which does not comply with the approximately inverse proportion between $w_k$ and $|\Delta C_k|$. Therefore, in order to adapt to the design of $w_k$ and meet requirements for nonlinearity of $w_k$, the *f* function of formula (1) can be implemented by a Softmax function with parameter $\gamma$, as illustrated in detail below:

$$f(x_i) = \frac{e^{\gamma x_i}}{\sum_j e^{\gamma x_j}} \tag{3}$$

In order to comply with the approximately inverse proportion between $w_k$ and $|\Delta C_k|$, $\gamma$ can be defined as a negative number. That is, if the first-reference-colour-component parameter is $|\Delta C_k|$, the mapping between $|\Delta C_k|$ and $w_k$ can be expressed as:

$$w_k = f(\gamma, |\Delta C_k|) = \frac{e^{\gamma |\Delta C_k|}}{\sum_j e^{\gamma |\Delta C_j|}} \tag{4}$$

According to formula (4), in some embodiments, the value corresponding to the reference sample value for the first colour component in the preset mapping can be determined as follows. A first factor is determined. A first product value is determined according to the first factor and the reference sample value for the first colour component. A value corresponding to the first product value in the preset mapping is determined.

It should be noted that, in embodiments of the disclosure, the first factor is a constant value less than zero. Taking the Softmax function as an example, in formula (4), $\gamma$ represents the first factor, $|\Delta C_k|$ represents the first-reference-colour-component parameter, $\gamma|\Delta C_k|$ represents the first product value, and $w_k$ represents the weighting factor, where $k = 1, 2, ..., N$.

In an embodiment, the first factor can be determined as follows. The first factor is a preset constant value.

It should be noted that, in this case, with regard to $\gamma$, a distribution of weighting factors for neighbouring chrominance can be adjusted according to relatively flat characteristics of chrominance, so as to determine a distribution of weighting factors that is suitable for chroma prediction of a natural picture. In order to determine parameter $\gamma$ suitable for chroma prediction of a natural picture, a given set of $\gamma$ is traversed, and whether $\gamma$ is suitable or not is determined according to differences between predicted chrominance and original chrominance with respect to different $\gamma$. Exemplarily, $\gamma$ can be $-2^\varepsilon$, where $\varepsilon \in \{1, 0, -1, -2, -3\}$. It is found from experiments that in this set of $\gamma$, the optimal value of $\gamma$ is -0.25. Therefore, in an embodiment, $\gamma$ can be set to -0.25, but embodiments of the disclosure are not limited thereto.

In another embodiment, the first factor can be determined as follows. A value of the first factor can be determined according to a size parameter of the current block.

Further, in some embodiments, the method can further include the following. The value of the first factor is determined according to a preset mapping look-up table between the size parameter of the current block and the value of the first factor.

Here, the size parameter of the current block can include at least one of: a width of the current block, a height of the current block, or a product of the width and the height of the current block.

It should be noted that, in embodiments of the disclosure, the value of the first factor can be set by means of classification. For example, the size parameter of the current block is classified into three categories, and the value of the first factor corresponding to each category is determined. In this case, in embodiments of the disclosure, the mapping look-up table between the size parameter of the current block and the value of the first factor can also be pre-stored, and then the value of the first factor can be determined according to the look-up table. Exemplarily, Table 1 shows a correspondence between the first factor and the size parameter of the current block provided in embodiments of the disclosure. It should be noted that, Table 1 is merely an exemplary look-up table, and is not intended for limitation.

Table 1

| Size parameter of current block | First factor |
|---|---|
| Min(W, H)<=4 | -0.125 |
| Min(W, H)>4&& Min(W, H)<=16 | -0.0833 |
| Min(W, H)>16 | -0.0625 |

In another embodiment, the first factor can be determined as follows. The value of the first factor is determined according to the number of reference samples for the current block.

Further, in some embodiments, the method can further include the following. The value of the first factor is determined according to a preset mapping look-up table between the number of reference samples for the current block and the value of the first factor.

It should be noted that, in embodiments of the disclosure, the number of reference samples can be classified into three categories, and the value of the first factor can also be set by means of classification. For example, the number of reference samples for the current block is classified into three categories, and the value of the first factor corresponding to each category is determined. In this case, in embodiments of the disclosure, the mapping look-up table between the number of reference samples for the current block and the value of the first factor can also be pre-stored, and then the value of the first factor can be determined according to the look-up table. Exemplarily, Table 2 shows a correspondence between the first factor and the number of reference samples for the current block provided in embodiments of the disclosure. It should be noted that, Table 2 is only an exemplary look-up table, and is not intended for limitation.

Table 2

| Number of reference samples | First factor |
|---|---|
| 0<R<16 | -0.1113 |
| 16<=R<32 | -0.0773 |
| R>=32 | -0.0507 |

Further, for the first product value, the first product value can be determined according to the first factor and the reference sample value for the first colour component as follows. The first product value is set to be equal to a product of the first factor and the reference sample value for the first colour component. Alternatively, the first product value is set to be equal to a numerical value obtained by right-shifting the reference sample value for the first colour component, where the number of bits right shifted is equal to the first factor. Alternatively, the first product value is set to a value obtained by performing addition and bit shift on the reference sample value for the first colour component according to the first factor.

Exemplarily, assuming that the first factor is equal to 0.25, and the reference sample value for the first colour component is represented by *Ref*, then the first product value can be equal to $0.25 \times Ref$, and $0.25 \times Ref$ can also be represented by *Ref*/4, that is, *Ref*>>2. In addition, in fixed-point calculation, a floating-point number can be converted into addition and shift operations. That is, there is no limitation on the manner for calculation of the first product value.

It can also be understood that, in embodiments of the disclosure, the first colour component can also be a luma component, and the second colour component is a chroma component. In this case, at least one sample to-be-predicted in the current block is selected, and a luma difference (represented by $|\Delta Y_k|$) between reconstructed luminance thereof and reference luminance of the neighbouring area is calculated. A smaller $|\Delta Y_k|$ indicates higher similarity between luma values, and the corresponding weighting factor (represented by $w_k$) can be given a greater value; on the contrary, a larger $|\Delta Y_k|$ indicates lower similarity between luma values, and $w_k$ can be given a smaller value. That is, when calculating the weighting factor, the reference sample value for the first colour component can also be $|\Delta Y_k|$, and then the weighting factor can be calculated.

It should be noted that, when predicting the chroma component of the sample to-be-predicted in the current block, since a chroma component value of the sample to-be-predicted cannot be directly determined, a chroma difference $|\Delta C_k|$ between the reference sample and the sample to-be-predicted cannot be directly obtained. However, there is strong correlation between components in a local area of the current block. In this case, $|\Delta C_k|$ can be derived according to a luma difference $|\Delta Y_k|$ between the reference sample and the sample to-be-predicted. That is, $|\Delta C_k|$ can be obtained according to a product of $|\Delta Y_k|$ and a second factor. In this way, the first product value is equal to the product of the first factor and $|\Delta Y_k|$.

In other words, in embodiments of the disclosure, the reference sample value for the first colour component can be $|\Delta C_k|$, that is, an absolute value of the chroma difference. Alternatively, the reference sample value for the first colour component can be $|\Delta Y_k|$, that is, an absolute value of the luma difference. Alternatively, the reference sample value for the first colour component can be $|\alpha \Delta Y_k|$, that is, a product of the absolute value of the luma difference and a preset multiplier. Here, the preset multiplier is the second factor described in embodiments of the disclosure.

Further, for the second factor, in an embodiment, the method can include the following. The second factor is determined by performing least squares calculation on a first-colour-component value of the reference sample and a second-colour-component value of the reference sample.

That is, assuming that the number of reference samples is $N$, the first-colour-component value of the reference sample is the reference luma information for the current block, and the second-colour-component value of the reference sample is the reference chroma information for the current block, then least squares calculation can be performed on chroma component values and luma component values of the $N$ reference samples, so as to obtain the second factor. Exemplarily, the least squares regression calculation is as follows:

$$\alpha = \frac{N\sum_k L_k \cdot C_k - \sum_k C_k \sum_k L_k}{N\sum_k L_k \cdot L_k - \sum_k L_k \sum_k L_k} \tag{5}$$

$L_k$ represents a luma component value of a $k^{\text{th}}$ reference sample. $C_k$ represents a chroma component value of the $k^{\text{th}}$ reference sample. $N$ represents the number of reference samples. $\alpha$ represents the second factor, which can be calculated by means of least squares regression. It should be noted that, the second factor can also be a fixed value or a value subject to fine adjustment on a fixed value, which is not specifically limited in embodiments of the disclosure.

In addition, for the preset mapping, the preset mapping can be a preset function relationship. In some embodiments, the preset mapping can be a Softmax function. The Softmax function is normalized exponential function. However, in embodiments of the disclosure, normalization may not be needed, and the value thereof is not limited to the range of [0, 1].

Exemplarily, the reference sample value for the first colour component is $|\Delta Y_k|$, and then a weighting factor $w_k$ corresponding to the $k^{\text{th}}$ reference sample can be calculated according to formula (4), or can be replaced by the following formulas:

$$w_k = \frac{e^{-|\Delta Y_k|}}{\sum_j e^{-|\Delta Y_j|}} \tag{6}$$

$$w_k = \frac{e^{\frac{-|\Delta Y_k|}{S}}}{\sum_j e^{\frac{-|\Delta Y_j|}{S}}} \tag{7}$$

S represents a control parameter, and a relationship between S and the first factor ($\gamma$) is $\gamma = -\frac{1}{S}$.

Exemplarily, a value of S depends on the size parameter of the current block, where the size parameter of the current block includes the width and the height of the current block. In a possible implementation, if the minimum value between the width and the height is less than or equal to 4, $S = 8$. If the minimum value between the width and the height is greater than 4 and less than or equal to 16, $S = 12$. If the minimum value between the width and the height is greater than 16, $S = 16$. In another possible implementation, if the minimum value between the width and the height is less than or equal to 4, *S* = 7. If the minimum value between the width and the height is greater than 4 and less than or equal to 16, *S* = 11. If the minimum value between the width and the height is greater than 16, *S* = 15. Alternatively, the value of S depends on the number (*R*) of reference samples for the current block. In a possible implementation, if *R* < 16, *S* = 8. If 16 ≤ *R* < 32, *S* = 12. If *R* ≥ 16, *S* = 16. Embodiments of the disclosure are not limited in this regard.

It should be further noted that, in addition to the Softmax function, in other embodiments, the preset mapping can be a weighting function that is in inverse proportion with the reference sample value for the first colour component.

Exemplarily, the reference sample value for the first colour component is $|\Delta Y_k|$, and then the Softmax function of formula (4) can also be replaced by the following formulas:

$$w_k = \frac{\frac{1}{\gamma |\Delta Y_k| + \text{offset}}}{\sum_{j=1}^{N} \left( \frac{1}{\gamma |\Delta Y_j| + \text{offset}} \right)}$$

$$(8)$$

$$w_k = \frac{\frac{1}{e^{\gamma |\Delta Y_k|} + \text{offset}}}{\sum_{j=1}^{N} \left( \frac{1}{e^{\gamma |\Delta Y_j|} + \text{offset}} \right)} \qquad (9)$$

where k = 1,2, ... N, and offset = 1 or 2 or 0.5 or 0.25.

In this way, when the preset mapping is the preset function relationship, the preset mapping can be as illustrated in formula (4), or can be as illustrated in formula (6) or formula (7), or can be as illustrated in formula (8) or formula (9), or can even be another function model of the weighting factor that is constructed by fitting the tendency that higher similarity between the reference luma value of the reference sample and the reconstructed luma value of the sample to-be-predicted in the current block leads to higher importance of a reference chroma value of the reference sample to the sample to-be-predicted in the current block. Embodiments of the disclosure are not limited in this regard.

In addition, in some embodiments, the preset mapping can also be in the form of a preset look-up table. That is, in embodiments of the disclosure, operations can also be simplified, for example, some calculations can be eliminated by means of an array element look-up table. For the preset mapping, an array element value can be determined according to a preset mapping look-up tablet between the reference sample value for the first colour component, the first factor, and an array element, then a value corresponding to the array element value in the preset mapping can be determined, and the weighting factor can be set to be equal to the value.

Specifically, the f model for weighting factor calculation can be implemented through simplified operations, for example, by means of a look-up table. A luma difference $|\Delta Y_k|$ of a sample (*i, j*) to-be-predicted can also be represented by $|\Delta Y_{kij}|$. In this way, the weighting factor is calculated with the *f* model, i. e. $w_{kij} = f(|\Delta Y_{kij}|)$. Here, a numerator in the *f* model can be stored by taking the independent variable $|\Delta Y_{kij}|$ and the number of categories of *S* as an array index(es). Subsequent operations that are the same as calculation of the numerator in the *f* model are implemented by means of the look-up table, so as to eliminate calculations on the numerator and a denominator.

In embodiments of the disclosure, the storage can be full storage or partial storage.

In an embodiment, the full storage means storing all numerators corresponding to the range of $|\Delta Y_{kij}|$ and the number of categories of *S*, and an array space with a size of the range of $|\Delta Y_{kij}|$ multiplied by the number of categories of *S* is required for full storage. The size of the array that needs to be stored is the size of the range of $|\Delta Y_{kij}|$, and in this case, the performance remains unchanged.

Exemplarily, taking a 10-bit sample and formula (7) as an example, the range of the variable $|\Delta Y_{kij}|$ is integers within 0-1023, the number of categories of *S* is 3, and the numerators are fully stored by taking $|\Delta Y_{kij}|$ and the number of categories of *S* as indexes for a two-dimensional array storMole:

$$\text{flag}_S = \begin{cases} 0, & S = 8 \\ 1, & S = 12 \\ 2, & S = 16 \end{cases} \qquad (10)$$

In this case, the weighting factor calculation of formula (7) can be simplified into:

$$w_{kij} = \frac{\text{storMole}[|\Delta Y_{kij}|][\text{flag}_S]}{\sum_{k=1}^{N} \text{storMole}[|\Delta Y_{kij}|][\text{flag}_S]}, \quad k = 1, 2, \dots N \qquad (11)$$

In this way, elements in the two-dimensional array storMole[index 1][index 2] are illustrated in Table 3.

Table 3

| Index 1 ($|\Delta Y_{kij}|$) | Index 2 (flags) | Array element |
|---|---|---|
| 0 | 0 | $e^{\frac{-0}{8}}$ |
| 1 | 0 | $e^{\frac{-1}{8}}$ |
| ... | ... | ... |
| 1023 | 0 | $e^{\frac{-1023}{8}}$ |
| 0 | 1 | $e^{\frac{-0}{12}}$ |
| 1 | 1 | $e^{\frac{-1}{12}}$ |
| ... | ... | ... |
| 1023 | 1 | $e^{\frac{-1023}{12}}$ |
| 0 | 2 | $e^{\frac{-0}{16}}$ |
| 1 | 2 | $e^{\frac{-1}{16}}$ |
| ... | ... | ... |
| 1023 | 2 | $e^{\frac{-1023}{16}}$ |

Further, for full storage, a corresponding array offset can also be set according to the categories of *S*, and then the numerators are fully stored by taking $|\Delta Y_{kij}|$ plus offset as an index for a one-dimensional array ostorMole, which is specifically as follows:

$$\text{offset}_S = \begin{cases} 0, & S = 8 \\ 1024, & S = 12 \\ 2048, & S = 16 \end{cases} \qquad (12)$$

In this case, the weighting factor calculation of formula (7) can be simplified into:

$$w_{kij} = \frac{\text{ostorMole}[|\Delta Y_{kij}|+\text{offset}_S]}{\sum_{k=1}^{N} \text{ostorMole}[|\Delta Y_{kij}|+\text{offset}_S]}, \quad k = 1, 2, \dots N \qquad (13)$$

In this way, elements in the one-dimensional array ostorMole [index] are illustrated in Table 4.

Table 4

| Index ($|\Delta Y_{kij}|$ + offsets) | Array element |
|---|---|
| 0 | $e^{\frac{-0}{8}}$ |

(continued)

| Index ($|\Delta Y_{kij}|$ + offsets) | Array element |
|---|---|
| 1 | $e^{\frac{-1}{8}}$ |
| ... | ... |
| 1023 | $e^{\frac{-1023}{8}}$ |
| 0+1024 | $e^{\frac{-0}{12}}$ |
| 1+1024 | $e^{\frac{-1}{12}}$ |
| ... | ... |
| 1023+1024 | $e^{\frac{-1023}{12}}$ |
| 0+2048 | $e^{\frac{-0}{16}}$ |
| 1+2048 | $e^{\frac{-1}{16}}$ |
| ... | ... |
| 1023+2048 | $e^{\frac{-1023}{16}}$ |

In another embodiment, partial storage refers to storing part of numerator values for weighting factor calculation. Numerator values corresponding to part of the range of $|\Delta Y_{kij}|$ and/or part of the categories of $S$ can be stored, the value of the $f$ model which is not chosen for storage can be 0 by default, and the size of the array that needs to be stored is the size of the selected range of $|\Delta Y_{kij}|$ multiplied by the number of the selected categories of $S$.

Exemplarily, taking a 10-bit sample and formula (7) as an example, assuming that numerator values corresponding to integers within the range of 0-99 for $|\Delta Y_{kij}|$ and three categories of $S$ are selected for partial storage, then the range of $|\Delta Y_{kij}|$ is integers within 0-99, the number of categories of $S$ is 3, and the numerators are stored by taking such $|\Delta Y_{kij}|$ and such number of categories of $S$ as indexes for a two-dimensional array partstorMole:

$$\text{pflag}_S = \begin{cases} 0, & S = 8 \\ 1, & S = 12 \\ 2, & S = 16 \end{cases} \qquad (14)$$

In this case, the weighting factor calculation of formula (7) can be simplified into:

$$w_{kij} = \begin{cases} \dfrac{\text{partstorMole}[|\Delta Y_{kij}|][\text{pflag}_S]}{\sum_{k=1}^{N} \text{partstorMole}[|\Delta Y_{kij}|][\text{pflag}_S]} , & |\Delta Y_{kij}| \leq 99 \\ 0 , & |\Delta Y_{kij}| > 99, \end{cases} \qquad (15)$$

In this way, elements in the two-dimensional array partstorMole[index 1] [index 2] are illustrated in Table 5.

Table 5

| Index 1 ($|\Delta Y_{kij}|$) | Index 2 ($\text{pflag}_s$) | Array element |
|---|---|---|
| 0 | 0 | $e^{\frac{-0}{8}}$ |
| 1 | 0 | $e^{\frac{-1}{8}}$ |
| ... | ... | ... |

(continued)

| Index 1 ($|\Delta Y_{kij}|$) | Index 2 ($pflag_s$) | Array element |
|:---:|:---:|:---:|
| 99 | 0 | $e^{\frac{-99}{8}}$ |
| 0 | 1 | $e^{\frac{-0}{12}}$ |
| 1 | 1 | $e^{\frac{-1}{12}}$ |
| ... | ... | ... |
| 99 | 1 | $e^{\frac{-99}{12}}$ |
| 0 | 2 | $e^{\frac{-0}{16}}$ |
| 1 | 2 | $e^{\frac{-1}{16}}$ |
| ... | ... | ... |
| 99 | 2 | $e^{\frac{-99}{16}}$ |

That is, the storage range of partial storage can be determined according to actual needs, and is not limited to integers within 100 for $|\Delta Y_{kij}|$ and 3 categories of $S$ in the example. Likewise, for partial storage, a corresponding offset can also be set for the selected categories of $S$, so as to open up a one-dimensional storage space for storage, and embodiments of the disclosure are not limited in this regard. In addition, for Table 3~Table 5, in order to perform fixed-point calculation, an integer value scaled up can also be stored. In this case, corresponding scale-down operation needs to be performed after the prediction value is determined.

In this way, the weighting factor can be determined according to the reference sample value (such as $|\Delta Y_{kij}|$) for the first colour component, and the weighting factor can specifically include $N$ weighting factors, namely $w_1$, $w_2$, ..., $w_N$, where $N$ indicates the number of reference sample values for the second colour component. Here, theoretically, the sum of the $N$ weighting factors is equal to 1, and each of the weighting factors is a value greater than or equal to 0 and less than or equal to 1. However, it should be noted that, "the sum of the $N$ weighting factors is equal to 1" is only a theoretical concept, and in actual implementation of fixed-point, the absolute value of the weighting factor can be greater than 1.

S503, a first prediction block for the second colour component of the current block is determined according to the weighting factor and a reference sample value for the second colour component of the current block.

It should be noted that, in embodiments of the disclosure, in order to ensure the luma information is lossless, chroma prediction is performed on each reconstructed luma position in the current block, so that the size of the first prediction block obtained is greater than the size of the current block, that is, the number of prediction values of the second colour component of the first prediction block is greater than the number of second-colour-component samples in the current block.

It should be further noted that, in embodiments of the disclosure, in terms of determining the reference sample value for the second colour component of the current block, the method can further include the following. The reference sample value for the second colour component of the current block is determined according to a value of a second-colour-component sample in the neighbouring area of the current block.

Here, the neighbouring area can include at least one of: a top neighbouring area, a top-right neighbouring area, a left neighbouring area, or a bottom-left neighbouring area.

In an embodiment, the method can further include the following. Fourth filtering is performed on the value of the second-colour-component sample in the neighbouring area of the current block, to obtain a filtered neighbouring sample value for the second colour component of the current block. The reference sample value for the second colour component of the current block is determined according to the filtered neighbouring sample value for the second colour component of the current block.

In embodiments of the disclosure, the number of filtered neighbouring sample values for the second colour component of the current block is greater than the number of values of the second-colour-component samples in the neighbouring area of the current block.

In embodiments of the disclosure, the fourth filtering can be up-sampling filtering, and an up-sampling rate is a positive integer multiple of 2.

That is, the first colour component is a luma component, and the second colour component is a chroma component. In order to ensure that the reference luma information is lossless, up-sampling filtering can also be performed on reference chroma information. Exemplarily, for a $2M\times2N$ current block in a YUV420 format, a chroma block size thereof is $M\times N$, and the amount of reference chroma information of the neighbouring area is $M+N$. $2M+2N$ chroma reference sample values can be obtained after up-sampling filtering, then $2M\times2N$ chroma prediction values can be obtained by means of weighted prediction, and subsequently, down-sampling filtering is performed to obtain $M\times N$ chroma prediction values as final prediction values. It should be noted that, for a $2M\times2N$ current block in a YUV420 format where the chroma block size thereof is $M\times N$ and the amount of reference chroma information of the neighbouring area is $M+N$, it is also feasible to use only the $M+N$ reference chroma information, and as such, $2M\times2N$ chroma prediction values are obtained by using the weighting factor, and then down-sampling filtering is performed to obtain $M\times N$ chroma prediction values as final prediction values.

In addition, for a $2M\times2N$ current block in a YUV420 format, the chroma block size thereof is $M\times N$, and the amount of reference chroma information of the neighbouring area is $M+N$, then $4M+4N$ chroma reference sample values are obtained after up-sampling filtering. Alternatively, for a $2M\times2N$ current block in a YUV444 format, the chroma block size thereof is $2M\times2N$, the amount of reference chroma information of the neighbouring area is $2M\times2N$, then $4M+4N$ chroma reference sample values are obtained after up-sampling filtering. Then, $M\times N$ chroma prediction values can also be obtained as final prediction values through weighted prediction according to these chroma reference sample values and down-sampling filtering, and embodiments of the disclosure are not limited in this regard.

It should be further noted that, in embodiments of the disclosure, no matter whether it is the second filtering performed on the value of the first-colour-component sample in the neighbouring area, or the third filtering performed on the reconstructed value of the first-reference-colour-component sample in the current block, or even the fourth filtering performed on the value of the second-colour-component sample in the neighbouring area, all the three types of filtering can be up-sampling filtering. The second filtering can be performed by using a first filter, the third filtering can be performed by using a second filter, and the fourth filtering can be performed by using a third filter. Here, for the three filters, the first filter, the second filter, and the third filter can all be up-sampling filters. Due to different data to-be-processed, up-sampling rates of these filters can also be different, and therefore, the three filters can be the same or different. In addition, the first filter, the second filter, and the third filter can all be neural-network filters. Embodiments of the disclosure are not limited in this regard.

It can be understood that, assuming that the first colour component is a luma component and the second colour component is a chroma component, since the spatial resolution of the value (namely, reference luma information) of the first-colour-component sample in the neighbouring area, the spatial resolution of the value (namely, reference chroma information) of the second-colour-component sample in the neighbouring area, and even the spatial resolution of the reconstructed value (namely, reconstructed luma information) of the first-reference-colour-component sample in the current block will be affected by colour format information, the second filtering, the third filtering, or the fourth filtering can also be performed according to the current colour format information. Taking the fourth filtering as an example below, in some embodiments, the method can further include the following. Based on the colour format information, the fourth filtering is performed on the value of the second-colour-component sample in the neighbouring area of the current block, to obtain the filtered neighbouring sample value for the second colour component of the current block.

In an embodiment, for the fourth filtering, the method can further include the following. If the colour format information indicates 4:2:0 sampling, up-sampling filtering is performed on the value of the second-colour-component sample in the neighbouring area of the current block, where an up-sampling rate is a positive integer multiple of 2.

It should be noted that, in embodiments of the disclosure, the colour format information can include 4:4:4 sampling, 4:2:2 sampling, 4:1:1 sampling, 4:2:0 sampling, and the like. If the colour format information indicates a video with 4:4:4 sampling (also represented by YUV444), that is, the spatial resolution of the luminance is equal to the spatial resolution of the chrominance, no operation needs to be performed on the reference chroma information. If the colour format information indicates a video with chroma sub-sampling characteristics such as 4:2:2 sampling (also represented by YUV422), or 4:1:1 sampling (also represented by YUV411), or 4:2:0 sampling (also represented by YUV420), that is, the spatial resolution of the luminance is inconsistent with the spatial resolution of the chrominance, and the spatial resolution of the chroma component is lower than the spatial resolution of the luma component, then up-sampling filtering needs to be performed on the reference chroma information obtained from the neighbouring area.

In this way, with regard to up-sampling filtering performed on the reference chroma information, the manner for the up-sampling filtering can be any one of linear interpolation methods, such as nearest neighbour interpolation, bilinear interpolation, bicubic interpolation, mean interpolation, median interpolation, copy interpolation, etc. Alternatively, the manner for up-sampling filtering can be any one of nonlinear interpolation methods, such as a wavelet transform-based interpolation algorithm or an edge information-based interpolation algorithm. Alternatively, up-sampling filtering can also be performed based on a convolutional neural network (CNN). Embodiments of the disclosure are not limited in this regard. Exemplarily, referring to FIG. 6B, a YUV420 video format and copy interpolation are taken as an example for illustration, and an example of $4\times1$ reference chroma information and $8\times2$ reference luma information is illustrated herein. A $8\times2$

diagonal-filled block represents reference luma information, a 4×1 grid-filled block represents collocated reference chroma information, and each sample in the 4×1 grid-filled block is equivalent to a top-left sample in each 2×2 sub-block in the 8×2 chroma block subject to up-sampling filtering, i. e. the sample value of each chroma sample in the 2×2 sub-block subject to copy interpolation is the same. Specifically, for each 2×2 sub-block, the other three chroma samples (dot-filled blocks) are all copied from the top-left sample (grid-filled block).

Further, after the reference sample value for the second colour component of the current block is determined, in some embodiments, for S503, the first prediction block for the second colour component of the current block can be determined according to the weighting factor and the reference sample value for the second colour component of the current block as follows. A weighted value obtained by multiplying the reference sample value for the second colour component by a corresponding weighting factor is determined. A prediction value of a second-colour-component sample in the first prediction block is set to be equal to a sum of $N$ weighted values, where $N$ represents the number of reference sample values for the second colour component, and $N$ is a positive integer.

That is, if the number of the reference sample values for the second colour component is $N$, a weighted value (namely $w_k C_k$) obtained by multiplying each reference sample value for the second colour component by a corresponding weighting factor is firstly determined, and then the sum of the $N$ weighted values is used as the prediction value of the second-colour-component sample in the prediction block. Specifically, the formula for calculation is as follows:

$$C_{i,j}^{\mathrm{pred}} = \sum_{k=1}^{N} w_k C_k = w_1 C_1 + w_2 C_2 + \cdots + w_N C_N \qquad (16)$$

Exemplarily, an absolute luma difference is firstly calculated according to reconstructed luma information at position (i, j) in the current block and reference luma information of the neighbouring area, and then the weighting factor is calculated according to the Softmax function, so as to obtain a prediction value of a chroma component at position (i, j) in the prediction block according to formula (16). In particular, it should be noted that, in this way, it is conducive to parallel processing and higher calculation speed.

It can also be understood that, when performing up-sampling filtering on both the reference luma information and the reference chroma information of the neighbouring area of the current block, the method can further include the following. Based on the colour format information, the second filtering is performed on the value of the first-colour-component sample in the neighbouring area of the current block according to a first horizontal up-sampling factor and a first vertical up-sampling factor, to obtain the filtered neighbouring sample value for the first colour component of the current block; and the fourth filtering is performed on the value of the second-colour-component sample in the neighbouring area of the current block according to a second horizontal up-sampling factor and a second vertical up-sampling factor, to obtain the filtered neighbouring sample value for the second colour component of the current block.

In a possible implementation, the method can further include the following. If the colour format information indicates 4:4:4 sampling, determine that the second horizontal up-sampling factor is equal to the first horizontal up-sampling factor, and the second vertical up-sampling factor is equal to the first vertical up-sampling factor. If the colour format information indicates 4:2:2 sampling, determine that the second horizontal up-sampling factor is equal to twice the first horizontal up-sampling factor, and the second vertical up-sampling factor is equal to the first vertical up-sampling factor. If the colour format information indicates 4:1:1 sampling, determine that the second horizontal up-sampling factor is equal to four times the first horizontal up-sampling factor, and the second vertical up-sampling factor is equal to the first vertical up-sampling factor. If the colour format information indicates 4:2:0 sampling, determine that the second horizontal up-sampling factor is equal to twice the first horizontal up-sampling factor, and the second vertical up-sampling factor is equal to twice the first vertical up-sampling factor.

It should be noted that, in embodiments of the disclosure, up-sampling filtering is performed on the reference luma information, and as such, the luma information is lossless. In this case, since in a YUV video, the spatial resolution of the luma component is always greater than or equal to the spatial resolution of the chroma component, up-sampling filtering needs to be performed on the reference chroma information so as to make the spatial resolution of the reference chroma information be consistent with the spatial resolution of the reference luma information. In this case, a spatial up-sampling rate (the second horizontal up-sampling factor and the second vertical up-sampling factor) of the reference chroma information needs to be determined according to the YUV video format and a spatial up-sampling rate (the first horizontal up-sampling factor and the first vertical up-sampling factor) of the reference luma information.

The first horizontal up-sampling factor is represented by *S_Hor_RefLuma,* the first vertical up-sampling factor is represented by *S_Ver_RefLuma,* the second horizontal up-sampling factor is represented by *S_Hor_RefChroma,* and the second vertical up-sampling factor is represented by *S_Ver_RefChroma.* As such, for a video in a YUV444 format, *S_Hor_RefChroma* can be set to be equal to *S_Hor_RefLuma,* and *S_Ver_RefChroma* can be set to be equal to *S_Ver_RefLuma.* For a video in a YUV422 format, *S_Hor_RefChroma* can be set to be equal to twice *S_Hor_RefLuma,* and *S_Ver_RefChroma* can be set to be equal to *S_Ver_RefLuma.* For a video in a YUV411 format, *S_Hor_RefChroma* can be set to be equal to four times *S_Hor_RefLuma,* and *S_Ver_RefChroma* can be set to be equal to *S_Ver_RefLuma.*

For a video in a YUV 420 format, *S_Hor_RefChroma* can be set to be equal to twice *S_Hor_RefLuma,* and *S_Ver_Ref-Chroma* can be set to be equal to twice *S_Ver_RefLuma.*

It can also be understood that, if up-sampling filtering is not to be performed on the reconstructed luma information of the current block, the size of the first prediction block can be derived according to the YUV video format. Therefore, in another possible implementation, the method can further include the following. If the colour format information indicates 4:4:4 sampling, determine that a width of the first prediction block is equal to a width of the current block, and a height of the first prediction block is equal to a height of the current block. If the colour format information indicates 4:2:2 sampling, determine that the width of the first prediction block is equal to twice the width of the current block, and the height of the first prediction block is equal to the height of the current block. If the colour format information indicates 4:1:1 sampling, determine that the width of the first prediction block is equal to four times the width of the current block, and the height of the first prediction block is equal to the height of the current block. If the colour format information indicates 4:2:0 sampling, determine that the width of the first prediction block is equal to twice the width of the current block, and the height of the first prediction block is equal to twice the height of the current block.

It should be noted that, in embodiments of the disclosure, a size parameter of the first prediction block include the width and the height, where the width of the first prediction block is represented by *predSizeW,* and the height of the first prediction block is represented by *predSizeH.* The size parameter of the current block also includes the width and the height, where the width of the current block is represented by *nTbW,* and the height of the current block is represented by *nTbH.* In this way, for a video in a YUV444 format, the spatial resolution of the luma component is equal to the spatial resolution of the chroma component, and in this case, *predSizeW* can be set to be equal to *nTbW,* and *predSizeH* can be set to be equal to *nTbH.* For a video in a YUV422 format, the luma component and the chroma component have the same vertical resolution, but the horizontal resolution of the chroma component is 1/2 the horizontal resolution of the luma component, and in this case, *predSizeW* can be set to be equal to twice *nTbW,* and *predSizeH* can be set to be equal to *nTbH.* For a video in a YUV411 format, the luma component and the chroma component have the same vertical resolution, but the horizontal resolution of the chroma component is 1/4 the horizontal resolution of the luma component, and in this case, *predSizeW* can be set to be equal to four times *nTbW,* and *predSizeH* can be set to be equal to *nTbH.* For a video in a YUV420 format, the horizontal resolution of the chroma component is 1/2 the horizontal resolution of the luma component, and the vertical resolution of the chroma component is 1/2 the vertical resolution of the luma component, and in this case, *predSizeW* can be set to be equal to twice *nTbW,* and *predSizeH* can be set to be equal to twice *nTbH.*

It can also be understood that, when up-sampling filtering is to be performed on the reconstructed luma information of the current block, the size of the first prediction block can be derived according to the YUV video format and a spatial up-sampling rate of the luminance of the current block after performing luma up-sampling on the current block. In this case, the method can further include the following. Based on the colour format information, the third filtering is performed on the reconstructed value of the first-reference-colour-component sample in the current block according to a third horizontal up-sampling factor and a third vertical up-sampling factor, to obtain the filtered sample value of the first-reference-colour-component sample in the current block.

In another possible implementation, the method can further include the following. If the colour format information indicates 4:4:4 sampling, determine that the width of the first prediction block is equal to a product of the width of the current block and the third horizontal up-sampling factor, and the height of the first prediction block is equal to a product of the height of the current block and the third vertical up-sampling factor. If the colour format information indicates 4:2:2 sampling, determine that the width of the first prediction block is equal to twice the product of the width of the current block and the third horizontal up-sampling factor, and the height of the first prediction block is equal to the product of the height of the current block and the third vertical up-sampling factor. If the colour format information indicates 4:1:1 sampling, determine that the width of the first prediction block is equal to four times the product of the width of the current block and the third horizontal up-sampling factor, and the height of the first prediction block is equal to the product of the height of the current block and the third vertical up-sampling factor. If the colour format information indicates 4:2:0 sampling, determine that the width of the first prediction block is equal to twice the product of the width of the current block and the third horizontal up-sampling factor, and the height of the first prediction block is equal to twice the product of the height of the current block and the third vertical up-sampling factor.

It should be noted that, in embodiments of the disclosure, the third horizontal up-sampling factor is represented by *S_Hor_RecLuma,* the third vertical up-sampling factor is represented by *S_Ver_RecLuma.* Then up-sampling filtering is performed on the reconstructed luma information of the current block according to *S_Hor_RecLuma* and *S_Ver_RecLuma.* In this case, with regard to the size of the first prediction block, for a video in a YUV444 format, the spatial resolution of the luma component is equal to the spatial resolution of the chroma component, and in this case, *predSizeW* can be set to be equal to a product of *S_Hor_RecLuma* and *nTbW,* and *predSizeH* can be set to be equal to a product of *S_Ver_RecLuma* and *nTbH.* For a video in a YUV422 format, the luma component and the chroma component have the same vertical resolution, but the horizontal resolution of the chroma component is 1/2 the horizontal resolution of the luma component, and in this case, *predSizeW* can be set to be equal to twice the product of *S_Hor_RecLuma* and *nTbW,* and *predSizeH* can be set to be equal to the product of *S_Ver_RecLuma* and *nTbH.* For a video in a YUV411 format, the luma component and the chroma component have the same vertical resolution, but the horizontal resolution of the chroma component is 1/4 the horizontal resolution of the luma component, and in this case, *predSizeW* can be set to be equal to four times the product of *S_Hor_RecLuma* and *nTbW,* and *predSizeH* can be set to be equal to the product of *S_Ver_RecLuma* and *nTbH.* For a video in a YUV420 format, the horizontal resolution of the chroma component is 1/2 the horizontal resolution of the luma component, and the vertical resolution of the chroma component is 1/2 the vertical resolution of the luma component, and in this case, *predSizeW* can be set to be equal to twice the product of *S_Hor_RecLuma* and *nTbW,* and *predSizeH* can be set to be equal to twice the product of *S_Ver_RecLuma* and *nTbH.*

It should be noted that, in embodiments of the disclosure, *predSizeH* is greater than or equal to the height *nTbH* of the current block, or *predSizeW* is greater than or equal to the width *nTbW* of the current block, so that the number of prediction values of the second colour component of the first prediction block is greater than the number of second-colour-component samples in the current block.

S504, first filtering is performed on the first prediction block to determine a second prediction block for the second colour component of the current block.

S505, a reconstructed value of a second-colour-component sample in the current block is determined according to the second prediction block.

It should be noted that, in embodiments of the disclosure, the first filtering can be down-sampling filtering. As such, for the second prediction block subject to down-sampling filtering, the number of prediction values of the second colour component of the second prediction block is the same as the number of second-colour-component samples in the current block.

In a possible implementation, the first filtering can be performed on the first prediction block to determine the second prediction block for the second colour component of the current block as follows. Down-sampling filtering is performed on the first prediction block by using a preset filter, to determine the second prediction block for the second colour component of the current block.

It should be further noted that, in embodiments of the disclosure, the preset filter can be a down-sampling filter. In addition, the down-sampling filter herein can be a neural-network filter, and embodiments of the disclosure are not limited in this regard.

In another possible implementation, the first filtering can be performed on the first prediction block to determine the second prediction block for the second colour component of the current block as follows. A horizontal down-sampling factor and a vertical down-sampling factor are determined. Down-sampling filtering is performed on the first prediction block according to the horizontal down-sampling factor and the vertical down-sampling factor, to obtain the second prediction block for the second colour component of the current block.

In an embodiment, down-sampling filtering can be performed on the first prediction block according to the horizontal down-sampling factor and the vertical down-sampling factor to obtain the second prediction block for the second colour component of the current block as follows. If the horizontal down-sampling factor is greater than 1 or the vertical down-sampling factor is greater than 1, down-sampling filtering is performed on the first prediction block to obtain the second prediction block.

In embodiments of the disclosure, performing down-sampling filtering on the first prediction block can include at least one of: performing down-sampling filtering on the first prediction block in a horizontal direction; performing down-sampling filtering on the first prediction block in a vertical direction; performing down-sampling filtering on the first prediction block in a horizontal direction and then in a vertical direction; or performing down-sampling filtering on the first prediction block in a vertical direction and then in a horizontal direction.

Here, the horizontal down-sampling factor can be calculated according to the width of the first prediction block and the width of the current block, and the vertical down-sampling factor can be calculated according to the height of the first prediction block and the height of the current block. Then, down-sampling filtering is performed on the first prediction block according to the horizontal down-sampling factor and the vertical down-sampling factor. Specifically, if the horizontal down-sampling factor is greater than 1 and the vertical down-sampling factor is equal to 1, only horizontal down-sampling needs to be performed on the first prediction block. If the horizontal down-sampling factor is equal to 1 and the vertical down-sampling factor is greater than 1, only vertical down-sampling needs to be performed on the first prediction block. If the horizontal down-sampling factor is greater than 1 and the vertical down-sampling factor is greater than 1, both horizontal down-sampling and vertical down-sampling need to be performed on the first prediction block. Firstly horizontal down-sampling and then vertical down-sampling can be performed, or firstly vertical down-sampling and then horizontal down-sampling can be performed, or the down-sampling operation herein can even be replaced by a convolution operation in a neural network structure, which is not limited in embodiments of the disclosure.

It should also be noted that, for the first filtering, down-sampling filtering can also be performed at some sampling interval, for example, a two-dimensional filter or a one-dimensional filter. The one-dimensional filter can be implemented "firstly in a vertical direction and then in a horizontal direction", or can be implemented "firstly in a horizontal direction and then in a vertical direction", or can be implemented in a fixed filtering order, or can even be implemented in a flexible filtering order (for example, a filtering order indicated by identifier information, an order related to prediction mode or block size, etc.), and embodiments of the disclosure are not limited in this regard.

In some embodiments, the first filtering can be performed on the first prediction block to determine the second prediction block for the second colour component of the current block as follows. The first filtering includes down-sampling filtering, where an input of the down-sampling filtering is a first down-sampling input block, and an output of the down-sampling filtering is a first down-sampling output block.

Further, in some embodiments, the up-sampling filtering can be performed as follows. A down-sampling factor is determined, where the down-sampling factor includes at least one of a horizontal down-sampling factor or a vertical down-sampling factor. Down-sampling filtering is performed on the first down-sampling input block according to the down-sampling factor, to obtain the first down-sampling output block.

In a possible implementation, down-sampling filtering can be performed on the first down-sampling input block according to the down-sampling factor to obtain the first down-sampling output block as follows. If the horizontal down-sampling factor is greater than 1 or the vertical down-sampling factor is greater than 1, down-sampling filtering is performed on the first down-sampling input block to obtain the first down-sampling output block.

In embodiments of the disclosure, performing down-sampling filtering on the first down-sampling input block includes at least one of: performing down-sampling filtering on the first down-sampling input block in a horizontal direction; performing down-sampling filtering on the first down-sampling input block in a vertical direction; performing down-sampling filtering on the first down-sampling input block in a horizontal direction and then in a vertical direction; or performing down-sampling filtering on the first down-sampling input block in a vertical direction and then in a horizontal direction.

Here, the horizontal down-sampling factor can be calculated according to the width of the first down-sampling input block and the width of the first down-sampling output block, and the vertical down-sampling factor can be calculated according to the height of the first down-sampling input block and the height of the first down-sampling output block. Then down-sampling filtering is performed on the first down-sampling input block according to the horizontal down-sampling factor and the vertical down-sampling factor. Specifically, if the horizontal down-sampling factor is greater than 1 and the vertical down-sampling factor is equal to 1, only horizontal down-sampling needs to be performed on the first down-sampling input block. If the horizontal down-sampling factor is equal to 1 and the vertical down-sampling factor is greater than 1, only vertical down-sampling needs to be performed on the first down-sampling input block. If the horizontal down-sampling factor is greater than 1 and the vertical down-sampling factor is greater than 1, both horizontal down-sampling and vertical down-sampling need to be performed on the first down-sampling input block. Firstly horizontal down-sampling and then vertical down-sampling can be performed, or firstly vertical down-sampling and then horizontal down-sampling can be performed, or the down-sampling filtering operation herein can even be replaced by a convolution operation in a neural network structure, which is not limited in embodiments of the disclosure.

In another possible implementation, down-sampling filtering is performed on the first prediction block to determine the second prediction block. In this case, the method can further include the following. The first prediction block is taken as the first down-sampling input block, and the first down-sampling output block is taken as the second prediction block for the second colour component of the current block.

In another possible implementation, firstly enhancement filtering and then down-sampling filtering are performed on the first prediction block to determine the second prediction block. In this case, the method can further include the following. Filtering enhancement is performed on the first prediction block to determine a first enhanced prediction block. The first enhanced prediction block is taken as the first down-sampling input block, and the first down-sampling output block is taken as the second prediction block for the second colour component of the current block.

In another possible implementation, firstly down-sampling filtering and then enhancement filtering are performed on the first prediction block to determine the second prediction block. In this case, the method can further include the following. The first prediction block is taken as the first down-sampling input block, and the first down-sampling output block is taken as a first down-sampling-filtered prediction block. Filtering enhancement is performed on the first down-sampling-filtered prediction block, to determine the second prediction block for the second colour component of the current block.

In another possible implementation, firstly enhancement filtering, then down-sampling filtering, and then enhancement filtering are performed on the first prediction block, to determine the second prediction block. In this case, the method can further include the following. First filtering enhancement is performed on the first prediction block to determine a second enhanced prediction block. The second enhanced prediction block is taken as the first down-sampling input block, and the first down-sampling output block is taken as a second down-sampling-filtered prediction block. Second filtering enhancement is performed on the second down-sampling-filtered prediction block, to determine the second prediction block for the second colour component of the current block.

In addition, in some embodiments, in terms of performing the first filtering on the first prediction block to determine the second prediction block for the second colour component of the current block, the method can further include the following. Weighted sum calculation is performed on every preset number of prediction values of the second colour component of the first prediction block in a horizontal direction and/or a vertical direction according to the horizontal down-sampling factor and the vertical down-sampling factor, to obtain the second prediction block.

In a possible implementation, weighted sum calculation can be performed on every preset number of prediction values of the second colour component of the first prediction block in a horizontal direction and/or a vertical direction to obtain the second prediction block as follows. Weighted sum calculation is performed on every horizontal down-sampling factor number of prediction values of the second colour component of the first prediction block in a horizontal direction, to obtain the second prediction block.

In another possible implementation, weighted sum calculation can be performed on every preset number of prediction values of the second colour component of the first prediction block in a horizontal direction and/or a vertical direction to obtain the second prediction block as follows. Weighted sum calculation is performed on every vertical down-sampling factor number of prediction values of the second colour component of the first prediction block in a vertical direction, to obtain the second prediction block.

In another possible implementation, weighted sum calculation can be performed on every preset number of prediction values of the second colour component of the first prediction block in a horizontal direction and/or a vertical direction to obtain the second prediction block as follows. Weighted sum calculation is performed on every horizontal down-sampling factor number of prediction values of the second colour component of the first prediction block in a horizontal direction, and weighted sum calculation is performed on every vertical down-sampling factor number of prediction values of the second colour component of the first prediction block in a vertical direction, to obtain the second prediction block.

That is, in embodiments of the disclosure, instead of taking the horizontal down-sampling factor and vertical the down-sampling factor into consideration, weighted sum calculation can be performed on every preset number of chroma prediction values in a direction (vertical direction or horizontal direction) in which down-sampling is to be performed. In particular, if weight values of the chroma prediction values are equal, weighted sum calculation on every preset number of chroma prediction values can also be understood as calculating a mean value of the preset number of chroma prediction values and taking the mean value as a prediction value subject to down-sampling filtering.

Further, in some embodiments, the method can further include the following. The weighting factor is determined according to a reference sample value for a first colour component of some samples in the first prediction block. The second prediction block for the second colour component of the current block is determined according to the weighting factor and a reference sample value for a second colour component of some samples in the first prediction block.

In an embodiment, the second prediction block for the second colour component of the current block can be determined according to the weighting factor and the reference sample value for the second colour component of some samples in the first prediction block as follows. A prediction value of a second colour component of a sample at position *(x, y)* in the current block is obtained by multiplying a reference sample value for a second colour component of a sample at position (i, *j*) in the first prediction block by the weighting factor, where *i, j, x,* and *j* are integers greater than or equal to zero.

It should be noted that, in embodiments of the disclosure, in order to reduce complexity of calculation, up-sampling filtering on the reconstructed luma information of the current block is eliminated. In this case, instead of performing collocated chroma sample prediction on reconstructed luma information at all luma positions in the current block, some of the luma positions can be selected to predict collocated chroma samples, so that down-sampling filtering can be eliminated after the prediction block is obtained, which can ensure accuracy of existing luma information. With accurate luma information, it is beneficial to improving accuracy and stability of a nonlinear mapping model, thereby improving accuracy of a chroma prediction value.

In such implementation, in order to reduce subsequent up-sampling or down-sampling operations on the prediction block, a corresponding position can be selected for chroma prediction according to characteristics of a YUV video format. Assuming that a position of a current luma sample is *CurRecLuma(i, j),* then a position of a sample on which chroma prediction is to be performed is *CurPredChroma(x, y)*. In this case, in some embodiments, the method can further include the following. If the colour format information indicates 4:4:4 sampling, *x* is set to be equal to i, and y is set to be equal to *j*. If the colour format information indicates 4:2:2 sampling, *x* is set to be equal to a product of i and 2, and *y* is set to be equal to *j*. If the colour format information indicates 4:1:1 sampling, *x* is set to be equal to a product of i and 4, and y is set to be equal to *j*. If the colour format information indicates 4:2:0 sampling, *x* is set to be equal to a product of i and 2, and y is set to be equal to a product of *j* and 2.

Further, in some embodiments, the method can further include the following. A horizontal sampling position factor and a vertical sampling position factor are determined. x is set to be equal to a product of i and the horizontal sampling position factor, and y is set to be equal to a product of *j* and the vertical sampling position factor.

That is, in order to further reduce complexity of calculation during prediction, fewer collocated chroma samples can be selected for prediction. Assuming that the position of the current luma sample is *CurRecLuma(i, j),* then the position of the sample on which chroma prediction is to be performed is *CurPredChroma(x, y).* Assuming that a horizontal sampling position factor of the reconstructed luma information of the current block is *S_Pos_Hor,* and a vertical sampling position factor of the reconstructed luma information of the current block is S Pos_ *Ver,* then a relationship between the position of the current luma sample and the position of the sample on which chroma prediction is to be performed is as follows. If the colour format information indicates a video in a YUV444 format/YUV422 format/YUV411 format/YUV420 format, *x* can be set to be equal to a product of $i$ and S_Pos_Hor, and y can be set to be equal to a product of $j$ and S_Pos_Ver.

Further, after the second prediction block is determined, in some cases, post-processing is needed for the second prediction block to obtain a final second prediction block. Therefore, in some embodiments, the method can further include the following. After determining the second prediction block for the second colour component of the current block, related processing is performed on the second prediction block and the processed second prediction block is taken as the second prediction block.

In embodiments of the disclosure, performing related processing on the second prediction block includes at least one of: performing third filtering on the second prediction block; refining the second prediction block by using a preset compensation value; or performing weighted average calculation on the second prediction block by using a prediction value of the second colour component of the current block in at least one prediction mode.

It should be noted that, in a possible implementation, the third filtering can be smoothing filtering. Exemplarily, in a WCP mode, to reduce instability caused by sample-by-sample parallel prediction, for example, smoothing filtering can be performed on the second prediction block, and then the processed second prediction block is taken as the final second prediction block.

In another possible implementation, a preset compensation value of a second colour component of the second prediction block is determined according to the reference sample value in the neighbouring area of the current block, and a prediction value of a second-colour-component sample in the second prediction block is refined according to the preset compensation value, so as to determine the final second prediction block. Exemplarily, in order to further improve prediction accuracy of the WCP mode, position-related refinement can be performed on the second prediction block. For example, a chroma compensation value for each second-colour-component sample to-be-predicted is calculated by using a reference sample that is near in spatial position, the second-colour-component sample in the second prediction block is refined by using the chroma compensation value, and a final prediction value of the second-colour-component sample is determined according to the refined prediction value, thereby obtaining the final second prediction block.

In another possible implementation, prediction is performed on the second-colour-component sample in the second prediction block according to at least one prediction mode, to determine at least one initial prediction value of the second-colour-component sample in the second prediction block. Weighted average calculation is performed on the at least one initial prediction value and the prediction value of the second-colour-component sample in the second prediction block to determine the final second prediction block.

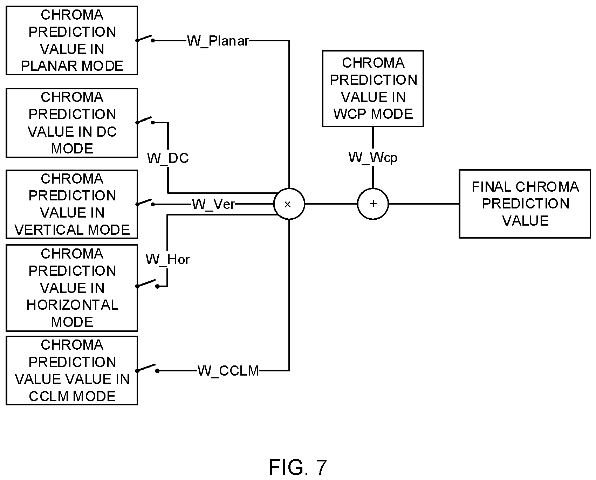

It should be noted that, in order to further improve prediction accuracy of the WCP mode, weighted average calculation can also be performed on a chroma prediction value(s) calculated in another prediction mode(s) and a chroma prediction value calculated in the WCP mode, and a final chroma prediction block is determined according to the weighted result. Exemplarily, as illustrated in FIG. 7, other prediction modes can include a Planar mode, a direct current (DC) mode, a vertical mode, a horizontal mode, and a cross-component linear model (CCLM) mode. Each prediction mode corresponds to one switch, and the switch is used to control whether a chroma prediction value in the prediction mode is to participate in weighted average calculation. It is assumed that a weight value corresponding to the Planar mode is W_Planar, a weight value corresponding to the DC mode is W_DC, a weight value corresponding to the vertical mode is W_Ver, a weight value corresponding to the horizontal mode is W_Hor, a weight value corresponding to the CCLM mode is W_CCLM, and a weight value corresponding to the WCP mode is W_Wcp. Then, for a chroma prediction value in the Planar mode, a chroma prediction value in the DC mode, a chroma prediction value in the vertical mode, a chroma prediction value in the horizontal mode, and a chroma prediction value in the CCLM mode, if only a switch corresponding to the CCLM mode is in an on-state, weighted average calculation can be performed on the chroma prediction value in the CCLM mode and the chroma prediction value in the WCP mode according to W_CCLM and W_Wcp, and whether weighted average calculation with equal weights or unequal weights is to be performed can be determined according to the values of W_CCLM and W_Wcp. The weighted result is a final chroma prediction value of the second-colour-component sample, thereby obtaining the final second prediction block.

In some embodiments, after the second prediction block is determined, the reconstructed value of the second-colour-component sample in the current block can be determined according to the second prediction block as follows. A residual value of the second-colour-component sample in the current block is determined. A prediction value of the second-colour-component sample in the current block is determined according to the second prediction block. The reconstructed value of the second-colour-component sample in the current block is determined according to the residual value of the second-colour-component sample in the current block and the prediction value of the second-colour-component sample in the current block.

It should be noted that, in embodiments of the disclosure, in terms of determining the residual value of the second-colour-component sample in the current block, the residual value of the second-colour-component sample in the current block can be determined by parsing a bitstream.

It should be further noted that, in embodiments of the disclosure, in terms of determining the prediction value of the second-colour-component sample in the current block according to the second prediction block, the prediction value of the second-colour-component sample in the current block can be set to be equal to a value of the second prediction block;

alternatively, up-sampling filtering can be performed on the value of the second prediction block, and the prediction value of the second-colour-component sample in the current block can be set to be equal to an output value after up-sampling filtering.

In this way, taking the chroma component as an example, a chroma residual value of the current block is determined by parsing the bitstream, and then a chroma prediction value of the current block can be determined according to the second prediction block. Then, the chroma prediction value and the chroma residual value are summed to obtain a reconstructed chroma value of the current block.

It can be understood that, in embodiments of the disclosure, during prediction in the WCP mode, chroma prediction is performed by using lossless luma information, which mainly includes three aspects. On one hand, luma information of a reference sample and luma information of the current block are fully utilized, so as to realize calculation of a weighting factor of chrominance of the reference sample. On the other hand, importance of existing luma information is fully taken into consideration, so that a more accurate nonlinear mapping model is constructed without loss of luma information, so as to allocate a weight to the reference chroma sample to perform weighted prediction. On the other hand, when performing up-sampling on reference chrominance and performing collocated chroma prediction according to each luma sample position in the current block, characteristics of various YUV video formats are fully taken into consideration, and consistency between the spatial resolution of the chroma component and the spatial resolution of the luma component are always ensured according to chroma sub-sampling formats and luma up-sampling factors of different YUV videos. The existing lossless luma information is fully utilized to perform collocated chroma prediction, so as to improve accuracy of a chroma prediction value in the WCP mode.

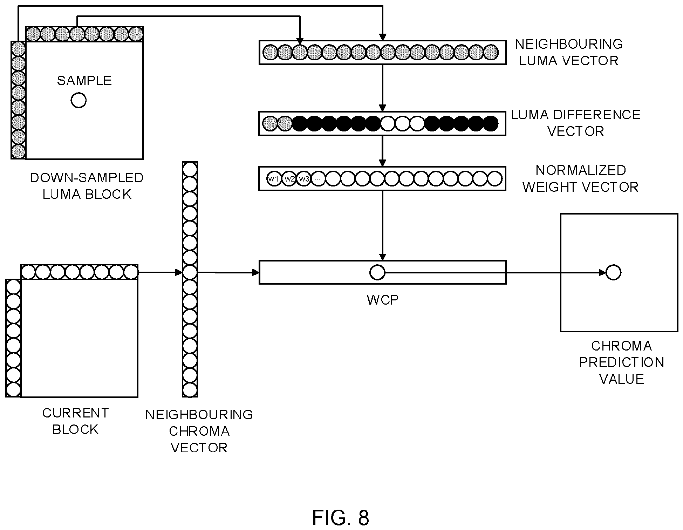

To summarize, embodiments of the disclosure further provide a WCP framework. As illustrated in FIG. 8, for reconstructed luma information *recY[i][j]* of each sample in the down-sampled current block (namely, a down-sampled luma block), a luma difference vector *diffY[i][j]* is obtained according to an absolute value of a difference between *recY[i][j]* and a neighbouring luma vector *refY[k]*, and a normalized weight vector *cWeight[i][j]* is derived according to a nonlinear mapping model related to *diffY[i][j]*. Then, a chroma prediction value $C_{i,j}^{pred}$ can be obtained by performing vector multiplication based on the weight vector and the neighbouring chroma vector for the current block by using the weight vector.

Embodiments of the disclosure provide a decoding method. The reference sample value for the first colour component of the current block is determined. The weighting factor is determined according to the reference sample value for the first colour component of the current block. The first prediction block for the second colour component of the current block is determined according to the weighting factor and the reference sample value for the second colour component of the current block, where the number of prediction values of the second colour component of the first prediction block is greater than the number of second-colour-component samples in the current block. First filtering is performed on the first prediction block to determine the second prediction block for the second colour component of the current block. The reconstructed value of the second-colour-component sample in the current block is determined according to the second prediction block. In this way, with aid of the reference sample neighbouring the current block and colour component information of the current block, existing colour component information is taken into consideration so that a more accurate nonlinear mapping model can be constructed without loss of luma information so as to allocate a weight to each reference sample value for the chroma component for weighted prediction, in addition, different colour format information is also taken into consideration when performing the first filtering, and chroma and/or luma sampling filtering is performed according to different colour format information, which can ensure that the spatial resolution of the chroma component is consistent with the spatial resolution of the luma component. As such, accuracy of existing luma information is ensured, and with aid of accurate luma information, it is beneficial to improving accuracy and stability of a nonlinear mapping model when performing chroma component prediction by using lossless luma information, thereby improving accuracy of chroma prediction, saving bit-rate, improving coding efficiency, and thus improving coding performance.

In another embodiment of the disclosure, based on the decoding method described in the foregoing embodiment, taking chroma prediction of the current block as an example, in embodiments of the disclosure, reconstructed luma information of the current block and reference luma information and reference chroma information of the neighbouring area are all decoded reference information. Therefore, an embodiment of the disclosure provides a WCP technology based on the foregoing information. Further, in order to ensure the reference luma information and the reconstructed luma information of the current block are lossless, matching between the spatial resolution of reference chrominance and the spatial resolution of reference luminance as well as matching between the spatial resolution of current predicted chrominance and the spatial resolution of existing reconstructed luminance is implemented, then down-sampling filtering is performed on the predicted chrominance after matching is achieved, and finally, post-processing is performed on a chroma prediction value.

It can be understood that, embodiments of the disclosure are intended to improve accuracy of chroma prediction without loss of luma information based on the WCP prediction technology. Here, the detailed steps of the chroma prediction process in the WCP mode are as follows.

Input of the WCP mode: a position (*xTbCmp, yTbCmp)* of the current block, a width *nTbW of* the current block, and a height *nTbH* of the current block.

Output of the WCP mode: a prediction value *predSamples[x][y]* of the current block, where the top-left position in the current block is taken as a coordinate origin, x=0, ..., *nTbW-1,* and *y*=0, ..., *nTbH*-1.

The prediction process in the WCP mode can include determination of a core parameter, up-sampling filtering on reference chroma information, acquisition of target information, WCP, down-sampling filtering of current predicted chrominance, and post-processing. After these steps, a chroma prediction value of the current block can be obtained.

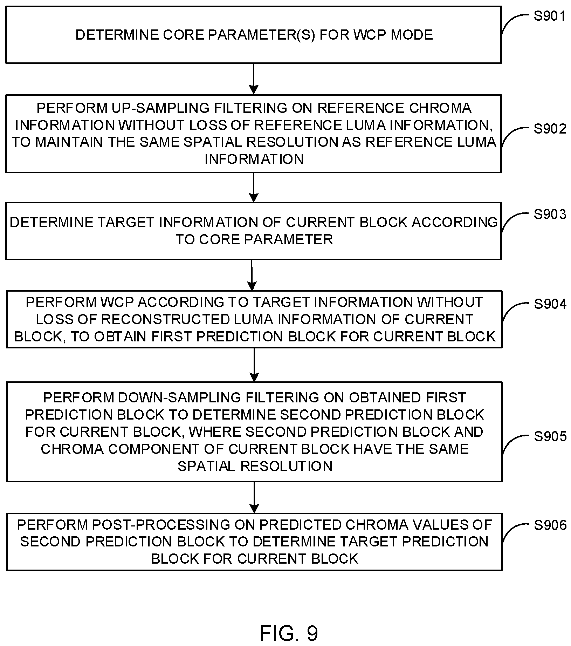

In an embodiment, referring to FIG. 9, FIG. 9 is schematic flowchart II of a decoding method provided in embodiments of the disclosure. As illustrated in FIG. 9, the method can include the following.

S901, a core parameter(s) for a WCP mode is determined.

It should be noted that, in terms of determining the core parameter for the WCP mode in S901, the core parameter for the WCP mode can be obtained or derived through configuration or in some means, for example, the core parameter is obtained from a bitstream at a decoding end.

Here, the core parameter for the WCP mode includes, but is not limited to, a control parameter (S), the number *(inSize)* of inputs of WCP (hereinafter, "WCP inputs" for short), and the number of outputs of WCP (hereinafter, "WCP outputs" for short) (arranged into *predSizeW×predSizeH*). The first prediction block output based on WCP can be represented by *predWcp.* Here, the number of WCP outputs can be set to the same value (for example, *predSizeW= predSizeH = T/*4) or depend on the size parameter of the current block (for example, *predSizeW= nTbW,* and *predSizeH = nTbH).* The control parameter (S) can be used to adjust a nonlinear function in subsequent operations or adjust data involved in subsequent operations.

In some cases, the determination of the core parameter depends on a block size, a block content, or the number of samples in the block. For example, if there are various block sizes to which the WCP mode can be applied, or the difference between the block size is significant, or the difference between the block content is significant, or the difference between the number of samples in the block is significant, the current block can be classified according to the block size, the block content, or the number of samples in the block, and the same or different core parameters can be determined with regard to different categories. That is, the control parameter (S), or the number *inSize* of WCP inputs, or the number of WCP outputs (arranged into *predSizeW×predSizeH*) corresponding to different categories can be the same or different. It should be noted that, *predSizeW* can also be the same as or different from *predSizeH.*

In order to better illustrate the determination of the core parameter, two classifications are taken as examples for illustration below.

Classification example 1: in the WCP mode, the current block can be classified according to the width and height of the current block, and the category of the block is represented by *wcp SizeId.* The control parameter (S), the number *inSize* of WCP inputs, and the number of WCP outputs (arranged into *predSizeW×predSizeH*) corresponding to different categories of blocks can be the same or different. Here, an example of classification into three categories will be illustrated below.

The current block is classified into three categories according to the width and height of the current block. The control parameter (S) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, and the category *wcpSizeId* of the block is defined as follows.

*wcpSizeId=0:* represents a current block with min(nTbW, nTbH)<=4, where the control parameter (S) is 8, *inSize* is (2×*nTbH*+2×*nTbW*), and the number of chroma prediction values is the number of WCP outputs *nTbH×nTbW.*

*wcpSizeId=1:* represents a current block with 4<min(nTbW, nTbH)<=16, where the control parameter (S) is 12, inSize is (2×*nTbH*+2×*nTbW*), and the number of chroma prediction values is the number of WCP outputs *nTbH×nTbW.*

*wcpSizeId=2:* represents a current block with min(nTbW, nTbH)>16, where the control parameter (*S*) is 16, *inSize* is (2×*nTbH*+2×*nTbW*)*,* and the number of chroma prediction values is the number of WCP outputs *nTbH×nTbW.*

The numerical relationship between the above core parameters is represented in the form of a table, as illustrated in Table 6.

Table 6

| wcpSizeId | S | inSize | predSizeH | predSizeW |
|---|---|---|---|---|
| 0 | 8 | 2×nTbH+2×nTb-W | nTbH | nTbW |
| 1 | 12 | 2×nTbH+2×nTb-W | nTbH | nTbW |

(continued)

| wcpSizeId | S | inSize | predSizeH | predSizeW |
|---|---|---|---|---|
| 2 | 16 | 2×nTbH+2×nTb-W | nTbH | nTbW |

Another example of classification into three categories is described below.

The current block is classified into three categories according to the width and height of the current block. The control parameter ($S$) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, and the category *wcpSizeId* of the block is defined as follows.

*wcpSizeId=0:* represents a current block with min(nTbW, nTbH)<=4, where the control parameter ($S$) is 8, *inSize* is (2×*nTbH*+2×*nTbW*), and the number of chroma prediction values is the number of WCP outputs *nTbH×nTbW*.

*wcpSizeId=1:* represents a current block with 4<min(nTbW, nTbH)<=16, where the control parameter ($S$) is 12, *inSize* is (1.5×*nTbH*+1.5×*nTbW*), and the number of chroma prediction values is the number of WCP outputs *nTbH/2×nTbW/2*.

*wcpSizeId=2:* represents a current block with min(nTbW, nTbH)>16, where the control parameter ($S$) of WCP is 16, *inSize* is (*nTbH*+*nTbW*), and the number of chroma prediction values is the number of WCP outputs *nTbH/4×nTbW/4*.

The numerical relationship between the above core parameters is represented in the form of a table, as illustrated in Table 7.

Table 7

| wcpSizeId | S | inSize | predSizeH | predSizeW |
|---|---|---|---|---|
| 0 | 8 | 2×nTbH+2×nTbW | nTbH | nTbW |
| 1 | 12 | 1.5×nTbH+1.5×nTb-W | nTbH/2 | nTbW/2 |
| 2 | 16 | nTbH+nTbW | nTbH/4 | nTbW/4 |

Classification example 2: in the WCP mode, the current block can be classified according to the width and height of the current block, and the category of the block is represented by *wcp SizeId.* The control parameter ($S$), the number *inSize* of WCP inputs, and the number of WCP outputs (arranged into *predSizeW×predSizeH*) corresponding to different categories of blocks can be the same or different. Here, an example of classification into three categories will be illustrated below.

The current block is classified into three categories according to the width and height of the current block. The control parameter ($S$) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, *nTbW×nTbH* represents the number of samples in the current block, and the category *wcpSizeId* of the block is defined as follows.

*wcpSizeId=0*: represents a current block with (*nTbW×nTbH*)<128, where the control parameter ($S$) is 10, *inSize* is (2×*nTbH*+2×*nTbW*), and the number of chroma prediction values is the number of WCP outputs *nTbH×nTbW*.

*wcpSizeId=1:* represents a current block with 128<=(*nTbW×nTbH*)<=256, where the control parameter ($S$) is 8, *inSize* is (2×*nTbH*+2×*nTbW*), and the number of chroma prediction values is the number of WCP outputs *nTbH×nTbW*.

*wcpSizeId=2:* represents a current block with (*nTbW×nTbH*)>256, where the control parameter ($S$) is 1, *inSize* is (2×*nTbH*+2×*nTbW*), and the number of chroma prediction values is the number of WCP outputs *nTbH×nTbW*.

The numerical relationship between the above core parameters is represented in the form of a table, as illustrated in Table 8.

Table 8

| wcpSizeId | S | inSize | predSizeH | predSizeW |
|---|---|---|---|---|
| 0 | 10 | 2×nTbH+2×nTb-W | nTbH | nTbW |
| 1 | 8 | 2×nTbH+2×nTb-W | nTbH | nTbW |

(continued)

| wcpSizeId | S | inSize | predSizeH | predSizeW |
|---|---|---|---|---|
| 2 | 1 | 2×nTbH+2×nTb-W | nTbH | nTbW |

Another example of classification into three categories is described below.

The current block is classified into three categories according to the width and height of the current block. The control parameter (S) corresponding to different categories can be set to be different, and *inSize* and the number of WCP outputs (arranged into *predSizeW×predSizeH*) corresponding to different categories can be set to be the same. *nTbW* represents the width of the current block, *nTbH* represents the height of the current block, *nTbW×nTbH* represents the number of samples in the current block, and the category *wcpSizeId* of the block is defined as follows.

*wcpSizeId=0:* represents a current block with $(nTbW×nTbH)<64$, where the control parameter (S) is 16, *inSize* is $(2×nTbH+2×nTbW)$, and the number of chroma prediction values is the number of WCP outputs *nTbH×nTbW*.

*wcpSizeId=1:* represents a current block with $64<=(nTbW×nTbH)<=512$, where the control parameter (S) is 4, *inSize* is $(1.5×nTbH+1.5×nTbW)$, and the number of chroma prediction values is the number of WCP outputs *nTbH/2×nTbW/2*.

*wcpSizeId=2:* represents a current block with $(nTbW×nTbH)>512$, where the control parameter (S) is 1, *inSize* is *(nTbH+nTbW),* and the number of chroma prediction values is the number of WCP outputs *nTbH/4×nTbW/4*.

The numerical relationship between the above core parameters is represented in the form of a table, as illustrated in Table 9.

Table 9

| wcpSizeId | S | inSize | predSizeH | predSizeW |
|---|---|---|---|---|
| 0 | 16 | 2×nTbH+2×nTbW | nTbH | nTbW |
| 1 | 4 | 1.5×nTbH+1.5×nTb-W | nTbH/2 | nTbW/2 |
| 2 | 1 | nTbH+nTbW | nTbH/4 | nTbW/4 |

S902, up-sampling filtering is performed on reference chroma information without loss of reference luma information, to maintain the same spatial resolution as the reference luma information.

It should be noted that, for S902, when predicting the current block, the top area, the top-left area, and the left area of the current block are used as the neighbouring areas (can also be referred to as "reference areas") of the current block. As illustrated in the foregoing FIG. 6A, all samples in the neighbouring areas are decoded reference samples.

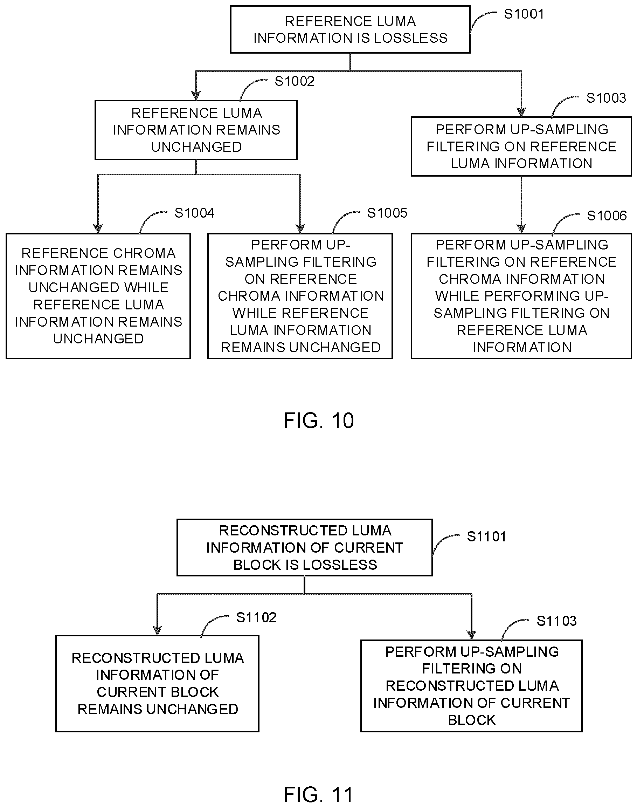

Here, the reference chroma information *refC* and the reference luma information *refY* can be obtained from the neighbouring area. Since human eyes are sensitive to luma information, and chroma prediction is performed mainly by constructing a model with existing luma information in embodiments of the disclosure, up-sampling filtering is performed on the reference chroma information with regard to different YUV video formats, so as to realize matching between the spatial resolution of the reference chroma information and the spatial resolution of the reference luma information without loss of reference luma information. In an embodiment, as illustrated in FIG. 10, step S902 can include the following.

S1001, the reference luma information is lossless.

S1002, the reference luma information remains unchanged.

S1003, up-sampling filtering is performed on the reference luma information.

S1004, the reference chroma information remains unchanged while the reference luma information remains unchanged.

S1005, up-sampling filtering is performed on the reference chroma information while the reference luma information remains unchanged.

S1006, up-sampling filtering is performed on the reference chroma information while performing up-sampling filtering on the reference luma information.

It should be noted that, while ensuring the reference luma information is lossless, there can be two cases: (1) the reference luma information remains unchanged; (2) up-sampling filtering is performed on the reference luma information. With regard to case (1), there can be two sub-cases: (a) the reference chroma information remains unchanged; (b) up-sampling filtering is performed on the reference chroma information. With regard to case (2), there is no sub-case in which the reference chroma information remains unchanged, and up-sampling filtering needs to be performed on the reference chroma information.

With regard to case (1), i. e., step S1002, the reference luma information remains unchanged, and thus there is no loss of luma information. In this case, due to diversity of YUV video formats, the reference chroma information needs to be processed with regard to different sub-cases.

Sub-case 1: for a video in a YUV444 format, the spatial resolution of the luma component is equal to the spatial resolution of the chroma component, and in this case, no processing needs to be performed on the reference chroma component.

Sub-case 2: for a video with chroma sub-sampling characteristics such as YUV422, YUV411, and YUV420, the spatial resolution of the luminance is inconsistent with the spatial resolution of the chrominance, and the spatial resolution of the chroma component is lower than the spatial resolution of the luma component. In this case, up-sampling filtering needs to be performed on the reference chroma component according to the YUV video format. The manner for up-sampling filtering can be any one of linear interpolation methods, such as nearest neighbour interpolation, bilinear interpolation, bicubic interpolation, mean interpolation, median interpolation, copy interpolation, etc. Alternatively, the manner for the up-sampling filtering can be any one of nonlinear interpolation methods, such as a wavelet transform-based interpolation algorithm or an edge information-based interpolation algorithm. Alternatively, up-sampling filtering can also be performed based on a CNN. Embodiments of the disclosure are not limited in this regard. Here, a YUV420 video format and copy interpolation are taken as an example for for illustration. FIG. 6B illustrates interpolation by means of reference chroma copy on $4 \times 1$ reference chroma information and $8 \times 2$ reference luma information. As illustrated in FIG. 6B, a $8 \times 2$ diagonal-filled block represents the reference luma information, a $4 \times 1$ grid-filled block represents collocated reference chroma information, and each sample in the $4 \times 1$ grid-filled block is equivalent to a top-left sample in each $2 \times 2$ sub-block in the $8 \times 2$ chroma block subject to up-sampling filtering, i. e. the sample value of each chroma sample in the $2 \times 2$ sub-block subject to copy interpolation is the same. Specifically, for each $2 \times 2$ sub-block, the other three chroma samples (dot-filled blocks) are all copied from the top-left sample (grid-filled block).

With regard to case (2), i. e., step S1003, up-sampling filtering is performed on the reference luma information, and thus there is no loss of luma information. In this case, since in a YUV format video, the spatial resolution of the luma component is always higher than or equal to the spatial resolution of the chroma component, up-sampling filtering needs to be performed on the reference chroma information so as to make the spatial resolution of the reference chroma information be consistent with the spatial resolution of the reference luma information. In this case, a spatial up-sampling rate of the reference chroma information needs to be determined according to the YUV video format and a spatial up-sampling rate of the reference luma information. Here, a horizontal up-sampling rate of the reference luma information (namely, the first horizontal up-sampling factor in the foregoing embodiment) is represented by *S_Hor_RefLuma,* a vertical up-sampling rate of the reference luma information (namely, the first vertical up-sampling factor in the foregoing embodiment) is represented by *S_Ver_RefLuma,* a horizontal up-sampling rate of the reference chroma information (namely, the second horizontal up-sampling factor in the foregoing embodiment) is represented by *S_Hor_RefChroma,* and a vertical up-sampling rate of the reference chroma information (the second vertical up-sampling factor in the foregoing embodiment) is represented by *S_Ver_RefChroma.*

For a video in a YUV444 format, *S_Hor_RefChroma = S_Hor_RefLuma,* and *S_Ver_RefChroma = S_Ver_RefLuma.* For a video in a YUV422 format, *S_Hor_RefChroma = 2×S_Hor_RefLuma,* and *S_Ver_RefChroma = S_Ver_RefLuma.* For a video in a YUV411 format, *S_Hor_RefChroma = 4×S_Hor_RefLuma,* and *S_Ver_RefChroma = S_Ver_RefLuma.* For a video in a YUV420 format, *S_Hor_RefChroma = 2×S_Hor_RefLuma,* and *S_Ver_RefChroma = 2×S_Ver_RefLuma.*

S903, target information of the current block is determined according to the core parameter.

It should be noted that, for S903, the target information of the current block can include reference chroma information *(refC),* reference luma information (*refY*), and reconstructed luma information (r*ecY*). The reference chroma information *refC* and the reference luma information *refY* are obtained from the reference area in FIG. 6A. It should be noted that, the reference chroma information obtained includes, but is not limited to, corresponding reference chroma information obtained according to a position of the reference luma information. The reference luma information obtained includes, but is not limited to, a reference reconstructed luma value selected from the top area of the current block and a reference reconstructed luma value selected from the left area of the current block.

It should be further noted that, in embodiments of the disclosure, in some case, *refC, refY,* or *recY* can be pre-processed and then taken as an input of WCP.

Exemplarily, different filtering operations can be performed on *refC, refY,* or *recY* for current blocks of different sizes. Obtaining the target information can include the following. *inSize* pieces of reference chroma information *(refC)* are obtained, where the *refC* may be subject to up-sampling filtering or not subject to up-sampling filtering. If pre-processing such as filtering is required, *refC* is information obtained after pre-processing. *inSize* pieces of reference luma information *refY* are obtained, where *refY* may be subject to up-sampling filtering or not subject to up-sampling filtering. If pre-processing such as filtering is required, *refY* is information obtained after pre-processing.

In addition, obtaining the target information can further include the following. The reconstructed luma information *recY* of the current block is obtained. With regard to *recY,* detailed elaboration will be given in the following steps.

S904, WCP is performed according to the target information without loss of the reconstructed luma information of the current block, to obtain a first prediction block for the current block.

It should be noted that, in order to avoid loss of the reconstructed luma information of the current block, the reconstructed luma information recY obtained may be subject to no processing or subject to up-sampling filtering. In terms of obtaining the reconstructed luma information, as illustrated in FIG. 11, the method can include the following.

S1101, the reconstructed luma information of the current block is lossless.

S1102, the reconstructed luma information of the current block remains unchanged.

S1103, up-sampling filtering is performed on the reconstructed luma information of the current block.

That is, in order to obtain a more accurate chroma prediction value, in embodiments of the disclosure, for each luma sample in the current block, a difference between the luma value thereof and a reference luminance is calculated to obtain a luma difference, then a weight of a collocated reference chrominance of each reference luminance is obtained according to the luma difference, and finally, weighted prediction is performed according to the weight to obtain a WCP value of each collocated chrominance. In this way, the spatial resolution of the prediction block obtained through the foregoing process is consistent with the spatial resolution of the current block. Therefore, operations can be performed on the reconstructed luma information of the current block with regard to the following two cases.

With regard to case 1 (namely, step S1102), if no processing is performed on the reconstructed luma information of the current block, a size of the first prediction block to-be-output needs to be derived according to a YUV video format. For a video in a YUV444 format, the spatial resolution of the luma component is equal to the spatial resolution of the chroma component, and in this case, *predSizeW = nTbW,* and *predSizeH = nTbH.* For a video in a YUV422 format, the luma component and the chroma component have the same vertical resolution, but the horizontal resolution of the chroma component is 1/2 the horizontal resolution of the luma component, and in this case, *predSizeW = 2×nTbW,* and *predSizeH = nTbH.* For a video in a YUV411 format, the luma component and the chroma component have the same vertical resolution, but the horizontal resolution of the chroma component is 1/4 the horizontal resolution of the luma component, and in this case, *predSizeW = 4×nTbW,* and *predSizeH = nTbH.* For a video in a YUV420 format, the horizontal resolution of the chroma component is 1/2 the horizontal resolution of luma component, and the vertical resolution of the chroma component is 1/2 the vertical resolution of the luma component, and in this case, *predSizeW= 2×nTbW,* and predSizeH = 2×nTbH.

With regard to case 2 (namely, step S1103), if up-sampling filtering is performed on the reconstructed luma information of the current block, the manner for up-sampling filtering can be any one of linear interpolation methods, such as nearest neighbour interpolation, bilinear interpolation, bicubic interpolation, mean interpolation, median interpolation, copy interpolation, etc. Alternatively, the manner for up-sampling filtering can be any one of nonlinear interpolation methods, such as a wavelet transform-based interpolation algorithm or an edge information-based interpolation algorithm. Alternatively, up-sampling filtering can also be performed based on a CNN. After up-sampling filtering is performed on the reconstructed luma information of the current block, the size of the first prediction block to-be-output needs to be determined according to a YUV video format and a spatial up-sampling rate of the reconstructed luma information. Here, a horizontal up-sampling rate of the reconstructed luma information (namely, the third horizontal up-sampling factor in the foregoing embodiment) is represented by *S_Hor_RecLuma,* and a vertical up-sampling rate of the reconstructed luma information (namely, the third vertical up-sampling factor in the foregoing embodiment) is represented by *S_Ver_RecLuma.*

For a video in a YUV444 format, the spatial resolution of the luma component is equal to the spatial resolution of the chroma component, and in this case, *predSizeW = S_Hor_RecLuma × nTbW,* and *predSizeH = S_Ver_RecLuma × nTbH.* For a video in a YUV422 format, the luma component and the chroma component have the same vertical resolution, but the horizontal resolution of the chroma component is 1/2 the horizontal resolution of the luma component, and in this case, *predSizeW = 2 × nTbW × S_Hor_RecLuma,* and *predSizeH = nTbH × S_Ver_RecLuma.* For a video in a YUV411 format, the luma component and the chroma component have the same vertical resolution, but the horizontal resolution of the chroma component is 1/4 the horizontal resolution of the luma component, and in this case, *predSizeW = 4 × nTbW × S_Hor_RecLuma,* and *predSizeH = nTbH × S_Ver_RecLuma.* For a video in a YUV420 format, the horizontal resolution of the chroma component is 1/2 the horizontal resolution of luma component, and the vertical resolution of the chroma component is 1/2 the vertical resolution of the luma component, and in this case, *predSizeW = 2 × nTbW × S_Hor_RecLuma,* and *predSizeH = 2 × nTbH × S_Ver_RecLuma.*

Exemplarily, assuming that the horizontal up-sampling rate *S_Hor_RecLuma* of the reconstructed luma information is referred to as *upHor* for short, and the vertical up-sampling rate *S_Ver_RecLuma* of the reconstructed luma information is referred to as *upVer* for short, then up-sampling filtering is performed on the reconstructed luma information *recY,* so as to generate reconstructed luma information to-be-input *in_recY.* An example of an interpolation process is as follows.

Firstly, a top reference reconstructed luma sample *refY_T* is filled into an upper row *in_recY[x][-1]* of the reconstructed luma information to-be-input, and a left reference reconstructed luma sample *refY_L* is filled into a left column *in_recY[-1][y]* of the reconstructed luma information to-be-input, where x=0, ..., *predSizeW-1,* and y=0, ...,

*predSizeH-1.* In this case, *recY* is filled into a corresponding position *((x+1)×upHor-1, (y+1)×upVer-1)* in *in_recY* according to the following formula:

$$in\_recY[(x + 1) \times upHor - 1][(y + 1) \times upVer - 1] = recY[x][y] \qquad (17)$$

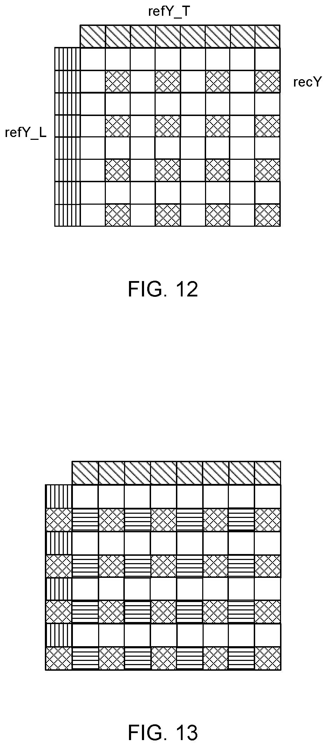

This can be understood as partitioning *in_recY* equally into *recSizeW×recSizeH* sub-blocks, and then the position to be filled is a bottom-right position in each sub-block. Referring to FIG. 12, taking *predSizeW=8, predSizeH=8,* and the current block with the size of 4×4 as an example, a diagonal-filled block represents the top reference reconstructed luma sample *refY_T,* a vertical-line-filled block represents the left reference reconstructed luma sample *refY_L,* and a grid-filled block represents a position at which the reconstructed luma information *recY* of the current block is filled.

If the up-sampling factor *upHor* is greater than 1, up-sampling is performed firstly in a horizontal direction, and the up-sampling process is implemented according to the following formula:

$$sum = (upHor - dX) \times rec\_Y[xHor][yHor] + dX \times rec\_Y[xHor + upHor][yHor] \qquad (18)$$

$$rec\_Y[xHor + dX][yHor] = \left(sum + \frac{upHor}{2}\right)/upHor \qquad (19)$$

For the above process, reference can be made to FIG. 13, taking *predSizeW=8, predSizeH=8,* and the current block with the size of 4×4 as an example, when performing horizontal up-sampling, among the left reference luma samples *refY_L,* a sample corresponding to a horizontal position at which *rec_Y* is filled can also be used as a reference sample for up-sampling, which is also filled with grids. In this case, all the grid-filled blocks represent reference samples for up-sampling, and a prediction sample obtained by means of linear interpolation between every two grid-filled samples in a horizontal direction is filled with horizontal lines.

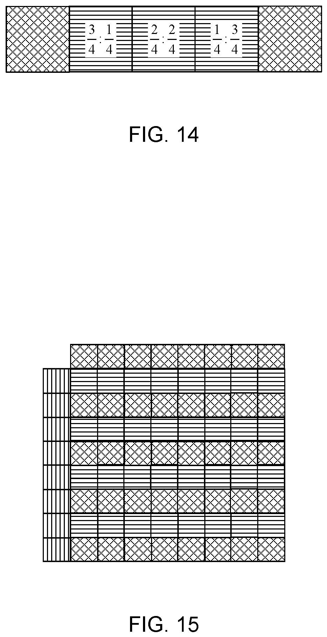

Up-sampling is performed by means of linear interpolation, that is, a value of each interpolated sample (horizontal-line-filled) between two reference luma samples for up-sampling (grid-filled) is a weighted average value of the two reference luma samples for up-sampling. According to formula (18) and formula (19), a weight of a left reference chroma sample for up-sampling is *(upHor-dX)/upHor,* and a weight of a right reference chroma sample for up-sampling is *dX/upHor,* where *dX* represents a distance between a current interpolated sample and the left reference sample, and *dX* = 1, ..., *upHor-1*. As such, when performing interpolation in a horizontal direction, the weight depends on the horizontal up-sampling rate *upHor* only. FIG. 14 illustrates an example of weights. In this example, *upHor* = 4. For a 1st interpolated sample in FIG. 14, a weight of a left reference chroma sample for up-sampling is 3/4, and a weight of a right reference chroma sample for up-sampling 1/4. For a 2nd interpolated sample in FIG. 14, the weight of the left reference chroma sample for up-sampling is 2/4, and the weight of right reference chroma sample for up-sampling is 2/4. For a 3rd interpolated sample in FIG. 14, the weight of the left reference chroma sample for up-sampling is 1/4, and the weight of the right reference chroma sample for up-sampling is 3/4.

If the vertical up-sampling factor *upVer* is greater than 1, up-sampling needs to be performed in a vertical direction, and the process thereof is similar to the horizontal up-sampling process. The process is implemented according to the following formula:

$$sum = (upVer - dY) \times rec\_Y[xVer][yVer] + dY \times rec\_Y[xVer][yVer + upVer] \qquad (20)$$

$$rec\_Y[xVer][yVer + dY] = \left(sum + \frac{upVer}{2}\right)/upVer \qquad (21)$$

The process is illustrated in FIG. 15. Taking *predSizeW=8, predSizeH=8,* and the current block with the size of 4×4 as an example, after the horizontal up-sampling illustrated in FIG. 13 is completed, the top reference luma samples *refY_T* and all existing samples in *in_recY* will be used as reference samples for vertical up-sampling, which are also filled with grids herein. In this case, the grid-filled samples are all reference samples for up-sampling, and a prediction sample obtained by means of linear interpolation between every two grid-filled samples in a vertical direction is filled with horizontal lines.

The up-sampling is also performed by means of linear interpolation. According to formula (20) and formula (21), a weight of a top reference sample for up-sampling is *(upVer-dY)/upVer,* and a weight of a bottom reference sample is *dY/upVer,* where *dY* represents a distance between a current interpolated sample and the top reference sample, and *dY* = 1, ..., *upver- 1*. As such, when performing vertical interpolation, the weight depends on the vertical up-sampling rate *upVer* only.

In this way, the final *in_recY* can be obtained through the foregoing process. With regard to the foregoing interpolation process, besides a "firstly-horizontal-then-vertical" up-sampling method, a "firstly-vertical-then-horizontal" up-sampling method can also be used. Alternatively, a reconstructed luma value obtained through "firstly-horizontal-then-vertical" up-sampling and a reconstructed luma value obtained through "firstly-vertical-then-horizontal" up-sampling can also be averaged to obtain the final reconstructed luma value to-be-input *in_recY*. Alternatively, the up-sampling operation can also be replaced by a convolution operation in a neural network. Embodiments of the disclosure are not limited in this regard.

In this way, the finally obtained target information to-be-input can include: *inSize* pieces of reference chroma information *refC, inSize* pieces of reference luma information *refY,* and the reconstructed luma information *recY* of the current block.

It can be understood that, for S904, the chroma prediction values within the size defined by the core parameter are represented by $C^{pred}[i][j]$ and are obtained one by one, where i=0, ..., *predSizeW-1,* and *j*=0, ..., *predSizeH-1*. It should be noted that, *predSizeH* and *predSizeW* are core parameters, and in embodiments of the disclosure, *predSizeH* is greater than or equal to (the same as or different from) the height *nTbH* of the current block, or *predSizeW* is greater than or equal to the width *nTbW* of the current block. In this way, the WCP includes the following. A weight is obtained. Weighted prediction is performed according to the weight to obtain a WCP value. The process of obtaining the weight includes construction of a luma difference vector and calculation of the weight, and the detailed calculation process is as follows.

For *i=0, ..., predSizeW-1, j=0, ..., predSizeH-1,* and for k=0, 1 ..., *inSize-1,* each element *diffY[i][j][k]* in the luma difference vector is constructed, each element *cWeight[i][j][k]* (or *cWeightFloat[i][j][k]*) in the weight vector is calculated, and then the chroma prediction value $C^{pred}[i][j]$ is calculated according to *cWeight[i][j]* (or *cWeightFloat[i][j][k]*) and *refC.*

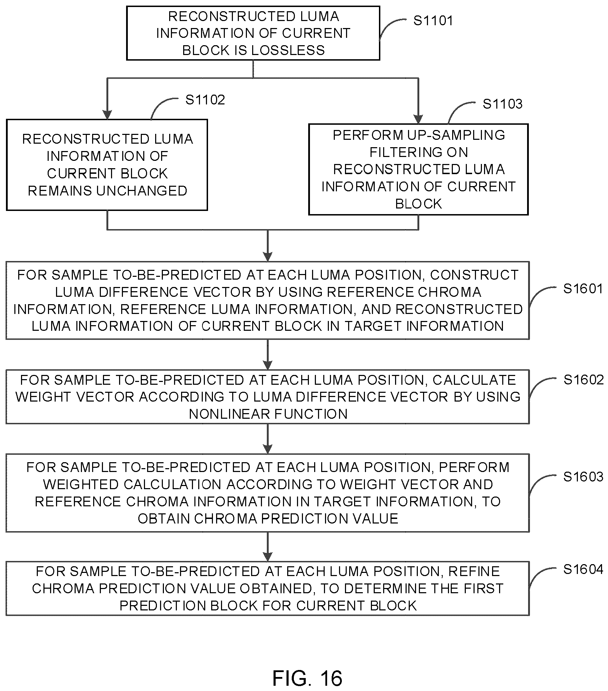

In an embodiment, after obtaining the reconstructed luma information, as illustrated in FIG. 16, the method can further include the following.

S1601, for a sample to-be-predicted at each luma position, a luma difference vector is constructed by using the reference chroma information, the reference luma information, and the reconstructed luma information of the current block in the target information.

It should be noted that, for each sample to-be-predicted $C^{pred}[i][j]$ within the size defined by the core parameter, an absolute value(s) of a difference(s) between reconstructed luma information *recY[i][j]* corresponding to the sample to-be-predicted and *inSize* pieces of reference luma information *refY* is calculated to obtain a luma difference vector *diffY[i][j][k]*. The formula for calculation is as follows:

$$\text{diffY}[i][j][k] = \text{abs}(\text{refY}[k] - \text{recY}[i][j]) \qquad (22)$$

where $\text{abs}(x) = \begin{cases} x & ; & x >= 0 \\ -x & ; & x < 0 \end{cases}$ , and abs( *x* ) represents an absolute value of x.

It should be further noted that, in some case, linear or nonlinear numerical processing can be performed on the luma difference vector for the sample to-be-predicted. For example, the value of the luma difference vector for the sample to-be-predicted can be scaled according to the control parameter S in the core parameter.

S1602, for the sample to-be-predicted at each luma position, a weight vector is calculated according to the luma difference vector by using a nonlinear function.

It should be noted that, in embodiments of the disclosure, the luma difference vector *diffY[i][j]* corresponding to each sample to-be-predicted $C^{pred}[i][j]$ is processed by using a weight model, to obtain a corresponding floating-point weight vector cWeightFloat[i][j]. The weight model herein includes, but is not limited to, a nonlinear normalized function, a nonlinear normalized exponential function, and other nonlinear functions, which is not limited herein.

Exemplarily, a nonlinear Softmax function can be used as a weight model, a luma difference vector *diffY[i][j]* corresponding to each sample to-be-predicted is used as an input of the weight model, and the floating-point weight vector cWeightFloat [i][j] corresponding to each sample to-be-predicted is output with the weight model. The formula for calculation is as follows:

$$\text{cWeightFloat}[i][j][k] = \frac{e^{-\text{diffY}[i][j][k]}}{\sum_{n=0}^{\text{inSize}-1} e^{-\text{diffY}[i][j][n]}} \qquad (23)$$

In some case, the weight model can also be adjusted according to the control parameter (S) in the core parameter. Exemplarily, if the current block is flexible in size, the weight model can be adjusted according to the control parameter (S). Taking a nonlinear Softmax function as an example, different control parameters can be selected to adjust the function according to different block categories of the current block. In this case, a formula for calculating the weight vector corresponding to each sample to-be-predicted is as follows:

$$cWeightFloat[i][j][k] = \frac{e^{\frac{-diffY[i][j][k]}{S}}}{\sum_{n=0}^{inSize-1} e^{\frac{-diffY[i][j][n]}{S}}} \qquad (24)$$

In embodiments of the disclosure, fixed-point calculation can also be performed on the weighting factor. Therefore, in some embodiments, the method further includes the following. If the weighting factor is a floating-point weighting factor, fixed-point calculation is performed on the floating-point weighting factor to obtain a fixed-point weighting factor.

In this way, after calculation according to the above formula (23) or formula (24) is completed, fixed-point calculation can be performed on *cWeightFloat,* as illustrated below:

$$cWeight[i][j][k] = round\big(cWeightFloat[i][j][k] \times 2^{Shift}\big) \qquad (25)$$

where round( $x$ )=Sign( $x$ ) ×Floor( abs($x$)+0.5 ). Here, Floor( $x$ ) represents the greatest integer less than or equal to x.

$$Sign(\,x\,) = \begin{cases} 1 & ; & x > 0 \\ 0 & ; & x == 0 \\ -1 & ; & x < 0 \end{cases}$$
. abs(x) represents an absolute value of x. In addition, *Shift* is a shift amount which is set for the fixed-point operation in order to improve accuracy.

S1603, for the sample to-be-predicted at each luma position, weighted calculation is performed according to the weight vector and the reference chroma information in the target information, to obtain a chroma prediction value.

It should be noted that, the chroma prediction value of each sample to-be-predicted is calculated according to the weight vector *cWeight[i][j]* (or cWeightFloat[i][j]) and the reference chroma information *refC* corresponding to the sample to-be-predicted. Specifically, for each sample to-be-predicted $C^{pred}[i][j]$, the reference chroma information *refC* for the sample to-be-predicted is multiplied by the weight vector elements corresponding to the sample to-be-predicted one by one to obtain *subC[i][j]* (or *subCFloat[i][j]*), and the multiplication results are summed to obtain the chroma prediction value $C^{pred}[i][j]$ of the sample to-be-predicted, thereby realizing weighted prediction on the chroma component.

In a possible implementation, the method can include the following. Weighted calculation is performed according to a floating-point weighting factor and the reference chroma information, to obtain an initial prediction value of a sample to-be-predicted. Fixed-point calculation is performed on the initial prediction value, to obtain a target prediction value of the sample to-be-predicted.

Exemplarily, the formula for calculation is as follows:

For *k*=0, 1, ..., *inSize*-1,

$$subCFloat[i][j][k] = \big(cWeightFloat[i][j][k] \times refC[k]\big) \qquad (26)$$

After the calculation is completed, fixed-point calculation can also be performed on subCFloat[i][j][k]. During fixed-point calculation, in order to maintain a certain calculation precision, a coefficient can be multiplied herein, which is as follows:

$$subC[i][j][k] = round(subCFloat[i][j][k] \times 2^{Shift}) \qquad (27)$$

Alternatively, for i=0, ..., *predSizeW-1,* and *j*=0, ..., *predSizeH-1,*

$$C^{pred}Float[i][j] = \sum_{k=0}^{inSize-1} subCFloat[i][j][k] \qquad (28)$$

After the calculation, fixed-point calculation is performed on $C^{pred}Float[i][j]$, such as:

$$C^{pred}[i][j] = round(C^{pred}Float[i][j]) \qquad (29)$$

In another possible implementation, weighted calculation can be performed according to a fixed-point weighting factor and the reference chroma information, to obtain an initial prediction value of a sample to-be-predicted. Fixed-point compensation is performed on the initial prediction value, to obtain a target prediction value of the sample to-be-predicted.

Exemplarily, the formula for calculation is as follows:

For k=0, 1, ..., *inSize-1,*

$$subC[i][j][k] = (cWeight[i][j][k] \times refC[k]) \qquad (30)$$

Then, calculation is performed on the *subC[i][j][k]* subject to fixed-point calculation, which is as follows:
For i=0, ..., predSizeW- 1, j=0, ..., predSizeH-1,

$$C^{pred}[i][j] = \left(\sum_{k=0}^{inSize-1} subC[i][j][k] + Offset\right) \gg Shift_1 \qquad (31)$$

where Offset = 1 « (Shift, - 1). *Shift$_1$* can be a shift amount required in fixed-point calculation to improve accuracy in calculating *cWeight[i][j][k]* or subC[i][j][k](*Shift$_1$= Shift)* in other operations.

S1604, for the sample to-be-predicted at each luma position, the chroma prediction value obtained is refined to determine the first prediction block for the current block.

It should be noted that, the chroma prediction value should be restricted to a preset range. If the chroma prediction value exceeds the preset range, a corresponding refinement operation needs to be performed. Exemplarily, in a possible implementation, the chroma prediction value C$^{pred}$[i][j] can be clipped as follows. When C$^{pred}$[*i*][*j*] < 0, C$^{pred}$[*i*][*j*] is set to 0. When C$^{pred}$[*i*][*j*] > (1<<*BitDepth*) - 1, C$^{pred}$[*i*][*j*] is set to (1<<*BitDepth*)-1.

*BitDepth* is a bit depth required for chroma sample values to ensure that all chroma prediction values of the prediction block are within 0 - (1<<*BitDepth*)- 1. That is,

$$C^{pred}[i][j] = Clip3(0, (1 \ll BitDepth) - 1, C^{pred}[i][j]) \qquad (32)$$

where

$$Clip3(x, y, z) = \begin{cases} x \, ; z < x \\ y \, ; z > y \\ z \, ; otherwise \end{cases} \qquad (33)$$

Alternatively, formula (32) and formula (33) are combined to obtain the following formula:

$$C^{pred}[i][j] = Clip3(0, (1 \ll BitDepth) - 1), \left(\sum_{k=0}^{inSize-1} subC[i][j][k] + Offset\right)) \gg Shift_1 \qquad (34)$$

S905, down-sampling filtering is performed on the obtained first prediction block to determine a second prediction block for the current block, where the second prediction block and a chroma component of the current block have the same spatial resolution.

It should be noted that, for S905, chroma prediction is performed on reconstructed luma information at each position in the current block, to obtain the first prediction block with the size of *predSizeW×predSizeH*. In this case, the size of the first prediction block is greater than or equal to the size of the current block, and therefore, down-sampling filtering needs to be performed on the first prediction block, so as to restore to the same size as that of the current block.

Firstly, a horizontal down-sampling factor *downHor* is calculated according to the width *predSizeW* of the first prediction block output and the width *nTbW of* the current block. Likewise, a vertical down-sampling factor *downVer* is calculated according to the height *predSizeH* of the first prediction block output and the height *nTbH* of the current block. The method for calculation is illustrated as follows:

$$downHor = predSizeW/nTbW \qquad (35)$$

$$downVer = predSizeH/nTbH \qquad (36)$$

Then, down-sampling filtering is performed on the first prediction block *predWcp,* and then the sampled value is filled in the second prediction block *predSamples* as follows.

(i) If *downHor* > 1, and *downVer* = 1, down-sampling filtering needs to be performed only in a horizontal direction, and the formula is as follows:

predSamples[x][y] = (predWcp[downHor×x-1][y] + 2×predWcp [downHor×x][y] + predWcp[downHor×x +1][y] + 2)>>2 $\qquad (37)$

(ii) If *downHor* = 1, and *downVer* > 1, down-sampling needs to be performed only in a vertical direction, and the formula is as follows:

predSamples[x][y] = (predWcp[x][downVer×y-1] + 2×predWcp [x][downVer×y] + predWcp[x][downVer×y +1] + 2)>>2     (38)

(iii) If *downHor* > 1, and *downVer* > 1, down-sampling needs to be performed in both a horizontal direction and a vertical direction, and the formula is as follows:

predSamples[x][y] = (predWcp[downHor×x-1][downVer×y] + predWcp [downHor×x-1][downVer×y+1] + 2×predWcp[downHor×x][downVer×y] + 2×predWcp[downHor×x][downVer×y+1] + predWcp[down- Hor×x+1] [downVer×y] + predWcp[downHor×x+1][downVer×y+1] + 4)>>3     (39)

(iv) If *downHor* = 1, and *downVer* = 1, down-sampling does not need to be performed in either a horizontal direction or a vertical direction, and the formula is as follows:

$$predSamples[x][y] = predWcp[x][y] \qquad (40)$$

where x=0, ..., *predSizeW-* 1, *y=0, ..., predSizeH-1,* and *predSamples* is final chroma prediction values after down-sampling.

S906, post-processing is performed on the chroma prediction values of the second prediction block to determine a target prediction block for the current block.

It should be noted that, for S906, after the WCP-based chroma prediction value *(predWcp)* is output, in some case, post-processing is also required on the chroma prediction value to obtain the final chroma prediction value *(predSamples);* otherwise, the final chroma prediction value *(predSamples)* is *predWcp.*

Exemplarily, in order to reduce instability caused by sample-by-sample parallel prediction in the WCP, smoothing filtering can be performed on *predWcp* and the values subject to smoothing filtering are taken as the final chroma prediction values *predSamples.* Alternatively, in order to further improve accuracy of a WCP prediction value, position-related refinement can be performed on *predWcp.* For example, a chroma compensation value for each sample to-be-predicted is calculated by using a reference sample that is near in spatial position, *predWcp* is refined by using the chroma compensation value, and the refined prediction value is used as the final chroma prediction value *predSamples.* Alternatively, in order to further improve accuracy of a WCP prediction value, weighted average calculation can be performed on a chroma prediction value calculated in another chroma prediction mode(s) and a chroma prediction value *predWcp* calculated in the WCP, and the weighted result is used as the final chroma prediction value *predSamples.* For example, a chroma prediction value obtained through prediction in the CCLM mode and the chroma prediction value *predWcp* calculated in the WCP can be weighted equally or unequally, and the weighted result is used as the final chroma prediction value *predSamples.* Alternatively, in order to improve prediction performance of the WCP, a neural network model can be used to refine the prediction output *predWcp* in the WCP. The disclosure is not limited in this regard.

It can also be understood that, in embodiments of the disclosure, in order to keep luma information to be lossless when performing chroma prediction, instead of performing down-sampling filtering on the reference luma information and the current reconstructed luma information, the luminance can be maintained or up-sampling can be performed on the luminance. Then, an absolute difference between the current reconstructed luma information of each luma sample and the reference luma information is calculated, and nonlinear mapping is performed on the absolute difference to obtain a weight of each reference chroma sample, and all the reference chroma samples are weighted to obtain a prediction value of a collocated chroma sample. In this way, the number of chroma samples to-be-predicted is the same as the number of luma samples in the current reconstructed luma area, and therefore, the chroma prediction block needs to be down-sampled to be restored to the same size as that of the original chroma block. As such, it is possible to ensure accuracy of existing luma information, and with aid of accurate luma information, it is beneficial to improving accuracy and stability of a nonlinear mapping model, thereby improving accuracy of a chroma prediction value.

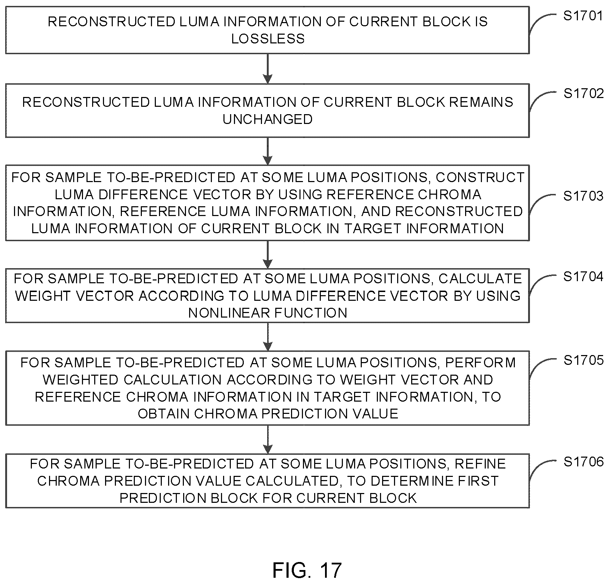

In order to reduce complexity of calculation, up-sampling filtering on the current reconstructed luma information is eliminated. Then, instead of performing collocated chroma sample prediction on the current reconstructed luma information at all luma positions, some of the luma positions can be selected to predict collocated chroma samples. In this way, down-sampling filtering on the chroma prediction block may not be needed subsequently. In another embodiment, as illustrated in FIG. 17, the method can include the following.

S1701, the reconstructed luma information of the current block is lossless.

S1702, the reconstructed luma information of the current block remains unchanged.

S1703, for a sample to-be-predicted at some luma positions, a luma difference vector is constructed by using the reference chroma information, the reference luma information, and the reconstructed luma information of the current block in the target information.

S1704, for the sample to-be-predicted at some luma positions, a weight vector is calculated according to the luma difference vector by using a nonlinear function.

S1705, for the sample to-be-predicted at some luma positions, weighted calculation is performed according to the weight vector and the reference chroma information in the target information, to obtain a chroma prediction value.

S1706, for the sample to-be-predicted at some luma positions, the chroma prediction value calculated is refined to determine the first prediction block for the current block.

It should be noted that, in embodiments of the disclosure, the refinement herein includes clipping.

It should be further noted that, in embodiments of the disclosure, some luma positions can be selected to predict collocated chroma samples, and the process is described below.

(i) In order to reduce subsequent up-sampling filtering or down-sampling filtering operations on a chroma prediction block, a corresponding position can be selected for chroma prediction according to characteristics of a YUV video format. Assuming that a position of a current luma sample is *CurRecLuma(i, j),* then a position of a sample on which chroma prediction is to be performed is *CurPredChroma(x, y).* A coordinate relationship between the positions of the two samples is specifically as follows. If indicated as a video in a YUV444 format, $x = i,$ and $y = j$. If indicated as a video in a YUV422 format, $x = 2 \times i$, and $y = j$. If indicated as a video in a YUV411 format, $x = 4 \times i$, and $y = j$. If indicated as a video in a YUV 420 format, $x = 2 \times i$, and $y = 2 \times j$.

(ii) In order to further reduce complexity of calculation during chroma prediction, fewer collocated chroma samples can be selected for prediction. Assuming that the position of the current luma sample is *CurRecLuma(i, j),* then the position of the sample on which chroma prediction is to be performed is *CurPredChroma(x, y).* Assuming that a horizontal sampling position factor of the current luma block is *S_Pos_Hor* and a vertical sampling position factor of the current luma block is *S_Pos_Ver,* then a relationship between the position of the current luma sample and the position of the sample on which chroma prediction is to be performed is specifically as follows. If indicated as a video in a YUV444 format/YUV422 format/YUV411 format/YUV420 format, $x = i \times S\_Pos\_Hor$, and $y = j \times S\_Pos\_Ver$.

It can also be understood that, in embodiments of the disclosure, adopt different down-sampling filtering methods with regard to different cases in embodiments of the disclosure, alternatively, calculate an average value of every *nTbW/predSizeW* or *nTbH/predSizeH* prediction values in a direction (vertical direction or horizontal direction) in which down-sampling is to be performed without taking the horizontal down-sampling factor and the vertical down-sampling factor into consideration, and then take the average value as the prediction value after down-sampling. Alternatively, the down-sampling filtering operation can also be replaced by convolution and pooling operations in a neural network model. Embodiments of the disclosure are not limited in this regard.

Embodiments provide a decoding method. The implementations of the foregoing embodiments are described in detail in embodiments. As can be seen, with the technical solutions of the foregoing embodiments, it is possible to improve accuracy of a chroma prediction value in a WCP prediction technology. Specifically, a weighting factor is calculated according to reference information of the neighbouring area and luma information of the current block, and the weighting factor is used for chroma prediction of the current block. In this way, the correlation between the current block and the neighbouring area in terms of luma information is fully utilized for chroma prediction of the current block, thereby improving accuracy of chroma prediction. For example, the decoding method is applied to a test software enhanced compression model (ECM) 3.1, and tested under an all intra frame (All Intra) condition at 48 frame intervals. Bjrantegaard-Delta rate (BD-rate) changes (i. e. average bit-rate changes under the same peak signal to noise ratio (PSNR)) of -0.10%, -0.74%, and -0.61% can be achieved in Y, Cb, and Cr respectively. There will be better performance for a higher resolution sequence, and a BD-rate change of up to -0.24% in Y can be achieved for test sequence Class A1. In addition, in embodiments of the disclosure, in order to keep luma information to be lossless when performing chroma prediction based on WCP, instead of performing down-sampling filtering on reference luminance of the neighbouring area and a current reconstructed luminance area, the luminance is maintained or up-sampling is performed on the luminance. Then, an absolute difference between current reconstructed luma information of each luma sample and the reference luma information is calculated, and nonlinear mapping is performed on the absolute difference to obtain a weight of each reference chroma, and all the reference chroma samples are weighted to obtain a prediction value of a collocated chroma sample. In this way, it is possible to ensure accuracy of existing luma information, and with aid of accurate luma information, it is beneficial to improving accuracy and stability of a nonlinear mapping model, thereby improving accuracy of chroma prediction.

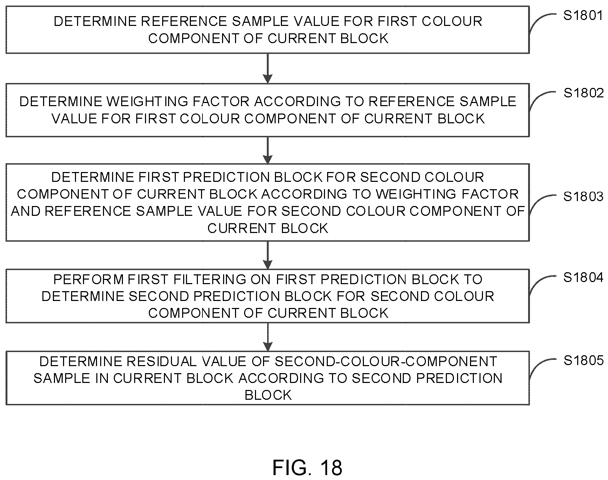

In another embodiment of the disclosure, referring to FIG. 18, FIG. 18 is schematic flowchart I of an encoding method provided in embodiments of the disclosure. As illustrated in FIG. 18, the method can include the following.

S1801, a reference sample value for a first colour component of a current block is determined.

It should be noted that, the encoding method in embodiments of the disclosure is applied to an encoding apparatus, or an encoding device (can also be referred to as an "encoder" for short) integrating the encoding apparatus. In addition, the encoding method in embodiments of the disclosure can specifically refer to an intra prediction method, and more specifically, to a WCP method.

In embodiments of the disclosure, a video picture can be partitioned into multiple coding blocks, and each coding block can include a first colour component, a second colour component, and a third colour component. The current block herein refers to a coding block on which intra prediction is currently to be performed in the video picture. In addition, assuming that a first colour component of the current block is to be predicted and the first colour component is a luma component, that is, a colour component to-be-predicted is a luma component, the current block can also be called a luma prediction block. Alternatively, assuming that a second colour component of the current block is to be predicted and the second colour component is a chroma component, that is, the colour component to-be-predicted is a chroma component, the current block can also be called a chroma prediction block.

It should be further noted that, in embodiments of the disclosure, reference information for the current block can include a value of a first-colour-component sample in a neighbouring area of the current block and a value of a second-colour-component sample in the neighbouring area of the current block, and these samples can be determined from decoded samples in the neighbouring area of the current block. In some embodiments, the neighbouring area of the current block can include at least one of: a top neighbouring area, a top-right neighbouring area, a left neighbouring area, or a bottom-left neighbouring area.

In some embodiments, the reference sample value for the first colour component of the current block can be determined as follows. The reference sample value for the first colour component of the current block is determined according to a value of a first-colour-component sample in the neighbouring area of the current block.

It should be noted that, in embodiments of the disclosure, the reference sample for the current block can refer to a reference sample neighbouring the current block, and can also be referred to as a first-colour-component sample and a second-colour-component sample in the neighbouring area of the current block, which are referred to as "neighbouring sample" or "reference sample". In addition, in embodiments of the disclosure, the first colour component is a luma component, and the second colour component is a chroma component. In this case, the value of the first-colour-component sample in the neighbouring area of the current block refers to reference luma information corresponding to the reference sample for the current block, and a value of the second-colour-component sample in the neighbouring area of the current block refers to reference chroma information corresponding to the reference sample for the current block.

In some embodiments, in terms of determining the value of the first-colour-component sample, the method can further include the following. The value of the first-colour-component sample is determined by selecting from first-colour-component samples in the neighbouring area.

It should be noted that, among the first-colour-component samples in the neighbouring area, there can be some unimportant samples (for example, these samples have poor correlation) or some abnormal samples. To ensure accuracy of prediction, these samples need to be removed, so as to obtain a value of a valid first-colour-component sample. That is, in embodiments of the disclosure, a first sample set is formed from the first-colour-component samples in the neighbouring area of the current block. In this case, the value of the first-colour-component sample can be determined by selecting from the first sample set.

In an embodiment, the value of the first-colour-component sample can be determined by selecting from the first-colour-component samples in the neighbouring area as follows. A sample position to-be-selected is determined according to a position and/or a colour component intensity of the first-colour-component sample in the neighbouring area. The value of the first-colour-component sample is determined from the neighbouring area according to the sample position to-be-selected.

It should be noted that, in embodiments of the disclosure, the colour component intensity can be represented by colour component information, for example, reference luma information and reference chroma information. Here, a greater value of the colour component information represents a higher colour component intensity. In this way, selection from the first-colour-component samples in the neighbouring area can be performed according to the sample position or according to the colour component intensity, so as to determine a valid first-colour-component sample from the sample thus selected, thereby determining the value of the first-colour-component sample.

In some embodiments, the reference sample value for the first colour component of the current block can be further determined as follows. Second filtering is performed on the value of the first-colour-component sample to obtain a filtered neighbouring sample value for the first colour component of the current block. The reference sample value for the first colour component of the current block is determined according to the filtered neighbouring sample value for the first colour component of the current block. In embodiments of the disclosure, the number of filtered neighbouring sample values for the first colour component of the current block is greater than the number of values of the first-colour-component samples.

In embodiments of the disclosure, the second filtering can be up-sampling filtering. The first colour component is a luma component. In order to ensure that reference luma information is lossless, the reference luma information can remain unchanged, or up-sampling filtering can be performed on the reference luma information.

In some embodiments, the reference sample value for the first colour component of the current block can be further determined as follows. The reference sample value for the first colour component of the current block is determined based on a reconstructed value of a first-reference-colour-component sample in the current block.

In embodiments of the disclosure, the first reference colour component can be a luma component. In this case, the reconstructed value of the first-reference-colour-component sample in the current block is reconstructed luma information of the current block.

Further, in some embodiments, the reference sample value for the first colour component of the current block can be further determined as follows. Third filtering is performed on the reconstructed value of the first-reference-colour-component sample in the current block to obtain a filtered sample value of the first-reference-colour-component sample in the current block. The reference sample value for the first colour component of the current block is determined according to the filtered sample value of the first-reference-colour-component sample in the current block.

In embodiments of the disclosure, the number of filtered sample values of the first-reference-colour-component samples in the current block is greater than the number of reconstructed values of the first-reference-colour-component samples in the current block.

In embodiments of the disclosure, the third filtering can be up-sampling filtering. The first reference colour component is a luma component. In order to ensure that reconstructed luma information of the current block is lossless so as to obtain a more accurate chroma prediction value, the reconstructed luma information of the current block can remain unchanged, or up-sampling filtering can be performed on the reconstructed luma information of the current block.

It can be understood that, in embodiments of the disclosure, the reference sample value for the first colour component of the current block can also be set to luma difference information. Therefore, in a possible implementation, the reference sample value for the first colour component of the current block is set to an absolute value of a difference between the value of the first-colour-component sample and the reconstructed value of the first-reference-colour-component sample.

In another possible implementation, the reference sample value for the first colour component of the current block is set to an absolute value of a difference between the filtered neighbouring sample value for the first colour component and the reconstructed value of the first-reference-colour-component sample.

In another possible implementation, the reference sample value for the first colour component of the current block is set to an absolute value of a difference between the filtered neighbouring sample value for the first colour component and the filtered sample value of the first-reference-colour-component sample.

In another possible implementation, the reference sample value for the first colour component of the current block is set to an absolute value of a difference between the value of the first-colour-component sample and the filtered sample value of the first-reference-colour-component sample.

That is, while keeping the luma information to be lossless, up-sampling filtering can be performed on the reference luma information of the neighbouring area of the current block, or up-sampling filtering can be performed on the reconstructed luma information of the current block, or up-sampling filtering can be performed on both the reference luma information and the reconstructed luma information, or no up-sampling filtering is performed on the reference luma information and the reconstructed luma information. Then, the luma difference information can be determined according to different combinations of the above cases, and the luma difference information is used as the reference sample value for the first colour component of the current block.

S1802, a weighting factor is determined according to the reference sample value for the first colour component of the current block.

It should be noted that, in embodiments of the disclosure, the weighting factor can determined according to the reference sample value for the first colour component of the current block as follows. A value corresponding to the reference sample value for the first colour component in a preset mapping is determined. The weighting factor is set to be equal to the value.

It can be understood that, in embodiments of the disclosure, the reference sample value for the first colour component can be the absolute value of the difference between the filtered neighbouring sample value for the first colour component of the current block and the filtered sample value of the first-reference-colour-component sample in the current block. The first reference colour component is the first colour component, and the first colour component is a colour component different from a second colour component to-be-predicted in embodiments of the disclosure.

It should be noted that, in embodiments of the disclosure, when predicting a chroma component of a sample to-be-predicted in the current block, at least one sample to-be-predicted in the current block can be selected, and a luma difference (represented by $|\Delta Y_k|$) between reconstructed luminance thereof and reference luminance of the neighbouring area is calculated. A smaller $|\Delta Y_k|$ indicates higher similarity between luma values, and the corresponding weighting factor (represented by $w_k$) can be given a greater value; on the contrary, a greater $|\Delta Y_k|$ indicates lower similarity between between luma values, and $w_k$ can be given a smaller value. That is, in the preset mapping, $w_k$ and $|\Delta Y_k|$ are in

approximately inverse proportion.

Further, in some embodiments, the value corresponding to the reference sample value for the first colour component in the preset mapping can be determined as follows. A first factor is determined. A first product value is determined according to the first factor and the reference sample value for the first colour component. A value corresponding to the first product value in the preset mapping is determined.

In an embodiment, the first factor can be determined as follows. The first factor is a preset constant value.

In another embodiment, the first factor can be determined as follows. A value of the first factor can be determined according to a size parameter of the current block.

Further, in some embodiments, the method can further include the following. The value of the first factor is determined according to a preset mapping look-up table between the size parameter of the current block and the value of the first factor.

Here, the size parameter of the current block can include at least one of: a width of the current block, a height of the current block, or a product of the width and the height of the current block.

It should be noted that, in embodiments of the disclosure, the value of the first factor can be set by means of classification. For example, the size parameter of the current block is classified into three categories, and the value of the first factor corresponding to each category is determined. In this case, in embodiments of the disclosure, the mapping look-up table between the size parameter of the current block and the value of the first factor can also be pre-stored, and then the value of the first factor can be determined according to the look-up table. Exemplarily, the foregoing Table 1 shows a correspondence between the first factor and the size parameter of the current block.

In another embodiment, the first factor can be determined as follows. The value of the first factor is determined according to the number of reference samples for the current block.

Further, in some embodiments, the method can further include the following. The value of the first factor is determined according to a preset mapping look-up table between the number of reference samples for the current block and the value of the first factor.

It should be noted that, in embodiments of the disclosure, the number of reference samples can be classified into three categories, and the value of the first factor can also be set by means of classification. For example, the number of reference samples for the current block is classified into three categories, and the value of the first factor corresponding to each category is determined. In this case, in embodiments of the disclosure, the mapping look-up table between the number of reference samples for the current block and the value of the first factor can also be pre-stored, and then the value of the first factor can be determined according to the look-up table. Exemplarily, the foregoing Table 2 shows a correspondence between the first factor and the number of reference samples for the current block.

Further, for the first product value, the first product value can be determined according to the first factor and the reference sample value for the first colour component as follows. The first product value is set to be equal to a product of the first factor and the reference sample value for the first colour component. Alternatively, the first product value is set to be equal to a numerical value obtained by right-shifting the reference sample value for the first colour component, where the number of bits right shifted is equal to the first factor. Alternatively, the first product value is set to a value obtained by performing addition and bit shift on the reference sample value for the first colour component according to the first factor.

Exemplarily, assuming that the first factor is equal to 0.25, and the reference sample value for the first colour component is represented by Ref, then the first product value can be equal to $0.25 \times Ref$, and $0.25 \times Ref$ can also be represented by Ref/4, that is, $Ref>>2$. In addition, in fixed-point calculation, a floating-point number can be converted into addition and shift operations. That is, there is no limitation on the manner for calculation of the first product value.

It can also be understood that, in embodiments of the disclosure, the first reference colour component can also be a chroma component, that is, at least one sample to-be-predicted in the current block is selected, and a chroma difference (represented by $|\Delta C_k|$) between reconstructed chrominance thereof and reference chrominance of the neighbouring area is calculated. A smaller $|\Delta C_k|$ indicates higher similarity between chroma values, and the corresponding weighting factor (represented by $w_k$) can be given a greater value; on the contrary, a greater $|\Delta C_k|$ indicates lower similarity between chroma values, and $w_k$ can be given a smaller value. That is, when calculating the weighting factor, the reference sample value for the first colour component can also be $|\Delta C_k|$, and then the weighting factor can be calculated.

To summarize, in embodiments of the disclosure, the reference sample value for the first colour component can be $|\Delta C_k|$, that is, an absolute value of the chroma difference. Alternatively, the reference sample value for the first colour component can be $|\Delta Y_k|$, that is, an absolute value of the luma difference. Alternatively, the reference sample value for the first colour component can be $|\alpha \Delta Y_k|$, that is, a product of the absolute value of the luma difference and a preset multiplier. Here, the preset multiplier is a second factor described in embodiments of the disclosure.

Further, for the second factor, in an embodiment, the method can include the following. The second factor is determined by performing least squares calculation on a first-colour-component value of the reference sample and a second-colour-component value of the reference sample.

That is, assuming that the number of reference samples is N, the first-colour-component value of the reference sample is the reference luma information for the current block, and the second-colour-component value of the reference sample is the reference chroma information for the current block, then least squares calculation can be performed on chroma component values and luma component values of the $N$ reference samples, so as to obtain the second factor. Exemplarily, the least squares regression calculation can be as illustrated in formula (5) above, and then the second factor can be calculated.

In addition, for the preset mapping, in some embodiments, the preset mapping can be a Softmax function, as illustrated in the foregoing formula (6) or formula (7). The Softmax function is normalized exponential function. However, in embodiments of the disclosure, normalization may not be needed, and the value thereof is not limited to the range of [0, 1].

It should be further noted that, for the preset mapping, in addition to the Softmax function, in other embodiments, the preset mapping can be a weighting function that is in inverse proportion with the reference sample value for the first colour component, as illustrated in the foregoing formula (8) or formula (9).

In this way, the preset mapping can be as illustrated in formula (4), or can be as illustrated in formula (6) or formula (7), or can be as illustrated in formula (8) or formula (9), or can even be another function model of the weighting factor that is constructed by fitting the tendency that higher similarity between the reference luma value of the reference sample and the reconstructed luma value of the sample to-be-predicted in the current block leads to higher importance of a reference chroma value of the reference sample to the sample to-be-predicted in the current block. Embodiments of the disclosure are not limited in this regard.

In this way, the weighting factor can be determined according to the reference sample value (such as $|\Delta Y_{kij}|$) for the first colour component, and the weighting factor can specifically include $N$ weighting factors, namely $w_1$, $w_2$, ..., $w_N$, where $N$ indicates the number of reference sample values for the second colour component. Here, theoretically, the sum of the $N$ weighting factors is equal to 1, and each of the weighting factors is a value greater than or equal to 0 and less than or equal to 1.

S1803, a first prediction block for the second colour component of the current block is determined according to the weighting factor and a reference sample value for the second colour component of the current block.

It should be noted that, in embodiments of the disclosure, in order to ensure that the luma information is lossless, chroma prediction is performed on each reconstructed luma position in the current block, so that the size of the first prediction block obtained is greater than the size of the current block, that is, the number of prediction values of the second colour component of the first prediction block is greater than the number of second-colour-component samples in the current block.

It should be further noted that, in embodiments of the disclosure, in terms of determining the reference sample value for the second colour component of the current block, the method can further include the following. The reference sample value for the second colour component of the current block is determined according to a value of a second-colour-component sample in the neighbouring area of the current block. Here, the neighbouring area can include at least one of: a top neighbouring area, a top-right neighbouring area, a left neighbouring area, or a bottom-left neighbouring area.

In an embodiment, the method can further include the following. Fourth filtering is performed on the value of the second-colour-component sample in the neighbouring area of the current block, to obtain a filtered neighbouring sample value for the second colour component of the current block. The reference sample value for the second colour component of the current block is determined according to the filtered neighbouring sample value for the second colour component of the current block. In embodiments of the disclosure, the number of filtered neighbouring sample values for the second colour component of the current block is greater than the number of values of the second-colour-component samples in the neighbouring area of the current block.

In embodiments of the disclosure, the fourth filtering can be up-sampling filtering, and an up-sampling rate is a positive integer multiple of 2.

Specifically, the first colour component is a luma component, and the second colour component is a chroma component. In order to ensure that the reference luma information is lossless, up-sampling filtering can also be performed on reference chroma information. Exemplarily, for a $2M \times 2N$ current block in a YUV420 format, a chroma block size thereof is $M \times N$, and the amount of reference chroma information of the neighbouring area is $M+N$. 2M+2N chroma reference sample values can be obtained after up-sampling filtering, then $2M \times 2N$ chroma prediction values can be obtained by means of weighted prediction, and subsequently, down-sampling filtering is performed to obtain $M \times N$ chroma prediction values as final prediction values. It should be noted that, for a $2M \times 2N$ current block in a YUV420 format where the chroma block size thereof is $M \times N$ and the amount of reference chroma information of the neighbouring area is $M+N$, it is also feasible to use only the M+N reference chroma information, and as such, $2M \times 2N$ chroma prediction values are obtained by using the weighting factor, and then down-sampling filtering is performed to obtain $M \times N$ chroma prediction values as final prediction values. In addition, for a $2M \times 2N$ current block in a YUV420 format, the chroma block size thereof is $M \times N$, and the amount of reference chroma information of the neighbouring area is M+N, then 4M+4N chroma reference sample values are obtained after up-sampling filtering. Alternatively, for a $2M \times 2N$ current block in a YUV444 format, the chroma block size thereof is $2M \times 2N$, the amount of reference chroma information of the neighbouring area is $2M \times 2N$, then 4M+4N chroma reference sample values are obtained after up-sampling filtering. Then, $M \times N$ chroma prediction values can also be obtained as final prediction values through weighted prediction according to these chroma reference sample values and down-sampling filtering, which is not limited herein.

It should be further noted that, in embodiments of the disclosure, no matter whether it is the second filtering performed on the value of the first-colour-component sample in the neighbouring area, or the third filtering performed on the reconstructed value of the first-reference-colour-component sample in the current block, or even the fourth filtering performed on the value of the second-colour-component sample in the neighbouring area, all the three types of filtering can be up-sampling filtering. The second filtering can be performed by using a first filter, the third filtering can be performed by using a second filter, and the fourth filtering can be performed by using a third filter. Here, for the three filters, the first filter, the second filter, and the third filter can all be up-sampling filters. Due to different data to-be-processed, up-sampling rates of these filters can also be different, and therefore, the three filters can be the same or different. In addition, the first filter, the second filter, and the third filter can all be neural-network filters. Embodiments of the disclosure are not limited in this regard.

It can be understood that, since the spatial resolution of the value (namely, reference luma information) of the first-colour-component sample in the neighbouring area, the spatial resolution of the value (namely, reference chroma information) of the second-colour-component sample in the neighbouring area, and even the spatial resolution of the reconstructed value (namely, reconstructed luma information) of the first-reference-colour-component sample in the current block will be affected by colour format information, the second filtering, the third filtering, or the fourth filtering can also be performed according to the current colour format information. Taking the fourth filtering as an example below, in some embodiments, the method can further include the following. Based on the colour format information, the fourth filtering is performed on the value of the second-colour-component sample in the neighbouring area of the current block, to obtain the filtered neighbouring sample value for the second colour component of the current block.

In an embodiment, for the fourth filtering, the method can further include the following. If the colour format information indicates 4:2:0 sampling, up-sampling filtering is performed on the value of the second-colour-component sample in the neighbouring area of the current block, where an up-sampling rate is a positive integer multiple of 2.

It should be noted that, in embodiments of the disclosure, if the colour format information indicates that the spatial resolution of the luminance is equal to the spatial resolution of the chrominance (such as a YUV444 format), no operation needs to be performed on the reference chroma information. If the colour format information indicates that the spatial resolution of the luminance is inconsistent with the spatial resolution of the chrominance (such as a video with chroma sub-sampling characteristics such as a 4:2:2 format/4:1:1 format/4:2:0 format), and the spatial resolution of the chroma component is lower than the spatial resolution of the luma component, then up-sampling filtering needs to be performed on the reference chroma information obtained from the neighbouring area.

Further, after the reference sample value for the second colour component of the current block is determined, in some embodiments, for S1803, the first prediction block for the second colour component of the current block can be determined according to the weighting factor and the reference sample value for the second colour component of the current block as follows. A weighted value obtained by multiplying the reference sample value for the second colour component by a corresponding weighting factor is determined. A prediction value of a second-colour-component sample in the first prediction block is set to be equal to a sum of N weighted values, where N represents the number of reference sample values for the second colour component, and N is a positive integer.

That is, if the number of the reference sample values for the second colour component is N, a weighted value (namely $w_k C_k$) obtained by multiplying each reference sample value for the second colour component by a corresponding weighting factor is firstly determined, and then the sum of the N weighted values is used as the prediction value of the second-colour-component sample in the prediction block. Specifically, the formula for calculation is illustrated in the foregoing formula (16). It should be noted that, in this way, it is conducive to parallel processing and higher calculation speed.

It can also be understood that, when performing up-sampling filtering on both the reference luma information and the reference chroma information of the neighbouring area of the current block, the method can further include the following. Based on the colour format information, the second filtering is performed on the value of the first-colour-component sample in the neighbouring area of the current block according to a first horizontal up-sampling factor and a first vertical up-sampling factor, to obtain the filtered neighbouring sample value for the first colour component of the current block; and the fourth filtering is performed on the value of the second-colour-component sample in the neighbouring area of the current block according to a second horizontal up-sampling factor and a second vertical up-sampling factor, to obtain the filtered neighbouring sample value for the second colour component of the current block.

In a possible implementation, the method can further include the following. If the colour format information indicates 4:4:4 sampling, determine that the second horizontal up-sampling factor is equal to the first horizontal up-sampling factor, and the second vertical up-sampling factor is equal to the first vertical up-sampling factor. If the colour format information indicates 4:2:2 sampling, determine that the second horizontal up-sampling factor is equal to twice the first horizontal up-sampling factor, and the second vertical up-sampling factor is equal to the first vertical up-sampling factor. If the colour format information indicates 4:1:1 sampling, determine that the second horizontal up-sampling factor is equal to four times the first horizontal up-sampling factor, and the second vertical up-sampling factor is equal to the first vertical up-sampling factor. If the colour format information indicates 4:2:0 sampling, determine that the second horizontal up-sampling factor is equal to twice the first horizontal up-sampling factor, and the second vertical up-sampling factor is equal to twice the first vertical up-sampling factor.

It should be noted that, in embodiments of the disclosure, up-sampling filtering is performed on the reference luma information, and as such, the luma information is lossless. In this case, since in a YUV video, the spatial resolution of the luma component is always greater than or equal to the spatial resolution of the chroma component, up-sampling filtering needs to be performed on the reference chroma information so as to make the spatial resolution of the reference chroma information be consistent with the spatial resolution of the reference luma information. In this case, a spatial up-sampling rate (the second horizontal up-sampling factor and the second vertical up-sampling factor) of the reference chroma information needs to be determined according to the YUV video format and a spatial up-sampling rate (the first horizontal up-sampling factor and the first vertical up-sampling factor) of the reference luma information.

It can also be understood that, if up-sampling filtering is not to be performed on the reconstructed luma information of the current block, the size of the first prediction block can be derived according to the YUV video format. Therefore, in another possible implementation, the method can further include the following. If the colour format information indicates 4:4:4 sampling, determine that a width of the first prediction block is equal to a width of the current block, and a height of the first prediction block is equal to a height of the current block. If the colour format information indicates 4:2:2 sampling, determine that the width of the first prediction block is equal to twice the width of the current block, and the height of the first prediction block is equal to the height of the current block. If the colour format information indicates 4:1:1 sampling, determine that the width of the first prediction block is equal to four times the width of the current block, and the height of the first prediction block is equal to the height of the current block. If the colour format information indicates 4:2:0 sampling, determine that the width of the first prediction block is equal to twice the width of the current block, and the height of the first prediction block is equal to twice the height of the current block.

It can also be understood that, when up-sampling filtering is to be performed on the reconstructed luma information of the current block, the size of the first prediction block can be derived according to the YUV video format and a spatial up-sampling rate of the luminance of the current block after performing luma up-sampling on the current block. In this case, the method can further include the following. Based on the colour format information, the third filtering is performed on the reconstructed value of the first-reference-colour-component sample in the current block according to a third horizontal up-sampling factor and a third vertical up-sampling factor, to obtain the filtered sample value of the first-reference-colour-component sample in the current block.

In another possible implementation, the method can further include the following. If the colour format information indicates 4:4:4 sampling, determine that the width of the first prediction block is equal to a product of the width of the current block and the third horizontal up-sampling factor, and the height of the first prediction block is equal to a product of the height of the current block and the third vertical up-sampling factor. If the colour format information indicates 4:2:2 sampling, determine that the width of the first prediction block is equal to twice the product of the width of the current block and the third horizontal up-sampling factor, and the height of the first prediction block is equal to the product of the height of the current block and the third vertical up-sampling factor. If the colour format information indicates 4:1:1 sampling, determine that the width of the first prediction block is equal to four times the product of the width of the current block and the third horizontal up-sampling factor, and the height of the first prediction block is equal to the product of the height of the current block and the third vertical up-sampling factor. If the colour format information indicates 4:2:0 sampling, determine that the width of the first prediction block is equal to twice the product of the width of the current block and the third horizontal up-sampling factor, and the height of the first prediction block is equal to twice the product of the height of the current block and the third vertical up-sampling factor.

It should be noted that, in embodiments of the disclosure, the width of the first prediction block is represented by $predSizeW$, the height of the first prediction block is represented by $predSizeH$, the width of the current block is represented by $nTbW$, and the height of the current block is represented by $nTbH$. In this way, for the first prediction block obtained according to the foregoing method, $predSizeH$ is greater than or equal to the height $nTbH$ of the current block, or $predSizeW$ is greater than or equal to the width $nTbW$ of the current block, that is, the number of prediction values of the second colour component of the first prediction block is greater than the number of second-colour-component samples in the current block.

S1804, first filtering is performed on the first prediction block to determine a second prediction block for the second colour component of the current block.

S1805, a residual value of a second-colour-component sample in the current block is determined according to the second prediction block.

It should be noted that, in embodiments of the disclosure, the first filtering can be down-sampling filtering. As such, for the second prediction block subject to down-sampling filtering, the number of prediction values of the second colour component of the second prediction block is the same as the number of second-colour-component samples in the current block.

In a possible implementation, the first filtering can be performed on the first prediction block to determine the second prediction block for the second colour component of the current block as follows. Down-sampling filtering is performed on the first prediction block by using a preset filter, to determine the second prediction block for the second colour component of the current block.

It should be further noted that, in embodiments of the disclosure, the preset filter can be a down-sampling filter. In addition, the down-sampling filter herein can be a neural-network filter, and embodiments of the disclosure are not limited in this regard.

In another possible implementation, the first filtering can be performed on the first prediction block to determine the second prediction block for the second colour component of the current block as follows. A horizontal down-sampling factor and a vertical down-sampling factor are determined. Down-sampling filtering is performed on the first prediction block according to the horizontal down-sampling factor and the vertical down-sampling factor, to obtain the second prediction block for the second colour component of the current block.

In an embodiment, down-sampling filtering can be performed on the first prediction block according to the horizontal down-sampling factor and the vertical down-sampling factor to obtain the second prediction block for the second colour component of the current block as follows. If the horizontal down-sampling factor is greater than 1 or the vertical down-sampling factor is greater than 1, down-sampling filtering is performed on the first prediction block to obtain the second prediction block.

In embodiments of the disclosure, performing down-sampling filtering on the first prediction block can include at least one of: performing down-sampling filtering on the first prediction block in a horizontal direction; performing down-sampling filtering on the first prediction block in a vertical direction; performing down-sampling filtering on the first prediction block in a horizontal direction and then in a vertical direction; or performing down-sampling filtering on the first prediction block in a vertical direction and then in a horizontal direction.

Here, the horizontal down-sampling factor can be calculated according to the width of the first prediction block and the width of the current block, and the vertical down-sampling factor can be calculated according to the height of the first prediction block and the height of the current block. Then, down-sampling filtering is performed on the first prediction block according to the horizontal down-sampling factor and the vertical down-sampling factor. Specifically, if the horizontal down-sampling factor is greater than 1 and the vertical down-sampling factor is equal to 1, only horizontal down-sampling needs to be performed on the first prediction block. If the horizontal down-sampling factor is equal to 1 and the vertical down-sampling factor is greater than 1, only vertical down-sampling needs to be performed on the first prediction block. If the horizontal down-sampling factor is greater than 1 and the vertical down-sampling factor is greater than 1, both horizontal down-sampling and vertical down-sampling need to be performed on the first prediction block. Firstly horizontal down-sampling and then vertical down-sampling can be performed, or firstly vertical down-sampling and then horizontal down-sampling can be performed, or the down-sampling operation herein can even be replaced by a convolution operation in a neural network structure, which is not limited in embodiments of the disclosure.

It should also be noted that, for the first filtering, down-sampling filtering can also be performed at some sampling interval, for example, a two-dimensional filter or a one-dimensional filter. The one-dimensional filter can be implemented "firstly in a vertical direction and then in a horizontal direction", or can be implemented "firstly in a horizontal direction and then in a vertical direction", or can be implemented in a fixed filtering order, or can even be implemented in a flexible filtering order (for example, a filtering order indicated by identifier information, an order related to prediction mode or block size, etc.), and embodiments of the disclosure are not limited in this regard.

In addition, in some embodiments, in terms of performing the first filtering on the first prediction block to determine the second prediction block for the second colour component of the current block, the method can further include the following. Weighted sum calculation is performed on every preset number of prediction values of the second colour component of the first prediction block in a horizontal direction and/or a vertical direction according to the horizontal down-sampling factor and the vertical down-sampling factor, to obtain the second prediction block.

Here, weighted sum calculation can be performed on every preset number of prediction values of the second colour component of the first prediction block in a horizontal direction and/or a vertical direction to obtain the second prediction block as follows. Weighted sum calculation is performed on every horizontal down-sampling factor number of prediction values of the second colour component of the first prediction block in a horizontal direction, to obtain the second prediction block. Alternatively, weighted sum calculation is performed on every vertical down-sampling factor number of prediction values of the second colour component of the first prediction block in a vertical direction, to obtain the second prediction block. Alternatively, weighted sum calculation is performed on every horizontal down-sampling factor number of prediction values of the second colour component of the first prediction block in a horizontal direction, and weighted sum calculation is performed on every vertical down-sampling factor number of prediction values of the second colour component of the first prediction block in a vertical direction, to obtain the second prediction block.

That is, in embodiments of the disclosure, instead of taking the horizontal down-sampling factor and vertical the down-sampling factor into consideration, weighted sum calculation can be performed on every preset number of chroma prediction values in a direction (vertical direction or horizontal direction) in which down-sampling is to be performed. In particular, if weight values of the chroma prediction values are equal, weighted sum calculation on every preset number of chroma prediction values can also be understood as calculating a mean value of the preset number of chroma prediction values and taking the mean value as a prediction value subject to down-sampling filtering.

Further, in some embodiments, the method can further include the following. The weighting factor is determined according to a reference sample value for a first colour component of some samples in the first prediction block. The second prediction block for the second colour component of the current block is determined according to the weighting factor and a reference sample value for a second colour component of some samples in the first prediction block.

In an embodiment, the second prediction block for the second colour component of the current block can be determined according to the weighting factor and the reference sample value for the second colour component of some samples in the first prediction block as follows. A prediction value of a second colour component of a sample at position $(x, y)$ in the current block is obtained by multiplying a reference sample value for a second colour component of a sample at position $(i, j)$ in the first prediction block by the weighting factor, where $i, j, x,$ and $j$ are integers greater than or equal to zero.

It should be noted that, in embodiments of the disclosure, in order to reduce complexity of calculation, up-sampling filtering on the reconstructed luma information of the current block is eliminated. In this case, instead of performing collocated chroma sample prediction on reconstructed luma information at all luma positions in the current block, some of the luma positions can be selected to predict collocated chroma samples, so that down-sampling filtering can be eliminated after the prediction block is obtained, which can ensure accuracy of existing luma information. With accurate luma information, it is beneficial to improving accuracy and stability of a nonlinear mapping model, thereby improving accuracy of a chroma prediction value.

In such implementation, in order to reduce subsequent up-sampling or down-sampling operations on the prediction block, a corresponding position can be selected for chroma prediction according to characteristics of a YUV video format. Assuming that a position of a current luma sample is $CurRecLuma(i, j),$ then a position of a sample on which chroma prediction is to be performed is $CurPredChroma(x, y).$ In this case, in some embodiments, the method can further include the following. If the colour format information indicates 4:4:4 sampling, $x$ is set to be equal to $i,$ and $y$ is set to be equal to $j.$ If the colour format information indicates 4:2:2 sampling, $x$ is set to be equal to a product of i and 2, and $y$ is set to be equal to $j.$ If the colour format information indicates 4:1:1 sampling, $x$ is set to be equal to a product of $i$ and 4, and $y$ is set to be equal to $j.$ If the colour format information indicates 4:2:0 sampling, $x$ is set to be equal to a product of $i$ and 2, and $y$ is set to be equal to a product of $j$ and 2.

Further, in some embodiments, the method can further include the following. A horizontal sampling position factor and a vertical sampling position factor are determined. $x$ is set to be equal to a product of $i$ and the horizontal sampling position factor, and $y$ is set to be equal to a product of $j$ and the vertical sampling position factor.

That is, in order to further reduce complexity of calculation during prediction, fewer collocated chroma samples can be selected for prediction. Assuming that the position of the current luma sample is $CurRecLuma(i, j),$ then the position of the sample on which chroma prediction is to be performed is $CurPredChroma(x, y).$ Assuming that a horizontal sampling position factor of the reconstructed luma information of the current block is $S\_Pos\_Hor,$ and a vertical sampling position factor of the reconstructed luma information of the current block is $S\_Pos\_Ver,$ then a relationship between the position of the current luma sample and the position of the sample on which chroma prediction is to be performed is as follows. If the colour format information indicates a video in a YUV444 format/YUV422 format/YUV411 format/YUV420 format, x can be set to be equal to a product of i and $S\_Pos\_Hor,$ and y can be set to be equal to a product of $j$ and $S\_Pos\_Ver.$

Further, after the second prediction block is determined, in some cases, post-processing is needed for the second prediction block to obtain a final second prediction block. Therefore, in some embodiments, the method can further include the following. After determining the second prediction block for the second colour component of the current block, related processing is performed on the second prediction block and the processed second prediction block is taken as the second prediction block.

In embodiments of the disclosure, performing related processing on the second prediction block includes at least one of: performing third filtering on the second prediction block; refining the second prediction block by using a preset compensation value; or performing weighted average calculation on the second prediction block by using a prediction value of the second colour component of the current block in at least one prediction mode.

That is, for related processing of the second prediction block, in order to reduce the instability caused by sample-by-sample parallel prediction in WCP, smoothing filtering can be performed on the second prediction block, and then the processed second prediction block is taken as the final second prediction block. Alternatively, in order to further improve accuracy of a WCP prediction value, position-related refinement can be performed on the second prediction block. For example, a chroma compensation value for each sample to-be-predicted is calculated by using a reference sample that is near in spatial position, the prediction block is refined by using the chroma compensation value, and the refined prediction value is used as the final chroma prediction value. Alternatively, in order to further improve accuracy of a WCP prediction value, weighted average calculation can be performed on a chroma prediction value(s) calculated in another prediction mode(s) and a chroma prediction value calculated in WCP, and the weighted result is used as the final chroma prediction value. Alternatively, in order to improve prediction performance of WCP, a neural network model can be used to refine the chroma prediction value calculated in WCP, and embodiments of the disclosure are not limited in this regard.

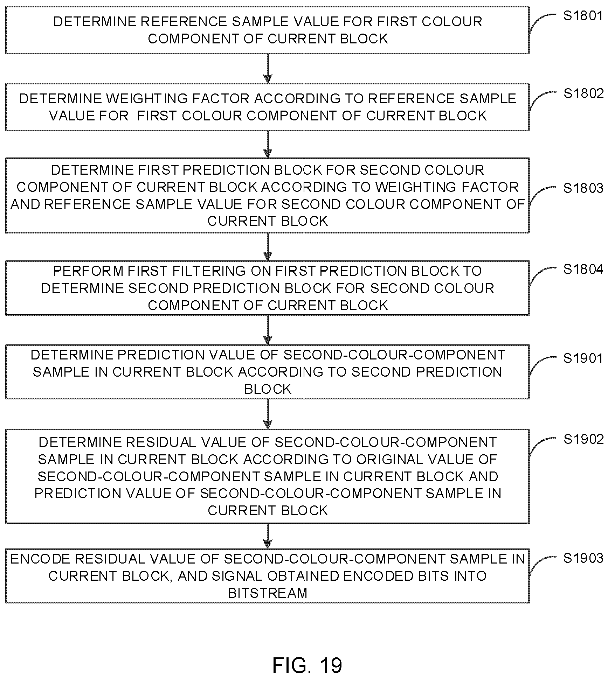

In some embodiments, as illustrated in FIG. 19, after the second prediction block is determined in S1804, the method can further include the following.

S1901, a prediction value of the second-colour-component sample in the current block is determined according to the second prediction block.

S1902, the residual value of the second-colour-component sample in the current block is determined according to an original value of the second-colour-component sample in the current block and the prediction value of the second-colour-component sample in the current block.

S1903, the residual value of the second-colour-component sample in the current block is encoded, and encoded bits obtained are signalled into a bitstream.

It should be noted that, in embodiments of the disclosure, the prediction value of the second-colour-component sample in the current block can be determined according to the second prediction block as follows. The prediction value of the second-colour-component sample in the current block can be set to be equal to a value of the second prediction block. Alternatively, up-sampling filtering can be performed on the value of the second prediction block, and the prediction value of the second-colour-component sample in the current block can be set to be equal to an output value after up-sampling filtering.

It should also be noted that, after the prediction value of the second-colour-component sample in the current block is determined, the residual value of the second-colour-component sample can be determined according to the original value of the second-colour-component sample and the prediction value of the second-colour-component sample. Specifically, the residual value of the second-colour-component sample can be determined by performing subtraction calculation on the original value of the second-colour-component sample and the prediction value of the second-colour-component sample. In this way, after the residual value of the second-colour-component sample is signalled into the bitstream, at a decoding end, the residual value of the second-colour-component sample can be obtained by decoding, so as to restore the reconstructed value of the second-colour-component sample in the current block.

As can be seen, during prediction in a WCP mode, chroma prediction is performed by using lossless luma information, which mainly includes three aspects. On one hand, luma information of a reference sample and luma information of the current block are fully utilized, so as to realize calculation of a weighting factor of chrominance of the reference sample. On the other hand, importance of existing luma information is fully taken into consideration, so that a more accurate nonlinear mapping model is constructed without loss of luma information, so as to allocate a weight to the reference chroma sample to perform weighted prediction. On the other hand, when performing up-sampling on reference chrominance and performing collocated chroma prediction according to each luma sample position in the current block, characteristics of various YUV video formats are fully taken into consideration, and consistency between the spatial resolution of the chroma component and the spatial resolution of the luma component are always ensured according to chroma subsampling formats and luma up-sampling factors of different YUV videos. The existing lossless luma information is fully utilized to perform collocated chroma prediction, so as to improve accuracy of a chroma prediction value in the WCP mode.

Embodiments of the disclosure further provide an encoding method. The reference sample value for the first colour component of the current block is determined. The weighting factor is determined according to the reference sample value for the first colour component of the current block. The first prediction block for the second colour component of the current block is determined according to the weighting factor and the reference sample value for the second colour component of the current block, where the number of prediction values of the second colour component of the first prediction block is greater than the number of second-colour-component samples in the current block. First filtering is performed on the first prediction block to determine the second prediction block for the second colour component of the current block. The residual value of the second-colour-component sample in the current block is determined according to the second prediction block. In this way, with aid of the reference sample neighbouring the current block and colour component information of the current block, existing colour component information is taken into consideration so that a more accurate nonlinear mapping model can be constructed without loss of luma information so as to allocate a weight to each reference sample value for the chroma component for weighted prediction, in addition, different colour format information is also taken into consideration when performing the first filtering, and chroma and/or luma sampling filtering is performed according to different colour format information, which can ensure that the spatial resolution of the chroma component is consistent with the spatial resolution of the luma component. As such, accuracy of existing luma information is ensured, and with aid of accurate luma information, it is beneficial to improving accuracy and stability of a nonlinear mapping model when performing chroma component prediction by using lossless luma information, thereby improving accuracy of chroma prediction, saving bit-rate, and improving coding performance.

In another embodiment of the disclosure, embodiments of the disclosure further provide a bitstream. The bitstream is generated by performing bit encoding according to information to-be-encoded; The information to-be-encoded at least includes a residual value of a second-colour-component sample in a current block.

In embodiments of the disclosure, after the residual value of the second-colour-component sample in the current block is transmitted to a decoding end from encoding end, at the decoding end, the residual value of the second-colour-component sample is obtained by decoding, and then a reconstructed value of the second-colour-component sample in the current block can be restored according to a prediction value of the second-colour-component sample in the current block, and as such, not only existing colour component information but also different colour format information is taken into consideration. In this way, accuracy of existing luma information is ensured, and with aid of accurate luma information, it is beneficial to improving accuracy and stability of a nonlinear mapping model when performing prediction on a chroma component by using lossless luma information, which can improve accuracy of chroma prediction, save bit-rate, and improve coding performance.

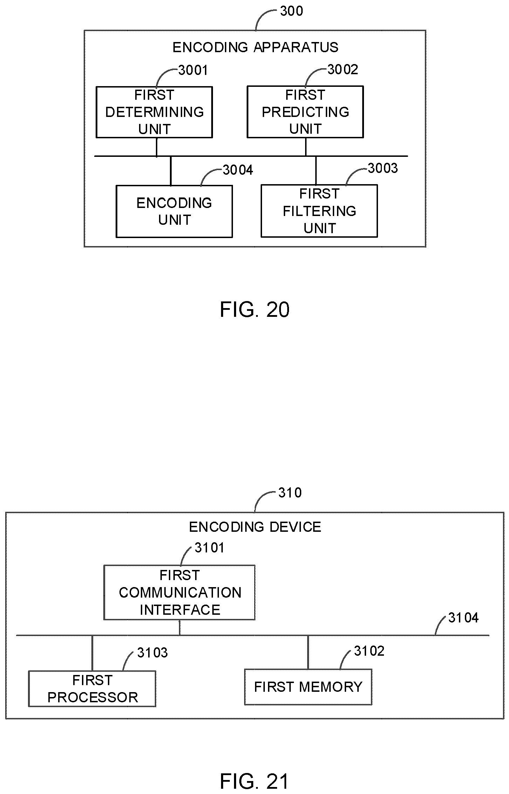

In still another embodiment of the disclosure, based on the same concept as the foregoing embodiment, referring to FIG. 20, FIG. 20 is a schematic structural diagram of an encoding apparatus 300 provided in embodiments of the disclosure. As illustrated in FIG. 20, the encoding apparatus 300 can include a first determining unit 3001, a first predicting unit 3002, and a first filtering unit 3003. The first determining unit 3001 is configured to determine a reference sample value for a first colour component of a current block, and determine a weighting factor according to the reference sample value for the first colour component of the current block. The first predicting unit 3002 is configured to determine a first prediction block for a second colour component of the current block according to the weighting factor and a reference sample value for the second colour component of the current block, where the number of prediction values of the second colour component of the first prediction block is greater than the number of second-colour-component samples in the current block. The first filtering unit 3003 is configured to perform first filtering on the first prediction block to determine a second prediction block for the second colour component of the current block. The first determining unit 3001 is further configured to determine a residual value of the second-colour-component sample in the current block according to the second prediction block.

In some embodiments, the number of prediction values of the second colour component of the second prediction block is the same as the number of second-colour-component samples in the current block.

In some embodiments, the first determining unit 3001 is further configured to determine the reference sample value for the first colour component of the current block according to a value of a first-colour-component sample in a neighbouring area of the current block, where the neighbouring area includes at least one of: a top neighbouring area, a top-right neighbouring area, a left neighbouring area, or a bottom-left neighbouring area.

In some embodiments, the first determining unit 3001 is further configured to determine the value of the first-colour-component sample by selecting from first-colour-component samples in the neighbouring area.

In some embodiments, the first determining unit 3001 is further configured to determine a sample position to-be-selected according to a position and/or a colour component intensity of the first-colour-component sample in the neighbouring area; and determine the value of the first-colour-component sample from the neighbouring area according to the sample position to-be-selected.

In some embodiments, the first filtering unit 3003 is further configured to perform second filtering on the value of the first-colour-component sample to obtain a filtered neighbouring sample value for the first colour component of the current block; and determine the reference sample value for the first colour component of the current block according to the filtered neighbouring sample value for the first colour component of the current block.

In some embodiments, the number of filtered neighbouring sample values for the first colour component of the current block is greater than the number of values of the first-colour-component samples.

In some embodiments, the first determining unit 3001 is further configured to determine the reference sample value for the first colour component of the current block based on a reconstructed value of a first-reference-colour-component sample in the current block.

In some embodiments, the reference sample value for the first colour component of the current block is set to an absolute value of a difference between the value of the first-colour-component sample and the reconstructed value of the first-reference-colour-component sample.

In some embodiments, the reference sample value for the first colour component of the current block is set to an absolute value of a difference between the filtered neighbouring sample value for the first colour component and the reconstructed value of the first-reference-colour-component sample.

In some embodiments, the first filtering unit 3003 is further configured to perform third filtering on a reconstructed value of a first-reference-colour-component sample in the current block to obtain a filtered sample value of the first-reference-colour-component sample in the current block; and determine the reference sample value for the first colour component of the current block according to the filtered sample value of the first-reference-colour-component sample in the current block.

In some embodiments, the number of filtered sample values of the first-reference-colour-component samples in the current block is greater than the number of reconstructed values of the first-reference-colour-component samples in the current block.

In some embodiments, the reference sample value for the first colour component of the current block is set to an absolute value of a difference between a filtered neighbouring sample value for the first colour component and the filtered sample value of the first-reference-colour-component sample.

In some embodiments, the reference sample value for the first colour component of the current block is set to an absolute value of a difference between the value of the first-colour-component sample and the filtered sample value of the first-reference-colour-component sample.

In some embodiments, the first determining unit 3001 is further configured to determine a value corresponding to the reference sample value for the first colour component in a preset mapping; and set the weighting factor to be equal to the value.

In some embodiments, the first determining unit 3001 is further configured to determine a first factor; determine a first product value according to the first factor and the reference sample value for the first colour component; and determine a value corresponding to the first product value in the preset mapping.

In some embodiments, the first factor is a preset constant value.

In some embodiments, the first determining unit 3001 is further configured to determine a value of the first factor according to a size parameter of the current block, where the size parameter of the current block includes at least one of: a width of the current block or a height of the current block.

In some embodiments, the preset mapping is a Softmax function.

In some embodiments, the preset mapping is a weighting function that is in inverse proportion with the reference sample value for the first colour component.

In some embodiments, the first determining unit 3001 is further configured to determine the reference sample value for the second colour component of the current block according to a value of a second-colour-component sample in a neighbouring area of the current block.

In some embodiments, the first filtering unit 3003 is further configured to perform fourth filtering on the value of the second-colour-component sample in the neighbouring area of the current block, to obtain a filtered neighbouring sample value for the second colour component of the current block; and determine the reference sample value for the second colour component of the current block according to the filtered neighbouring sample value for the second colour component of the current block.

In some embodiments, the number of filtered neighbouring sample values for the second colour component of the current block is greater than the number of values of the second-colour-component samples in the neighbouring area of the current block.

In some embodiments, the fourth filtering is up-sampling filtering, where an up-sampling rate is a positive integer multiple of 2.

In some embodiments, the first filtering unit 3003 is further configured to perform fourth filtering on the value of the second-colour-component sample in the neighbouring area of the current block based on colour format information, to obtain the filtered neighbouring sample value for the second colour component of the current block.

In some embodiments, the first filtering unit 3003 is further configured to perform up-sampling filtering on the value of the second-colour-component sample in the neighbouring area of the current block if the colour format information indicates 4:2:0 sampling, where an up-sampling rate is a positive integer multiple of 2.

In some embodiments, the first filtering unit 3003 is further configured to perform second filtering on a value of a first-colour-component sample in the neighbouring area of the current block according to a first horizontal up-sampling factor and a first vertical up-sampling factor, to obtain a filtered neighbouring sample value for the first colour component of the current block; and perform fourth filtering on the value of the second-colour-component sample in the neighbouring area of the current block according to a second horizontal up-sampling factor and a second vertical up-sampling factor, to obtain a filtered neighbouring sample value for the second colour component of the current block. The first determining unit 3001 is further configured to: determine that the second horizontal up-sampling factor is equal to the first horizontal up-sampling factor, and the second vertical up-sampling factor is equal to the first vertical up-sampling factor when the colour format information indicates 4:4:4 sampling; determine that the second horizontal up-sampling factor is equal to twice the first horizontal up-sampling factor, and the second vertical up-sampling factor is equal to the first vertical up-sampling factor when the colour format information indicates 4:2:2 sampling; determine that the second horizontal up-sampling factor is equal to four times the first horizontal up-sampling factor, and the second vertical up-sampling factor is equal to the first vertical up-sampling factor when the colour format information indicates 4:1:1 sampling; determine that the second horizontal up-sampling factor is equal to twice the first horizontal up-sampling factor, and the second vertical up-sampling factor is equal to twice the first vertical up-sampling factor when the colour format information indicates 4:2:0 sampling.

In some embodiments, the first determining unit 3001 is further configured to: determine that a width of the first prediction block is equal to a width of the current block, and a height of the first prediction block is equal to a height of the current block when the colour format information indicates 4:4:4 sampling; determine that the width of the first prediction block is equal to twice the width of the current block, and the height of the first prediction block is equal to the height of the current block when the colour format information indicates 4:2:2 sampling; determine that the width of the first prediction block is equal to four times the width of the current block, and the height of the first prediction block is equal to the height of the current block when the colour format information indicates 4:1:1 sampling; determine that the width of the first prediction block is equal to twice the width of the current block, and the height of the first prediction block is equal to twice the height of the current block when the colour format information indicates 4:2:0 sampling.

In some embodiments, the first filtering unit 3003 is further configured to perform the third filtering on the reconstructed value of the first-reference-colour-component sample in the current block according to a third horizontal up-sampling factor and a third vertical up-sampling factor, to obtain the filtered sample value of the first-reference-colour-component sample in the current block. The first determining unit 3001 is further configured to: determine that a width of the first prediction block is equal to a product of a width of the current block and the third horizontal up-sampling factor, and a height of the first prediction block is equal to a product of a height of the current block and the third vertical up-sampling factor when the colour format information indicates 4:4:4 sampling; determine that the width of the first prediction block is equal to twice the product of the width of the current block and the third horizontal up-sampling factor, and the height of the first prediction block is equal to the product of the height of the current block and the third vertical up-sampling factor when the colour format information indicates 4:2:2 sampling; determine that the width of the first prediction block is equal to four times the product of the width of the current block and the third horizontal up-sampling factor, and the height of the first prediction block is equal to the product of the height of the current block and the third vertical up-sampling factor when the colour format information indicates 4:1:1 sampling; determine that the width of the first prediction block is equal to twice the product of the width of the current block and the third horizontal up-sampling factor, and the height of the first prediction block is equal to twice the product of the height of the current block and the third vertical up-sampling factor when the colour format information indicates 4:2:0 sampling.

In some embodiments, the first predicting unit 3002 is further configured to determine a weighted value obtained by multiplying the reference sample value for the second colour component by a corresponding weighting factor; and set a prediction value of a second-colour-component sample in the first prediction block to be equal to a sum of N weighted values, where N represents the number of reference sample values for the second colour component, and N is a positive integer.

In some embodiments, the first filtering is down-sampling filtering.

In some embodiments, the first filtering unit 3003 is further configured to perform down-sampling filtering on the first prediction block by using a preset filter, to determine the second prediction block for the second colour component of the current block.

In some embodiments, the first filtering unit 3003 is further configured to determine a horizontal down-sampling factor and a vertical down-sampling factor; and perform down-sampling filtering on the first prediction block according to the horizontal down-sampling factor and the vertical down-sampling factor, to obtain the second prediction block for the second colour component of the current block.

In some embodiments, the first filtering unit 3003 is further configured to: perform down-sampling filtering on the first prediction block to obtain the second prediction block when the horizontal down-sampling factor is greater than 1 or the vertical down-sampling factor is greater than 1.

In some embodiments, the first filtering unit 3003 is further configured to perform down-sampling filtering on the first prediction block by means of at least one of: performing down-sampling filtering on the first prediction block in a horizontal direction; performing down-sampling filtering on the first prediction block in a vertical direction; performing down-sampling filtering on the first prediction block in a horizontal direction and then in a vertical direction; or performing down-sampling filtering on the first prediction block in a vertical direction and then in a horizontal direction.

In some embodiments, the first filtering unit 3003 is further configured to perform weighted sum calculation on every preset number of prediction values of the second colour component of the first prediction block in a horizontal direction and/or a vertical direction according to the horizontal down-sampling factor and the vertical down-sampling factor, to obtain the second prediction block.

In some embodiments, the first filtering unit 3003 is further configured to perform weighted sum calculation on every horizontal down-sampling factor number of prediction values of the second colour component of the first prediction block in a horizontal direction, to obtain the second prediction block.

In some embodiments, the first filtering unit 3003 is further configured to perform weighted sum calculation on every vertical down-sampling factor number of prediction values of the second colour component of the first prediction block in a vertical direction, to obtain the second prediction block.

In some embodiments, the first filtering unit 3003 is further configured to: perform weighted sum calculation on every horizontal down-sampling factor number of prediction values of the second colour component of the first prediction block in a horizontal direction, and perform weighted sum calculation on every vertical down-sampling factor number of prediction values of the second colour component of the first prediction block in a vertical direction, to obtain the second prediction block.

In some embodiments, the first filtering unit 3003 is further configured to: determine the weighting factor according to a reference sample value for a first colour component of some samples in the first prediction block; and determine the second prediction block for the second colour component of the current block according to the weighting factor and a reference sample value for a second colour component of some samples in the first prediction block.

In some embodiments, the first filtering unit 3003 is further configured to obtain a prediction value of a second colour component of a sample at position $(x, y)$ in the current block by multiplying a reference sample value for a second colour component of a sample at position *(i, j)* in the first prediction block by the weighting factor, where *i, j, x,* and *j* are integers greater than or equal to zero.

In some embodiments, the first determining unit 3001 is further configured to: set x to be equal to *i* and set y to be equal to *j* when the colour format information indicates 4:4:4 sampling; set x to be equal to a product of *i* and 2 and set *y* to be equal to *j* when the colour format information indicates 4:2:2 sampling; set *x* to be equal to a product of *i* and 4 and set *y* to be equal *to j* when the colour format information indicates 4:1:1 sampling; and set *y* to be equal to a product of *j* and 2 set *x* to be equal to a product of *i* and 2 when the colour format information indicates 4:2:0 sampling.

In some embodiments, the first determining unit 3001 is further configured to: determine a horizontal sampling position factor and a vertical sampling position factor; and set x to be equal to a product of *i* and the horizontal sampling position factor, and set *y* to be equal to a product of *j* and the vertical sampling position factor.

In some embodiments, the first filtering unit 3003 is further configured to perform related processing on the second prediction block after determining the second prediction block for the second colour component of the current block, and use the processed second prediction block as the second prediction block, where performing related processing on the second prediction block includes at least one of: performing third filtering on the second prediction block; refining the second prediction block by using a preset compensation value; or performing weighted average calculation on the second prediction block by using a prediction value of the second colour component of the current block in at least one prediction mode.

In some embodiments, the first determining unit 3001 is further configured to determine a prediction value of the second-colour-component sample in the current block according to the second prediction block; and determine the residual value of the second-colour-component sample in the current block according to an original value of the second-colour-component sample in the current block and the prediction value of the second-colour-component sample in the current block.

In some embodiments, referring to FIG. 20, the encoding apparatus 300 can further include an encoding unit 3004. The encoding unit 3004 is configured to encode the residual value of the second-colour-component sample in the current block, and signal obtained encoded bits into a bitstream.

It can be understood that, in embodiments of the disclosure, the "unit" can be part of a circuit, part of a processor, part of a program or software, etc., or can be a module, or can be non-modular. In addition, various components in embodiments can be integrated into one processing unit or can be present as a number of physically separated units, and two or more units can be integrated into one. The integrated unit can be implemented in a form of hardware, or can be implemented in a form of software functional module.

If the integrated units are implemented as software functional modules and sold or used as standalone products, they can be stored in a computer-readable storage medium. Based on such an understanding, the essential technical solution, or the portion that contributes to the related art, or some or all of the technical solutions of the disclosure can be embodied as software products. The computer software products can be stored in a storage medium and can include multiple instructions that, when executed, can cause a computer device, e.g., a personal computer, a server, a network device, etc., or a processor to implement some or all operations of the methods described in various embodiments of the disclosure. The above storage medium can include various kinds of media that can store program codes, such as a universal serial bus (USB) flash disk, a mobile hard drive, a read-only memory (ROM), a random access memory (RAM), a magnetic disk, or an optical disk.

Therefore, embodiments of the disclosure provide a computer-readable storage medium. The computer-readable storage medium stores computer programs which, when executed by a first processor, are operable with the first processor to implement the method according to any one of the foregoing embodiments of the disclosure.

Based on the structure of the encoding apparatus 300 and the computer-readable storage medium, referring to FIG. 21, FIG. 21 is a schematic structural diagram illustrating hardware of an encoding device 310 provided in embodiments of the disclosure. As illustrated in FIG. 21, the encoding device 310 can include a first communication interface 3101, a first memory 3102, and a first processor 3103. These components are coupled together via a first bus system 3104. It is understandable that, the first bus system 3104 is configured for connection and communication between these components. In addition to a data bus, the first bus system 3104 further includes a power bus, a control bus, and a status signal bus. However, for the sake of illustration, various buses are marked as the first bus system 3104 in FIG. 21. The first communication interface 3101 is configured for signal reception and transmission during information reception and transmission with other external network elements. The first memory 3102 is configured to store computer programs executable by the first processor 3103. The first processor 3103 is configured to execute the computer programs to implement the following steps: determining a reference sample value for a first colour component of a current block; determining a weighting factor according to the reference sample value for the first colour component of the current block; determining a first prediction block for a second colour component of the current block according to the weighting factor and a reference sample value for the second colour component of the current block, where the number of prediction values of the second colour component of the first prediction block is greater than the number of second-colour-component samples in the current block; performing first filtering on the first prediction block to determine a second prediction block for the second colour component of the current block; and determining a residual value of the second-colour-component sample in the current block according to the second prediction block.

It can be understood that, the first memory 3102 in embodiments of the disclosure can be a volatile memory or a non-volatile memory, or may include both the volatile memory and the non-volatile memory. The non-volatile memory can be a ROM, a programmable ROM (PROM), an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the first memory 3102 of the systems and methods described in the disclosure is intended to include, but is not limited to, these and any other suitable types of memory.

The first processor 3103 can be an integrated circuit chip with signal processing capabilities. During implementation, each step of the foregoing method can be completed by an integrated logic circuit in hardware in the first processor 3103 or an instruction in the form of software. The first processor 3103 can be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor can be a microprocessor, or the processor can be any conventional processor or the like. The steps of the method disclosed in embodiments of the disclosure can be directly implemented by a hardware decoding processor, or can be performed by hardware and software modules in the decoding processor. The software module can be located in a storage medium such as a RAM, a flash memory, a ROM, a PROM, or an electrically erasable programmable memory, registers, and the like. The storage medium is located in the first memory 3102, and the first processor 3103 reads information in the first memory 3102 and completes the steps of the foregoing with the hardware thereof.

It will be appreciated that embodiments described herein can be implemented in hardware, software, firmware, middleware, microcode, or a combination thereof. For hardware implementation, the processing unit can be implemented in one or more application ASICs, DSPs, DSP devices (DSPDs), programmable logic devices (PLDs), FPGAs, general-purpose processors, controllers, micro-controllers, microprocessors, other electronic units for performing the functionality in the disclosure, or a combination thereof. For software implementation, the techniques described in the disclosure can be implemented by modules (e. g., procedures, functions, etc.) for performing the functionality in the disclosure. The software codes can be stored in the memory and executed by the processor. The memory can be implemented inside or external to the processor.

Optionally, as another embodiment, the first processor 3103 is further configured to execute the computer programs to implement the method described in any of the foregoing embodiments.

Embodiments provide an encoding device, and the encoding device can further include the encoding apparatus 300 according to any one of the foregoing embodiments. For the encoding device, not only existing colour component information but also different colour format information is taken into consideration. As such, accuracy of existing luma information is ensured, and with aid of accurate luma information, it is beneficial to improving accuracy and stability of a nonlinear mapping model when performing chroma component prediction by using lossless luma information, thereby improving accuracy of chroma prediction, saving bit-rate, and improving coding performance.

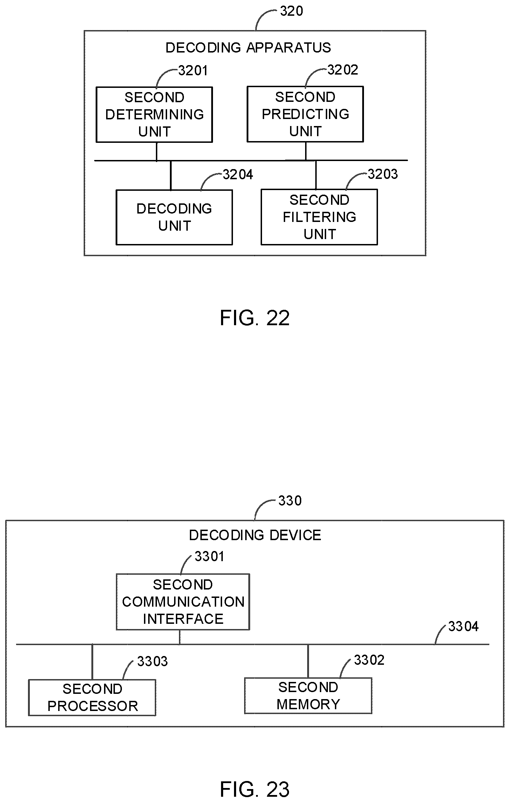

Based on the same concept as the foregoing embodiment, referring to FIG. 22, FIG. 22 is a schematic structural diagram of a decoding apparatus 320 provided in embodiments of the disclosure. As illustrated in FIG. 22, the decoding apparatus 320 can include a second determining unit 3201, a second predicting unit 3202, and a second filtering unit 3203. The second determining unit 3201 is configured to determine a reference sample value for a first colour component of a current block, and determine a weighting factor according to the reference sample value for the first colour component of the current block. The second predicting unit 3202 is configured to determine a first prediction block for a second colour component of the current block according to the weighting factor and a reference sample value for the second colour component of the current block, where the number of prediction values of the second colour component of the first prediction block is greater than the number of second-colour-component samples in the current block. The second filtering unit 3203 is configured to perform first filtering on the first prediction block to determine a second prediction block for the second colour component of the current block. The second determining unit 3201 is further configured to determine a reconstructed value of the second-colour-component sample in the current block according to the second prediction block.

In some embodiments, the number of prediction values of the second colour component of the second prediction block is the same as the number of second-colour-component samples in the current block.

In some embodiments, the second determining unit 3201 is further configured to determine the reference sample value for the first colour component of the current block according to a value of a first-colour-component sample in a neighbouring area of the current block, where the neighbouring area includes at least one of: a top neighbouring area, a top-right neighbouring area, a left neighbouring area, or a bottom-left neighbouring area.

In some embodiments, the second determining unit 3201 is further configured to determine the value of the first-colour-component sample by selecting from first-colour-component samples in the neighbouring area.

In some embodiments, the second determining unit 3201 is further configured to determine a sample position to-be-selected according to a position and/or a colour component intensity of the first-colour-component sample in the neighbouring area; and determine the value of the first-colour-component sample from the neighbouring area according to the sample position to-be-selected.

In some embodiments, the second filtering unit 3203 is further configured to perform second filtering on the value of the first-colour-component sample to obtain a filtered neighbouring sample value for the first colour component of the current block; and determine the reference sample value for the first colour component of the current block according to the filtered neighbouring sample value for the first colour component of the current block.

In some embodiments, the number of filtered neighbouring sample values for the first colour component of the current block is greater than the number of values of the first-colour-component samples.

In some embodiments, the second determining unit 3201 is further configured to determine the reference sample value for the first colour component of the current block based on a reconstructed value of a first-reference-colour-component sample in the current block.

In some embodiments, the reference sample value for the first colour component of the current block is set to an absolute value of a difference between the value of the first-colour-component sample and the reconstructed value of the first-reference-colour-component sample.

In some embodiments, the reference sample value for the first colour component of the current block is set to an absolute value of a difference between the filtered neighbouring sample value for the first colour component and the reconstructed value of the first-reference-colour-component sample.

In some embodiments, the second filtering unit 3203 is further configured to perform third filtering on a reconstructed value of a first-reference-colour-component sample in the current block to obtain a filtered sample value of the first-reference-colour-component sample in the current block; and determine the reference sample value for the first colour component of the current block according to the filtered sample value of the first-reference-colour-component sample in the current block.

In some embodiments, the number of filtered sample values of the first-reference-colour-component samples in the current block is greater than the number of reconstructed values of the first-reference-colour-component samples in the current block.

In some embodiments, the reference sample value for the first colour component of the current block is set to an absolute value of a difference between a filtered neighbouring sample value for the first colour component and the filtered sample value of the first-reference-colour-component sample.

In some embodiments, the reference sample value for the first colour component of the current block is set to an absolute value of a difference between the value of the first-colour-component sample and the filtered sample value of the first-reference-colour-component sample.

In some embodiments, the second determining unit 3201 is further configured to determine a value corresponding to the reference sample value for the first colour component in a preset mapping; and set the weighting factor to be equal to the value.

In some embodiments, the second determining unit 3201 is further configured to determine a first factor; determine a first product value according to the first factor and the reference sample value for the first colour component; and determine a value corresponding to the first product value in the preset mapping.

In some embodiments, the first factor is a preset constant value.

In some embodiments, the second determining unit 3201 is further configured to determine a value of the first factor according to a size parameter of the current block, where the size parameter of the current block includes at least one of: a width of the current block or a height of the current block.

In some embodiments, the preset mapping is a Softmax function.

In some embodiments, the preset mapping is a weighting function that is in inverse proportion with the reference sample value for the first colour component.

In some embodiments, the second determining unit 3201 is further configured to determine the reference sample value for the second colour component of the current block according to a value of a second-colour-component sample in a neighbouring area of the current block.

In some embodiments, the second filtering unit 3203 is further configured to perform fourth filtering on the value of the second-colour-component sample in the neighbouring area of the current block, to obtain a filtered neighbouring sample value for the second colour component of the current block; and determine the reference sample value for the second colour component of the current block according to the filtered neighbouring sample value for the second colour component of the current block.

In some embodiments, the number of filtered neighbouring sample values for the second colour component of the current block is greater than the number of values of the second-colour-component samples in the neighbouring area of the current block.

In some embodiments, the fourth filtering is up-sampling filtering, where an up-sampling rate is a positive integer multiple of 2.

In some embodiments, the second filtering unit 3203 is further configured to perform fourth filtering on the value of the second-colour-component sample in the neighbouring area of the current block based on colour format information, to obtain the filtered neighbouring sample value for the second colour component of the current block.

In some embodiments, the second filtering unit 3203 is further configured to perform up-sampling filtering on the value of the second-colour-component sample in the neighbouring area of the current block if the colour format information indicates 4:2:0 sampling, where an up-sampling rate is a positive integer multiple of 2.

In some embodiments, the second filtering unit 3203 is further configured to perform second filtering on a value of a first-colour-component sample in the neighbouring area of the current block according to a first horizontal up-sampling factor and a first vertical up-sampling factor, to obtain a filtered neighbouring sample value for the first colour component of the current block; and perform fourth filtering on the value of the second-colour-component sample in the neighbouring area of the current block according to a second horizontal up-sampling factor and a second vertical up-sampling factor, to obtain a filtered neighbouring sample value for the second colour component of the current block. The second determining unit 3201 is further configured to: determine that the second horizontal up-sampling factor is equal to the first horizontal up-sampling factor, and the second vertical up-sampling factor is equal to the first vertical up-sampling factor when the colour format information indicates 4:4:4 sampling; determine that the second horizontal up-sampling factor is equal to twice the first horizontal up-sampling factor, and the second vertical up-sampling factor is equal to the first vertical up-sampling factor when the colour format information indicates 4:2:2 sampling; determine that the second horizontal up-sampling factor is equal to four times the first horizontal up-sampling factor, and the second vertical up-sampling factor is equal to the first vertical up-sampling factor when the colour format information indicates 4:1:1 sampling; determine that the second horizontal up-sampling factor is equal to twice the first horizontal up-sampling factor, and the second vertical up-sampling factor is equal to twice the first vertical up-sampling factor when the colour format information indicates 4:2:0 sampling.

In some embodiments, the second determining unit 3201 is further configured to: determine that a width of the first prediction block is equal to a width of the current block, and a height of the first prediction block is equal to a height of the current block when the colour format information indicates 4:4:4 sampling; determine that the width of the first prediction block is equal to twice the width of the current block, and the height of the first prediction block is equal to the height of the current block when the colour format information indicates 4:2:2 sampling; determine that the width of the first prediction block is equal to four times the width of the current block, and the height of the first prediction block is equal to the height of the current block when the colour format information indicates 4:1:1 sampling; determine that the width of the first prediction block is equal to twice the width of the current block, and the height of the first prediction block is equal to twice the height of the current block when the colour format information indicates 4:2:0 sampling.

In some embodiments, the second filtering unit 3203 is further configured to perform the third filtering on the reconstructed value of the first-reference-colour-component sample in the current block according to a third horizontal up-sampling factor and a third vertical up-sampling factor, to obtain the filtered sample value of the first-reference-colour-component sample in the current block. The second determining unit 3201 is further configured to: determine that a width of the first prediction block is equal to a product of a width of the current block and the third horizontal up-sampling factor, and a height of the first prediction block is equal to a product of a height of the current block and the third vertical up-sampling factor when the colour format information indicates 4:4:4 sampling; determine that the width of the first prediction block is equal to twice the product of the width of the current block and the third horizontal up-sampling factor, and the height of the first prediction block is equal to the product of the height of the current block and the third vertical up-sampling factor when the colour format information indicates 4:2:2 sampling; determine that the width of the first prediction block is equal to four times the product of the width of the current block and the third horizontal up-sampling factor, and the height of the first prediction block is equal to the product of the height of the current block and the third vertical up-sampling factor when the colour format information indicates 4:1:1 sampling; determine that the width of the first prediction block is equal to twice the product of the width of the current block and the third horizontal up-sampling factor, and the height of the first prediction block is equal to twice the product of the height of the current block and the third vertical up-sampling factor when the colour format information indicates 4:2:0 sampling.

In some embodiments, the second predicting unit 3202 is further configured to determine a weighted value obtained by multiplying the reference sample value for the second colour component by a corresponding weighting factor; and set a prediction value of a second-colour-component sample in the first prediction block to be equal to a sum of N weighted values, where N represents the number of reference sample values for the second colour component, and N is a positive integer.

In some embodiments, the first filtering is down-sampling filtering.

In some embodiments, the second filtering unit 3203 is further configured to perform down-sampling filtering on the first prediction block by using a preset filter, to determine the second prediction block for the second colour component of the current block.

In some embodiments, the second filtering unit 3203 is further configured to determine a horizontal down-sampling factor and a vertical down-sampling factor; and perform down-sampling filtering on the first prediction block according to the horizontal down-sampling factor and the vertical down-sampling factor, to obtain the second prediction block for the second colour component of the current block.

In some embodiments, the second filtering unit 3203 is further configured to: perform down-sampling filtering on the first prediction block to obtain the second prediction block when the horizontal down-sampling factor is greater than 1 or the vertical down-sampling factor is greater than 1.

In some embodiments, the second filtering unit 3203 is further configured to perform down-sampling filtering on the first prediction block by means of at least one of: performing down-sampling filtering on the first prediction block in a horizontal direction; performing down-sampling filtering on the first prediction block in a vertical direction; performing down-sampling filtering on the first prediction block in a horizontal direction and then in a vertical direction; or performing down-sampling filtering on the first prediction block in a vertical direction and then in a horizontal direction.

In some embodiments, the second filtering unit 3203 is further configured to perform weighted sum calculation on every preset number of prediction values of the second colour component of the first prediction block in a horizontal direction and/or a vertical direction according to the horizontal down-sampling factor and the vertical down-sampling factor, to obtain the second prediction block.

In some embodiments, the second filtering unit 3203 is further configured to perform weighted sum calculation on every horizontal down-sampling factor number of prediction values of the second colour component of the first prediction block in a horizontal direction, to obtain the second prediction block.

In some embodiments, the second filtering unit 3203 is further configured to perform weighted sum calculation on every vertical down-sampling factor number of prediction values of the second colour component of the first prediction block in a vertical direction, to obtain the second prediction block.

In some embodiments, the second filtering unit 3203 is further configured to perform weighted sum calculation on every horizontal down-sampling factor number of prediction values of the second colour component of the first prediction block in a horizontal direction, and perform weighted sum calculation on every vertical down-sampling factor number of prediction values of the second colour component of the first prediction block in a vertical direction, to obtain the second prediction block.

In some embodiments, the second filtering unit 3203 is further configured to: determine the weighting factor according to a reference sample value for a first colour component of some samples in the first prediction block; and determine the second prediction block for the second colour component of the current block according to the weighting factor and a reference sample value for a second colour component of some samples in the first prediction block.

In some embodiments, the second filtering unit 3203 is further configured to obtain a prediction value of a second colour component of a sample at position (x, y) in the current block by multiplying a reference sample value for a second colour component of a sample at position ($i$, $j$) in the first prediction block by the weighting factor, where $i$, $j$, $x$, and $j$ are integers greater than or equal to zero.

In some embodiments, the second determining unit 3201 is further configured to: set x to be equal to $i$ and set $y$ to be equal to $j$ when the colour format information indicates 4:4:4 sampling; set $x$ to be equal to a product of $i$ and 2 and set $y$ to be equal to $j$ when the colour format information indicates 4:2:2 sampling; set $x$ to be equal to a product of $i$ and 4 and set $y$ to be equal to $j$ when the colour format information indicates 4:1:1 sampling; and set $y$ to be equal to a product of $j$ and 2 set $x$ to be equal to a product of $i$ and 2 when the colour format information indicates 4:2:0 sampling.

In some embodiments, the second determining unit 3201 is further configured to: determine a horizontal sampling position factor and a vertical sampling position factor; and set $x$ to be equal to a product of $i$ and the horizontal sampling position factor, and set $y$ to be equal to a product of $j$ and the vertical sampling position factor.

In some embodiments, the second filtering unit 3203 is further configured to perform related processing on the second prediction block after determining the second prediction block for the second colour component of the current block, and use the processed second prediction block as the second prediction block, where performing related processing on the second prediction block includes at least one of: performing third filtering on the second prediction block; refining the second prediction block by using a preset compensation value; or performing weighted average calculation on the second prediction block by using a prediction value of the second colour component of the current block in at least one prediction mode.

In some embodiments, the second determining unit 3201 is further configured to: determine a residual value of the second-colour-component sample in the current block; determine a prediction value of the second-colour-component sample in the current block according to the second prediction block; and determine the reconstructed value of the second-colour-component sample in the current block according to the residual value of the second-colour-component sample in the current block and the prediction value of the second-colour-component sample in the current block.

In some embodiments, referring to FIG. 22, the decoding apparatus 320 can further include a decoding unit 3204. The decoding unit 3204 is configured to parse a bitstream to determine the residual value of the second-colour-component sample in the current block.

It can be understood that, in embodiments of the disclosure, the "unit" can be part of a circuit, part of a processor, part of a program or software, etc., or can be a module, or can be non-modular. In addition, various components in embodiments can be integrated into one processing unit or can be present as a number of physically separated units, and two or more units can be integrated into one. The integrated unit can be implemented in a form of hardware, or can be implemented in a form of software functional module.

If the integrated units are implemented as software functional modules and sold or used as standalone products, they can be stored in a computer-readable storage medium. Based on such an understanding, embodiments provide a computer-readable storage medium. The computer-readable storage medium is applied to a decoder 320. The computer-readable storage medium stores computer programs which, when executed by a second processor, are operable with the second processor to implement the method according to any one of the foregoing embodiments.

Based on the structure of the foregoing decoding apparatus 320 and the computer-readable storage medium, referring to FIG. 23, FIG. 23 is a schematic structural diagram illustrating hardware of a decoding device 330 provided in embodiments of the disclosure. As illustrated in FIG. 23, the decoding device 330 can include a second communication interface 3301, a second memory 3302, and a second processor 3303. These components are coupled together via a second bus system 3304. It should be understood that, the second bus system 3304 is configured for connection and communication between these components. In addition to a data bus, the second bus system 3304 further includes a power bus, a control bus, and a status signal bus. However, for the sake of illustration, various buses are marked as the second bus system 3304 in FIG.

23. The second communication interface 3301 is configured for signal reception and transmission during information reception and transmission with other external network elements. The second memory 3302 is configured to store computer programs executable by the second processor 3303. The second processor 3303 is configured to execute the computer programs to implement the following steps: determining a reference sample value for a first colour component of a current block; determining a weighting factor according to the reference sample value for the first colour component of the current block; determining a first prediction block for a second colour component of the current block according to the weighting factor and a reference sample value for the second colour component of the current block, where the number of prediction values of the second colour component of the first prediction block is greater than the number of second-colour-component samples in the current block; performing first filtering on the first prediction block to determine a second prediction block for the second colour component of the current block; and determining a reconstructed value of the second-colour-component sample in the current block according to the second prediction block.

Optionally, as another embodiment, the second processor 3303 is further configured to execute the computer programs to implement the method described in any of the foregoing embodiments.

It can be understood that the second memory 3302 has a hardware function similar to that of the first memory 3102, and the second processor 3303 has a hardware function similar to that of the first processor 3103, which are not described again herein.

Embodiments provide a decoding device, and the decoding device can further include the decoding apparatus 320 described in the foregoing embodiment. For the decoding device, not only existing colour component information but also different colour format information is taken into consideration. As such, accuracy of existing luma information is ensured, and with aid of accurate luma information, it is beneficial to improving accuracy and stability of a nonlinear mapping model when performing chroma component prediction by using lossless luma information, thereby improving accuracy of chroma prediction, saving bit-rate, and improving coding performance.

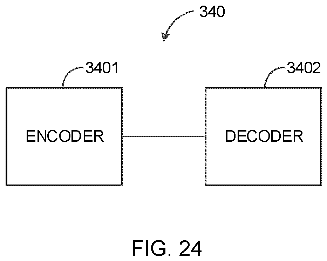

In another embodiment of the disclosure, referring to FIG. 24, FIG. 24 is a schematic structural diagram of a coding system provided in embodiments of the disclosure. As illustrated in FIG. 24, the coding system 340 may include an encoder 3401 and a decoder 3402. The encoder 3401 can be a device integrating the encoding apparatus 300 in the foregoing embodiment, or can be the encoding device 310 in the foregoing embodiment. The decoder 3402 can be a device integrating the decoding apparatus 320 described in the foregoing embodiment, or can be the decoding device 330 described in the foregoing embodiment.

In embodiments of the disclosure, in the coding system 340, at the encoder 3401 or the decoder 3402, not only existing colour component information but also different colour format information is taken into consideration. As such, accuracy of existing luma information is ensured, and with aid of accurate luma information, it is beneficial to improving accuracy and stability of a nonlinear mapping model when performing chroma component prediction by using lossless luma information, thereby improving accuracy of chroma prediction, saving bit-rate, and improving coding performance.

It should be noted that, in the disclosure, the terms "include", "comprise", and "have" as well as variations thereof are intended to cover non-exclusive inclusion, so that a process, method, article, or apparatus that includes a series of elements not only includes those elements, but also includes other elements that are not explicitly listed, or further includes elements inherent to the process, method, article, or apparatus. Unless there are other limitations, an element limited by "including a..." does not exclude the case where there are other same elements in the process, method, article, or apparatus that includes the element.

The sequential numbers in embodiments of the disclosure are only for illustration, and do not indicate the preference of embodiments.

The methods disclosed in the method embodiments of the disclosure can be combined arbitrarily without conflicts to obtain new method embodiments.

The features disclosed in the product embodiments of the disclosure can be combined arbitrarily without conflicts to obtain new product embodiments.

The features disclosed in the several method embodiments or device embodiments of the disclosure can be arbitrarily combined without conflicts to obtain new method embodiments or device embodiments.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

Industrial Applicability

In embodiments of the disclosure, at an encoding end or at a decoding end, a reference sample value for a first colour component of a current block is determined. A weighting factor is determined according to the reference sample value for the first colour component of the current block. A first prediction block for a second colour component of the current block is determined according to the weighting factor and a reference sample value for the second colour component of the current block, where the number of prediction values of the second colour component of the first prediction block is greater than the number of second-colour-component samples in the current block. First filtering is performed on the first prediction block to determine a second prediction block for the second colour component of the current block. In this way, at the encoding end, a residual value of a second-colour-component sample in the current block can be determined according to the second prediction block and then the residual value is signalled into a bitstream, such that at the decoding end, a reconstructed value of the second-colour-component sample in the current block can be determined according to the second prediction block and the residual value obtained by decoding. As such, with aid of a reference sample neighbouring the current block and colour component information of the current block, existing colour component information is taken into consideration so that a more accurate nonlinear mapping model can be constructed without loss of luma information so as to allocate a weight to each reference sample value for the chroma component for weighted prediction, in addition, different colour format information is also taken into consideration when performing the first filtering, and chroma and/or luma sampling filtering is performed according to different colour format information, which can ensure that the spatial resolution of the chroma component is consistent with the spatial resolution of the luma component. As such, accuracy of existing luma information is ensured, and with aid of accurate luma information, it is possible to improve accuracy and stability of a nonlinear mapping model when performing chroma component prediction by using lossless luma information, thereby improving accuracy of chroma prediction, saving bit-rate, improving coding efficiency, and thus improving coding performance.

**Claims**

1. A decoding method, comprising:

   determining a reference sample value for a first colour component of a current block;
   determining a weighting factor according to the reference sample value for the first colour component of the current block;
   determining a first prediction block for a second colour component of the current block according to the weighting factor and a reference sample value for the second colour component of the current block, wherein the number of prediction values of the second colour component of the first prediction block is greater than the number of second-colour-component samples in the current block;
   performing first filtering on the first prediction block to determine a second prediction block for the second colour component of the current block; and
   determining a reconstructed value of the second-colour-component sample in the current block according to the second prediction block.

2. The method of claim 1, wherein the number of prediction values of the second colour component of the second prediction block is the same as the number of second-colour-component samples in the current block.

3. The method of claim 1, wherein determining the reference sample value for the first colour component of the current block comprises:
   determining the reference sample value for the first colour component of the current block according to a value of a first-colour-component sample in a neighbouring area of the current block, wherein the neighbouring area comprises at least one of: a top neighbouring area, a top-right neighbouring area, a left neighbouring area, or a bottom-left neighbouring area.

4. The method of claim 3, further comprising:
determining the value of the first-colour-component sample by selecting from first-colour-component samples in the neighbouring area.

5. The method of claim 4, wherein determining the value of the first-colour-component sample by selecting from the first-colour-component samples in the neighbouring area comprises:

determining a sample position to-be-selected according to a position and/or a colour component intensity of the first-colour-component sample in the neighbouring area; and
determining the value of the first-colour-component sample from the neighbouring area according to the sample position to-be-selected.

6. The method of claim 3, wherein determining the reference sample value for the first colour component of the current block further comprises:

performing second filtering on the value of the first-colour-component sample to obtain a filtered neighbouring sample value for the first colour component of the current block; and
determining the reference sample value for the first colour component of the current block according to the filtered neighbouring sample value for the first colour component of the current block.

7. The method of claim 6, wherein the number of filtered neighbouring sample values for the first colour component of the current block is greater than the number of values of the first-colour-component samples.

8. The method of claim 3 or 6, wherein determining the reference sample value for the first colour component of the current block further comprises:
determining the reference sample value for the first colour component of the current block based on a reconstructed value of a first-reference-colour-component sample in the current block.

9. The method of claim 8, wherein the reference sample value for the first colour component of the current block is set to an absolute value of a difference between the value of the first-colour-component sample and the reconstructed value of the first-reference-colour-component sample.

10. The method of claim 8, wherein the reference sample value for the first colour component of the current block is set to an absolute value of a difference between the filtered neighbouring sample value for the first colour component and the reconstructed value of the first-reference-colour-component sample.

11. The method of claim 3 or 6, wherein determining the reference sample value for the first colour component of the current block further comprises:

performing third filtering on a reconstructed value of a first-reference-colour-component sample in the current block to obtain a filtered sample value of the first-reference-colour-component sample in the current block; and
determining the reference sample value for the first colour component of the current block according to the filtered sample value of the first-reference-colour-component sample in the current block.

12. The method of claim 11, wherein the number of filtered sample values of the first-reference-colour-component samples in the current block is greater than the number of reconstructed values of the first-reference-colour-component samples in the current block.

13. The method of claim 11, wherein the reference sample value for the first colour component of the current block is set to an absolute value of a difference between a filtered neighbouring sample value for the first colour component and the filtered sample value of the first-reference-colour-component sample.

14. The method of claim 11, wherein the reference sample value for the first colour component of the current block is set to an absolute value of a difference between the value of the first-colour-component sample and the filtered sample value of the first-reference-colour-component sample.

15. The method of claim 1, wherein determining the weighting factor according to the reference sample value for the first colour component of the current block comprises:

    determining a value corresponding to the reference sample value for the first colour component in a preset mapping; and
    setting the weighting factor to be equal to the value.

16. The method of claim 15, wherein determining the value corresponding to the reference sample value for the first colour component in the preset mapping comprises:

    determining a first factor;
    determining a first product value according to the first factor and the reference sample value for the first colour component; and
    determining a value corresponding to the first product value in the preset mapping.

17. The method of claim 16, wherein determining the first factor comprises:
    the first factor being a preset constant value.

18. The method of claim 16, wherein determining the first factor comprises:
    determining a value of the first factor according to a size parameter of the current block, wherein the size parameter of the current block comprises at least one of: a width of the current block or a height of the current block.

19. The method of claim 15, wherein the determining the value corresponding to the reference sample value for the first colour component in the preset mapping comprises:
    the preset mapping being a Softmax function.

20. The method of claim 15, wherein determining the value corresponding to the reference sample value for the first colour component in the preset mapping comprises:
    the preset mapping being a weighting function that is in inverse proportion with the reference sample value for the first colour component.

21. The method of claim 1, further comprising:
    determining the reference sample value for the second colour component of the current block according to a value of a second-colour-component sample in a neighbouring area of the current block.

22. The method of claim 21, further comprising:

    performing fourth filtering on the value of the second-colour-component sample in the neighbouring area of the current block, to obtain a filtered neighbouring sample value for the second colour component of the current block; and
    determining the reference sample value for the second colour component of the current block according to the filtered neighbouring sample value for the second colour component of the current block.

23. The method of claim 22, wherein the number of filtered neighbouring sample values for the second colour component of the current block is greater than the number of values of the second-colour-component samples in the neighbouring area of the current block.

24. The method of claim 22, further comprising:
    the fourth filtering being up-sampling filtering, wherein an up-sampling rate is a positive integer multiple of 2.

25. The method of claim 22, further comprising:
    performing fourth filtering on the value of the second-colour-component sample in the neighbouring area of the current block based on colour format information, to obtain the filtered neighbouring sample value for the second colour component of the current block.

26. The method of claim 25, wherein performing the fourth filtering further comprises:

performing up-sampling filtering on the value of the second-colour-component sample in the neighbouring area of the current block when the colour format information indicates 4:2:0 sampling, wherein an up-sampling rate is a positive integer multiple of 2.

27. The method of claim 22, wherein

the method further comprises:
performing second filtering on a value of a first-colour-component sample in the neighbouring area of the current block according to a first horizontal up-sampling factor and a first vertical up-sampling factor, to obtain a filtered neighbouring sample value for the first colour component of the current block; and performing fourth filtering on the value of the second-colour-component sample in the neighbouring area of the current block according to a second horizontal up-sampling factor and a second vertical up-sampling factor, to obtain a filtered neighbouring sample value for the second colour component of the current block; and accordingly, the method further comprises:

when the colour format information indicates 4:4:4 sampling, determining that the second horizontal up-sampling factor is equal to the first horizontal up-sampling factor, and the second vertical up-sampling factor is equal to the first vertical up-sampling factor;
when the colour format information indicates 4:2:2 sampling, determining that the second horizontal up-sampling factor is equal to twice the first horizontal up-sampling factor, and the second vertical up-sampling factor is equal to the first vertical up-sampling factor;
when the colour format information indicates 4:1:1 sampling, determining that the second horizontal up-sampling factor is equal to four times the first horizontal up-sampling factor, and the second vertical up-sampling factor is equal to the first vertical up-sampling factor;
when the colour format information indicates 4:2:0 sampling, determining that the second horizontal up-sampling factor is equal to twice the first horizontal up-sampling factor, and the second vertical up-sampling factor is equal to twice the first vertical up-sampling factor.

28. The method of claim 8, further comprising:

when the colour format information indicates 4:4:4 sampling, determining that a width of the first prediction block is equal to a width of the current block, and a height of the first prediction block is equal to a height of the current block;
when the colour format information indicates 4:2:2 sampling, determining that the width of the first prediction block is equal to twice the width of the current block, and the height of the first prediction block is equal to the height of the current block;
when the colour format information indicates 4:1:1 sampling, determining that the width of the first prediction block is equal to four times the width of the current block, and the height of the first prediction block is equal to the height of the current block;
when the colour format information indicates 4:2:0 sampling, determining that the width of the first prediction block is equal to twice the width of the current block, and the height of the first prediction block is equal to twice the height of the current block.

29. The method of claim 11, wherein
the method further comprises:
performing the third filtering on the reconstructed value of the first-reference-colour-component sample in the current block according to a third horizontal up-sampling factor and a third vertical up-sampling factor, to obtain the filtered sample value of the first-reference-colour-component sample in the current block; and accordingly, the method further comprises:

when the colour format information indicates 4:4:4 sampling, determining that a width of the first prediction block is equal to a product of a width of the current block and the third horizontal up-sampling factor, and a height of the first prediction block is equal to a product of a height of the current block and the third vertical up-sampling factor;
when the colour format information indicates 4:2:2 sampling, determining that the width of the first prediction block is equal to twice the product of the width of the current block and the third horizontal up-sampling factor, and the height of the first prediction block is equal to the product of the height of the current block and the third vertical up-sampling factor;
when the colour format information indicates 4:1:1 sampling, determining that the width of the first prediction block is equal to four times the product of the width of the current block and the third horizontal up-sampling factor, and the height of the first prediction block is equal to the product of the height of the current block and the third vertical up-sampling factor;

when the colour format information indicates 4:2:0 sampling, determining that the width of the first prediction block is equal to twice the product of the width of the current block and the third horizontal up-sampling factor, and the height of the first prediction block is equal to twice the product of the height of the current block and the third vertical up-sampling factor.

30. The method of claim 1, wherein determining the first prediction block for the second colour component of the current block according to the weighting factor and the reference sample value for the second colour component of the current block comprises:

determining a weighted value obtained by multiplying the reference sample value for the second colour component by a corresponding weighting factor; and

setting a prediction value of a second-colour-component sample in the first prediction block to be equal to a sum of N weighted values, wherein N represents the number of reference sample values for the second colour component, and N is a positive integer.

31. The method of claim 1, wherein the first filtering is down-sampling filtering.

32. The method of claim 31, wherein performing the first filtering on the first prediction block to determine the second prediction block for the second colour component of the current block comprises:
performing down-sampling filtering on the first prediction block by using a preset filter, to determine the second prediction block for the second colour component of the current block.

33. The method of claim 31, wherein performing the first filtering on the first prediction block to determine the second prediction block for the second colour component of the current block comprises:

determining a horizontal down-sampling factor and a vertical down-sampling factor; and

performing down-sampling filtering on the first prediction block according to the horizontal down-sampling factor and the vertical down-sampling factor, to obtain the second prediction block for the second colour component of the current block.

34. The method of claim 33, wherein performing down-sampling filtering on the first prediction block according to the horizontal down-sampling factor and the vertical down-sampling factor to obtain the second prediction block for the second colour component of the current block comprises:
when the horizontal down-sampling factor is greater than 1 or the vertical down-sampling factor is greater than 1, performing down-sampling filtering on the first prediction block to obtain the second prediction block.

35. The method of claim 34, wherein performing down-sampling filtering on the first prediction block comprises at least one of:

performing down-sampling filtering on the first prediction block in a horizontal direction;

performing down-sampling filtering on the first prediction block in a vertical direction;

performing down-sampling filtering on the first prediction block in a horizontal direction and then in a vertical direction; or

performing down-sampling filtering on the first prediction block in a vertical direction and then in a horizontal direction.

36. The method of claim 33, wherein performing the first filtering on the first prediction block to determine the second prediction block for the second colour component of the current block comprises:
performing weighted sum calculation on every preset number of prediction values of the second colour component of the first prediction block in a horizontal direction and/or a vertical direction according to the horizontal down-sampling factor and the vertical down-sampling factor, to obtain the second prediction block.

37. The method of claim 36, wherein performing weighted sum calculation on every preset number of prediction values of the second colour component of the first prediction block in a horizontal direction and/or a vertical direction to obtain the second prediction block comprises:
performing weighted sum calculation on every horizontal down-sampling factor number of prediction values of the second colour component of the first prediction block in a horizontal direction, to obtain the second prediction block.

38. The method of claim 36, wherein performing weighted sum calculation on every preset number of prediction values of the second colour component of the first prediction block in a horizontal direction and/or a vertical direction to obtain the second prediction block comprises:
performing weighted sum calculation on every vertical down-sampling factor number of prediction values of the second colour component of the first prediction block in a vertical direction, to obtain the second prediction block.

39. The method of claim 36, wherein performing weighted sum calculation on every preset number of prediction values of the second colour component of the first prediction block in a horizontal direction and/or a vertical direction to obtain the second prediction block comprises:
performing weighted sum calculation on every horizontal down-sampling factor number of prediction values of the second colour component of the first prediction block in a horizontal direction, and performing weighted sum calculation on every vertical down-sampling factor number of prediction values of the second colour component of the first prediction block in a vertical direction, to obtain the second prediction block.

40. The method of claim 1, further comprising:

determining the weighting factor according to a reference sample value for a first colour component of some samples in the first prediction block; and
determining the second prediction block for the second colour component of the current block according to the weighting factor and a reference sample value for a second colour component of some samples in the first prediction block.

41. The method of claim 40, wherein determining the second prediction block for the second colour component of the current block according to the weighting factor and the reference sample value for the second colour component of some samples in the first prediction block comprises:
obtaining a prediction value of a second colour component of a sample at position (x, y) in the current block by multiplying a reference sample value for a second colour component of a sample at position (i, $j$) in the first prediction block by the weighting factor, wherein i, $j$, x, and $j$ are integers greater than or equal to zero.

42. The method of claim 41, further comprising:

when the colour format information indicates 4:4:4 sampling, setting x to be equal to i, and setting $y$ to be equal to $j$;
when the colour format information indicates 4:2:2 sampling, setting x to be equal to a product of i and 2, and setting y to be equal to $j$;
when the colour format information indicates 4:1:1 sampling, setting x to be equal to a product of $i$ and 4, and setting $y$ to be equal to $j$;
when the colour format information indicates 4:2:0 sampling, setting $x$ to be equal to a product of $i$ and 2, and setting $y$ to be equal to a product of $j$ and 2.

43. The method of claim 41, further comprising:

determining a horizontal sampling position factor and a vertical sampling position factor; and
setting x to be equal to a product of $i$ and the horizontal sampling position factor, and setting $y$ to be equal to a product of $j$ and the vertical sampling position factor.

44. The method of claim 1, further comprising:

after determining the second prediction block for the second colour component of the current block, performing related processing on the second prediction block and using the processed second prediction block as the second prediction block, wherein
performing related processing on the second prediction block comprises at least one of:

performing third filtering on the second prediction block;
refining the second prediction block by using a preset compensation value; or
performing weighted average calculation on the second prediction block by using a prediction value of the second colour component of the current block in at least one prediction mode.

45. The method of claim 1, wherein determining the reconstructed value of the second-colour-component sample in the current block according to the second prediction block comprises:

    determining a residual value of the second-colour-component sample in the current block;
    determining a prediction value of the second-colour-component sample in the current block according to the second prediction block; and
    determining the reconstructed value of the second-colour-component sample in the current block according to the residual value of the second-colour-component sample in the current block and the prediction value of the second-colour-component sample in the current block.

46. An encoding method, comprising:

    determining a reference sample value for a first colour component of a current block;
    determining a weighting factor according to the reference sample value for the first colour component of the current block;
    determining a first prediction block for a second colour component of the current block according to the weighting factor and a reference sample value for the second colour component of the current block, wherein the number of prediction values of the second colour component of the first prediction block is greater than the number of second-colour-component samples in the current block;
    performing first filtering on the first prediction block to determine a second prediction block for the second colour component of the current block; and
    determining a residual value of the second-colour-component sample in the current block according to the second prediction block.

47. The method of claim 46, wherein the number of prediction values of the second colour component of the second prediction block is the same as the number of second-colour-component samples in the current block.

48. The method of claim 46, wherein determining the reference sample value for the first colour component of the current block comprises:
    determining the reference sample value for the first colour component of the current block according to a value of a first-colour-component sample in a neighbouring area of the current block, wherein the neighbouring area comprises at least one of: a top neighbouring area, a top-right neighbouring area, a left neighbouring area, or a bottom-left neighbouring area.

49. The method of claim 48, further comprising:
    determining the value of the first-colour-component sample by selecting from first-colour-component samples in the neighbouring area.

50. The method of claim 49, wherein determining the value of the first-colour-component sample by selecting from the first-colour-component samples in the neighbouring area comprises:

    determining a sample position to-be-selected according to a position and/or a colour component intensity of the first-colour-component sample in the neighbouring area; and
    determining the value of the first-colour-component sample from the neighbouring area according to the sample position to-be-selected.

51. The method of claim 48, wherein determining the reference sample value for the first colour component of the current block further comprises:

    performing second filtering on the value of the first-colour-component sample to obtain a filtered neighbouring sample value for the first colour component of the current block; and
    determining the reference sample value for the first colour component of the current block according to the filtered neighbouring sample value for the first colour component of the current block.

52. The method of claim 51, wherein the number of filtered neighbouring sample values for the first colour component of the current block is greater than the number of values of the first-colour-component samples.

53. The method of claim 48 or 51, wherein determining the reference sample value for the first colour component of the current block further comprises:
determining the reference sample value for the first colour component of the current block based on a reconstructed value of a first-reference-colour-component sample in the current block.

54. The method of claim 53, wherein the reference sample value for the first colour component of the current block is set to an absolute value of a difference between the value of the first-colour-component sample and the reconstructed value of the first-reference-colour-component sample.

55. The method of claim 53, wherein the reference sample value for the first colour component of the current block is set to an absolute value of a difference between the filtered neighbouring sample value for the first colour component and the reconstructed value of the first-reference-colour-component sample.

56. The method of claim 48 or 51, wherein determining the reference sample value for the first colour component of the current block further comprises:

performing third filtering on a reconstructed value of a first-reference-colour-component sample in the current block to obtain a filtered sample value of the first-reference-colour-component sample in the current block; and determining the reference sample value for the first colour component of the current block according to the filtered sample value of the first-reference-colour-component sample in the current block.

57. The method of claim 56, wherein the number of filtered sample values of the first-reference-colour-component samples in the current block is greater than the number of reconstructed values of the first-reference-colour-component samples in the current block.

58. The method of claim 56, wherein the reference sample value for the first colour component of the current block is set to an absolute value of a difference between a filtered neighbouring sample value for the first colour component and the filtered sample value of the first-reference-colour-component sample.

59. The method of claim 56, wherein the reference sample value for the first colour component of the current block is set to an absolute value of a difference between the value of the first-colour-component sample and the filtered sample value of the first-reference-colour-component sample.

60. The method of claim 46, wherein determining the weighting factor according to the reference sample value for the first colour component of the current block comprises:

determining a value corresponding to the reference sample value for the first colour component in a preset mapping; and
setting the weighting factor to be equal to the value.

61. The method of claim 60, wherein determining the value corresponding to the reference sample value for the first colour component in the preset mapping comprises:

determining a first factor;
determining a first product value according to the first factor and the reference sample value for the first colour component; and
determining a value corresponding to the first product value in the preset mapping.

62. The method of claim 61, wherein determining the first factor comprises:
the first factor being a preset constant value.

63. The method of claim 61, wherein determining the first factor comprises:
determining a value of the first factor according to a size parameter of the current block, wherein the size parameter of the current block comprises at least one of: a width of the current block or a height of the current block.

64. The method of claim 60, wherein the determining the value corresponding to the reference sample value for the first colour component in the preset mapping comprises:
the preset mapping being a Softmax function.

**65.** The method of claim 60, wherein determining the value corresponding to the reference sample value for the first colour component in the preset mapping comprises:
the preset mapping being a weighting function that is in inverse proportion with the reference sample value for the first colour component.

**66.** The method of claim 46, further comprising:
determining the reference sample value for the second colour component of the current block according to a value of a second-colour-component sample in a neighbouring area of the current block.

**67.** The method of claim 66, further comprising:

performing fourth filtering on the value of the second-colour-component sample in the neighbouring area of the current block, to obtain a filtered neighbouring sample value for the second colour component of the current block; and

determining the reference sample value for the second colour component of the current block according to the filtered neighbouring sample value for the second colour component of the current block.

**68.** The method of claim 67, wherein the number of filtered neighbouring sample values for the second colour component of the current block is greater than the number of values of the second-colour-component samples in the neighbouring area of the current block.

**69.** The method of claim 67, further comprising:
the fourth filtering being up-sampling filtering, wherein an up-sampling rate is a positive integer multiple of 2.

**70.** The method of claim 67, further comprising:
performing fourth filtering on the value of the second-colour-component sample in the neighbouring area of the current block based on colour format information, to obtain the filtered neighbouring sample value for the second colour component of the current block.

**71.** The method of claim 70, wherein performing the fourth filtering further comprises:
performing up-sampling filtering on the value of the second-colour-component sample in the neighbouring area of the current block when the colour format information indicates 4:2:0 sampling, wherein an up-sampling rate is a positive integer multiple of 2.

**72.** The method of claim 67, wherein

the method further comprises:
performing second filtering on a value of a first-colour-component sample in the neighbouring area of the current block according to a first horizontal up-sampling factor and a first vertical up-sampling factor, to obtain a filtered neighbouring sample value for the first colour component of the current block; and performing fourth filtering on the value of the second-colour-component sample in the neighbouring area of the current block according to a second horizontal up-sampling factor and a second vertical up-sampling factor, to obtain a filtered neighbouring sample value for the second colour component of the current block; and
accordingly, the method further comprises:

when the colour format information indicates 4:4:4 sampling, determining that the second horizontal up-sampling factor is equal to the first horizontal up-sampling factor, and the second vertical up-sampling factor is equal to the first vertical up-sampling factor;
when the colour format information indicates 4:2:2 sampling, determining that the second horizontal up-sampling factor is equal to twice the first horizontal up-sampling factor, and the second vertical up-sampling factor is equal to the first vertical up-sampling factor;
when the colour format information indicates 4:1:1 sampling, determining that the second horizontal up-sampling factor is equal to four times the first horizontal up-sampling factor, and the second vertical up-sampling factor is equal to the first vertical up-sampling factor;
when the colour format information indicates 4:2:0 sampling, determining that the second horizontal up-sampling factor is equal to twice the first horizontal up-sampling factor, and the second vertical up-sampling factor is equal to twice the first vertical up-sampling factor.

73. The method of claim 53, further comprising:

when the colour format information indicates 4:4:4 sampling, determining that a width of the first prediction block is equal to a width of the current block, and a height of the first prediction block is equal to a height of the current block;
when the colour format information indicates 4:2:2 sampling, determining that the width of the first prediction block is equal to twice the width of the current block, and the height of the first prediction block is equal to the height of the current block;
when the colour format information indicates 4:1:1 sampling, determining that the width of the first prediction block is equal to four times the width of the current block, and the height of the first prediction block is equal to the height of the current block;
when the colour format information indicates 4:2:0 sampling, determining that the width of the first prediction block is equal to twice the width of the current block, and the height of the first prediction block is equal to twice the height of the current block.

74. The method of claim 56, wherein
the method further comprises:
performing the third filtering on the reconstructed value of the first-reference-colour-component sample in the current block according to a third horizontal up-sampling factor and a third vertical up-sampling factor, to obtain the filtered sample value of the first-reference-colour-component sample in the current block; and accordingly, the method further comprises:

when the colour format information indicates 4:4:4 sampling, determining that a width of the first prediction block is equal to a product of a width of the current block and the third horizontal up-sampling factor, and a height of the first prediction block is equal to a product of a height of the current block and the third vertical up-sampling factor;
when the colour format information indicates 4:2:2 sampling, determining that the width of the first prediction block is equal to twice the product of the width of the current block and the third horizontal up-sampling factor, and the height of the first prediction block is equal to the product of the height of the current block and the third vertical up-sampling factor;
when the colour format information indicates 4:1:1 sampling, determining that the width of the first prediction block is equal to four times the product of the width of the current block and the third horizontal up-sampling factor, and the height of the first prediction block is equal to the product of the height of the current block and the third vertical up-sampling factor;
when the colour format information indicates 4:2:0 sampling, determining that the width of the first prediction block is equal to twice the product of the width of the current block and the third horizontal up-sampling factor, and the height of the first prediction block is equal to twice the product of the height of the current block and the third vertical up-sampling factor.

75. The method of claim 46, wherein determining the first prediction block for the second colour component of the current block according to the weighting factor and the reference sample value for the second colour component of the current block comprises:

determining a weighted value obtained by multiplying the reference sample value for the second colour component by a corresponding weighting factor; and
setting a prediction value of a second-colour-component sample in the first prediction block to be equal to a sum of $N$ weighted values, wherein $N$ represents the number of reference sample values for the second colour component, and $N$ is a positive integer.

76. The method of claim 46, wherein the first filtering is down-sampling filtering.

77. The method of claim 76, wherein performing the first filtering on the first prediction block to determine the second prediction block for the second colour component of the current block comprises:
performing down-sampling filtering on the first prediction block by using a preset filter, to determine the second prediction block for the second colour component of the current block.

78. The method of claim 76, wherein performing the first filtering on the first prediction block to determine the second prediction block for the second colour component of the current block comprises:

determining a horizontal down-sampling factor and a vertical down-sampling factor; and

performing down-sampling filtering on the first prediction block according to the horizontal down-sampling factor and the vertical down-sampling factor, to obtain the second prediction block for the second colour component of the current block.

79. The method of claim 78, wherein performing down-sampling filtering on the first prediction block according to the horizontal down-sampling factor and the vertical down-sampling factor to obtain the second prediction block for the second colour component of the current block comprises:
when the horizontal down-sampling factor is greater than 1 or the vertical down-sampling factor is greater than 1, performing down-sampling filtering on the first prediction block to obtain the second prediction block.

80. The method of claim 79, wherein performing down-sampling filtering on the first prediction block comprises at least one of:

performing down-sampling filtering on the first prediction block in a horizontal direction;
performing down-sampling filtering on the first prediction block in a vertical direction;
performing down-sampling filtering on the first prediction block in a horizontal direction and then in a vertical direction; or
performing down-sampling filtering on the first prediction block in a vertical direction and then in a horizontal direction.

81. The method of claim 78, wherein performing the first filtering on the first prediction block to determine the second prediction block for the second colour component of the current block comprises:
performing weighted sum calculation on every preset number of prediction values of the second colour component of the first prediction block in a horizontal direction and/or a vertical direction according to the horizontal down-sampling factor and the vertical down-sampling factor, to obtain the second prediction block.

82. The method of claim 81, wherein performing weighted sum calculation on every preset number of prediction values of the second colour component of the first prediction block in a horizontal direction and/or a vertical direction to obtain the second prediction block comprises:
performing weighted sum calculation on every horizontal down-sampling factor number of prediction values of the second colour component of the first prediction block in a horizontal direction, to obtain the second prediction block.

83. The method of claim 81, wherein performing weighted sum calculation on every preset number of prediction values of the second colour component of the first prediction block in a horizontal direction and/or a vertical direction to obtain the second prediction block comprises:
performing weighted sum calculation on every vertical down-sampling factor number of prediction values of the second colour component of the first prediction block in a vertical direction, to obtain the second prediction block.

84. The method of claim 81, wherein performing weighted sum calculation on every preset number of prediction values of the second colour component of the first prediction block in a horizontal direction and/or a vertical direction to obtain the second prediction block comprises:
performing weighted sum calculation on every horizontal down-sampling factor number of prediction values of the second colour component of the first prediction block in a horizontal direction, and performing weighted sum calculation on every vertical down-sampling factor number of prediction values of the second colour component of the first prediction block in a vertical direction, to obtain the second prediction block.

85. The method of claim 46, further comprising:

determining the weighting factor according to a reference sample value for a first colour component of some samples in the first prediction block; and
determining the second prediction block for the second colour component of the current block according to the weighting factor and a reference sample value for a second colour component of some samples in the first prediction block.

86. The method of claim 85, wherein determining the second prediction block for the second colour component of the current block according to the weighting factor and the reference sample value for the second colour component of some samples in the first prediction block comprises:
obtaining a prediction value of a second colour component of a sample at position $(x, y)$ in the current block by multiplying a reference sample value for a second colour component of a sample at position $(i, j)$ in the first prediction block by the weighting factor, wherein $i$, $j$, $x$, and $j$ are integers greater than or equal to zero.

**87.** The method of claim 86, further comprising:

when the colour format information indicates 4:4:4 sampling, setting $x$ to be equal to $i$, and setting $y$ to be equal to $j$;
when the colour format information indicates 4:2:2 sampling, setting $x$ to be equal to a product of $i$ and 2, and setting $y$ to be equal to $j$;
when the colour format information indicates 4:1:1 sampling, setting $x$ to be equal to a product of $i$ and 4, and setting $y$ to be equal to $j$;
when the colour format information indicates 4:2:0 sampling, setting $x$ to be equal to a product of $i$ and 2, and setting $y$ to be equal to a product of $j$ and 2.

**88.** The method of claim 86, further comprising:

determining a horizontal sampling position factor and a vertical sampling position factor; and
setting x to be equal to a product of $i$ and the horizontal sampling position factor, and setting $y$ to be equal to a product of $j$ and the vertical sampling position factor.

**89.** The method of claim 46, further comprising:

after determining the second prediction block for the second colour component of the current block, performing related processing on the second prediction block and using the processed second prediction block as the second prediction block, wherein
performing related processing on the second prediction block comprises at least one of:

performing third filtering on the second prediction block;
refining the second prediction block by using a preset compensation value; or
performing weighted average calculation on the second prediction block by using a prediction value of the second colour component of the current block in at least one prediction mode.

**90.** The method of claim 46, wherein determining the residual value of the second-colour-component sample in the current block according to the second prediction block. comprises:

determining a prediction value of the second-colour-component sample in the current block according to the second prediction block; and
determining the residual value of the second-colour-component sample in the current block according to an original value of the second-colour-component sample in the current block and the prediction value of the second-colour-component sample in the current block.

**91.** The method of claim 90, further comprising:
encoding the residual value of the second-colour-component sample in the current block, and signalling obtained encoded bits into a bitstream.

**92.** An encoding apparatus, comprising:

a first determining unit configured to determine a reference sample value for a first colour component of a current block, and determine a weighting factor according to the reference sample value for the first colour component of the current block;
a first predicting unit configured to determine a first prediction block for a second colour component of the current block according to the weighting factor and a reference sample value for the second colour component of the current block, wherein the number of prediction values of the second colour component of the first prediction block is greater than the number of second-colour-component samples in the current block; and
a first filtering unit configured to perform first filtering on the first prediction block to determine a second prediction block for the second colour component of the current block; and
the first determining unit being further configured to determine a residual value of the second-colour-component sample in the current block according to the second prediction block.

93. An encoding device, comprising a first memory and a first processor, wherein

the first memory is configured to store computer programs executable by the first processor; and
the first processor is configured to execute the computer programs to perform the method any of claims 46 to 91.

94. A decoding apparatus, comprising:

a second determining unit configured to determine a reference sample value for a first colour component of a current block, and determine a weighting factor according to the reference sample value for the first colour component of the current block;
a second predicting unit configured to determine a first prediction block for a second colour component of the current block according to the weighting factor and a reference sample value for the second colour component of the current block, wherein the number of prediction values of the second colour component of the first prediction block is greater than the number of second-colour-component samples in the current block; and
a second filtering unit configured to perform first filtering on the first prediction block to determine a second prediction block for the second colour component of the current block; and
the second determining unit being further configured to determine a reconstructed value of the second-colour-component sample in the current block according to the second prediction block.

95. A decoding device, comprising a second memory and a second processor, wherein

the second memory is configured to store computer programs executable by the second processor; and
the second processor is configured to execute the computer programs to perform the method of any of claims 1 to 45.

96. A computer-readable storage medium, configured to store computer programs which, when executed, are operable to implement the method of any of claims 1 to 45 or implement the method of any of claims 46 to 91.

FIG. 1

(a)                              (b)                              (c)

FIG. 2

FIG. 3

FIG. 4A

FIG. 4B

DETERMINE REFERENCE SAMPLE VALUE FOR FIRST COLOUR COMPONENT OF CURRENT BLOCK — S501

↓

DETERMINE WEIGHTING FACTOR ACCORDING TO REFERENCE SAMPLE VALUE FOR FIRST COLOUR COMPONENT OF CURRENT BLOCK — S502

↓

DETERMINE FIRST PREDICTION BLOCK FOR SECOND COLOUR COMPONENT OF CURRENT BLOCK ACCORDING TO WEIGHTING FACTOR AND REFERENCE SAMPLE VALUE FOR SECOND COLOUR COMPONENT OF CURRENT BLOCK — S503

↓

PERFORM FIRST FILTERING ON FIRST PREDICTION BLOCK TO DETERMINE SECOND PREDICTION BLOCK FOR SECOND COLOUR COMPONENT OF CURRENT BLOCK — S504

↓

DETERMINE RECONSTRUCTED VALUE OF SECOND-COLOUR-COMPONENT SAMPLE IN CURRENT BLOCK ACCORDING TO SECOND PREDICTION BLOCK — S505

FIG. 5

FIG. 6A

| RefLuma (i,j) | RefLuma (i+1,j) | | | | | | |
|---|---|---|---|---|---|---|---|
| RefLuma (i,j+1) | | | | | | | |

| RefChroma | | | |
|---|---|---|---|
| | | | |

| RefChroma (i,j) | RefChroma _copy (i,j) | RefChroma (i+2,j) | RefChroma _copy (i+2,j) | | | | |
|---|---|---|---|---|---|---|---|
| RefChroma (i,j) | RefChroma (i,j) | RefChroma _copy (i+2,j) | RefChroma _copy (i+2,j) | | | | |

## FIG. 6B

FIG. 7

FIG. 8

| DETERMINE CORE PARAMETER(S) FOR WCP MODE | S901 |

| PERFORM UP-SAMPLING FILTERING ON REFERENCE CHROMA INFORMATION WITHOUT LOSS OF REFERENCE LUMA INFORMATION, TO MAINTAIN THE SAME SPATIAL RESOLUTION AS REFERENCE LUMA INFORMATION | S902 |

| DETERMINE TARGET INFORMATION OF CURRENT BLOCK ACCORDING TO CORE PARAMETER | S903 |

| PERFORM WCP ACCORDING TO TARGET INFORMATION WITHOUT LOSS OF RECONSTRUCTED LUMA INFORMATION OF CURRENT BLOCK, TO OBTAIN FIRST PREDICTION BLOCK FOR CURRENT BLOCK | S904 |

| PERFORM DOWN-SAMPLING FILTERING ON OBTAINED FIRST PREDICTION BLOCK TO DETERMINE SECOND PREDICTION BLOCK FOR CURRENT BLOCK, WHERE SECOND PREDICTION BLOCK AND CHROMA COMPONENT OF CURRENT BLOCK HAVE THE SAME SPATIAL RESOLUTION | S905 |

| PERFORM POST-PROCESSING ON PREDICTED CHROMA VALUES OF SECOND PREDICTION BLOCK TO DETERMINE TARGET PREDICTION BLOCK FOR CURRENT BLOCK | S906 |

FIG. 9

REFERENCE LUMA
INFORMATION IS LOSSLESS — S1001

REFERENCE LUMA
INFORMATION REMAINS
UNCHANGED — S1002

PERFORM UP-SAMPLING
FILTERING ON REFERENCE
LUMA INFORMATION — S1003

REFERENCE CHROMA
INFORMATION REMAINS
UNCHANGED WHILE
REFERENCE LUMA
INFORMATION REMAINS
UNCHANGED — S1004

PERFORM UP-
SAMPLING FILTERING
ON REFERENCE
CHROMA INFORMATION
WHILE REFERENCE
LUMA INFORMATION
REMAINS UNCHANGED — S1005

PERFORM UP-SAMPLING
FILTERING ON REFERENCE
CHROMA INFORMATION
WHILE PERFORMING UP-
SAMPLING FILTERING ON
REFERENCE LUMA
INFORMATION — S1006

FIG. 10

RECONSTRUCTED LUMA
INFORMATION OF CURRENT
BLOCK IS LOSSLESS — S1101

RECONSTRUCTED LUMA
INFORMATION OF
CURRENT BLOCK
REMAINS UNCHANGED — S1102

PERFORM UP-SAMPLING
FILTERING ON
RECONSTRUCTED LUMA
INFORMATION OF CURRENT
BLOCK — S1103

FIG. 11

refY_T

recY

refY_L

FIG. 12

FIG. 13

FIG. 14

FIG. 15

RECONSTRUCTED LUMA INFORMATION OF CURRENT BLOCK IS LOSSLESS — S1101

RECONSTRUCTED LUMA INFORMATION OF CURRENT BLOCK REMAINS UNCHANGED — S1102

PERFORM UP-SAMPLING FILTERING ON RECONSTRUCTED LUMA INFORMATION OF CURRENT BLOCK — S1103

FOR SAMPLE TO-BE-PREDICTED AT EACH LUMA POSITION, CONSTRUCT LUMA DIFFERENCE VECTOR BY USING REFERENCE CHROMA INFORMATION, REFERENCE LUMA INFORMATION, AND RECONSTRUCTED LUMA INFORMATION OF CURRENT BLOCK IN TARGET INFORMATION — S1601

FOR SAMPLE TO-BE-PREDICTED AT EACH LUMA POSITION, CALCULATE WEIGHT VECTOR ACCORDING TO LUMA DIFFERENCE VECTOR BY USING NONLINEAR FUNCTION — S1602

FOR SAMPLE TO-BE-PREDICTED AT EACH LUMA POSITION, PERFORM WEIGHTED CALCULATION ACCORDING TO WEIGHT VECTOR AND REFERENCE CHROMA INFORMATION IN TARGET INFORMATION, TO OBTAIN CHROMA PREDICTION VALUE — S1603

FOR SAMPLE TO-BE-PREDICTED AT EACH LUMA POSITION, REFINE CHROMA PREDICTION VALUE OBTAINED, TO DETERMINE THE FIRST PREDICTION BLOCK FOR CURRENT BLOCK — S1604

FIG. 16

RECONSTRUCTED LUMA INFORMATION OF CURRENT BLOCK IS LOSSLESS — S1701

RECONSTRUCTED LUMA INFORMATION OF CURRENT BLOCK REMAINS UNCHANGED — S1702

FOR SAMPLE TO-BE-PREDICTED AT SOME LUMA POSITIONS, CONSTRUCT LUMA DIFFERENCE VECTOR BY USING REFERENCE CHROMA INFORMATION, REFERENCE LUMA INFORMATION, AND RECONSTRUCTED LUMA INFORMATION OF CURRENT BLOCK IN TARGET INFORMATION — S1703

FOR SAMPLE TO-BE-PREDICTED AT SOME LUMA POSITIONS, CALCULATE WEIGHT VECTOR ACCORDING TO LUMA DIFFERENCE VECTOR BY USING NONLINEAR FUNCTION — S1704

FOR SAMPLE TO-BE-PREDICTED AT SOME LUMA POSITIONS, PERFORM WEIGHTED CALCULATION ACCORDING TO WEIGHT VECTOR AND REFERENCE CHROMA INFORMATION IN TARGET INFORMATION, TO OBTAIN CHROMA PREDICTION VALUE — S1705

FOR SAMPLE TO-BE-PREDICTED AT SOME LUMA POSITIONS, REFINE CHROMA PREDICTION VALUE CALCULATED, TO DETERMINE FIRST PREDICTION BLOCK FOR CURRENT BLOCK — S1706

FIG. 17

| DETERMINE REFERENCE SAMPLE VALUE FOR FIRST COLOUR COMPONENT OF CURRENT BLOCK | S1801 |

| DETERMINE WEIGHTING FACTOR ACCORDING TO REFERENCE SAMPLE VALUE FOR FIRST COLOUR COMPONENT OF CURRENT BLOCK | S1802 |

| DETERMINE FIRST PREDICTION BLOCK FOR SECOND COLOUR COMPONENT OF CURRENT BLOCK ACCORDING TO WEIGHTING FACTOR AND REFERENCE SAMPLE VALUE FOR SECOND COLOUR COMPONENT OF CURRENT BLOCK | S1803 |

| PERFORM FIRST FILTERING ON FIRST PREDICTION BLOCK TO DETERMINE SECOND PREDICTION BLOCK FOR SECOND COLOUR COMPONENT OF CURRENT BLOCK | S1804 |

| DETERMINE RESIDUAL VALUE OF SECOND-COLOUR-COMPONENT SAMPLE IN CURRENT BLOCK ACCORDING TO SECOND PREDICTION BLOCK | S1805 |

FIG. 18

DETERMINE REFERENCE SAMPLE VALUE FOR FIRST COLOUR COMPONENT OF CURRENT BLOCK — S1801

DETERMINE WEIGHTING FACTOR ACCORDING TO REFERENCE SAMPLE VALUE FOR FIRST COLOUR COMPONENT OF CURRENT BLOCK — S1802

DETERMINE FIRST PREDICTION BLOCK FOR SECOND COLOUR COMPONENT OF CURRENT BLOCK ACCORDING TO WEIGHTING FACTOR AND REFERENCE SAMPLE VALUE FOR SECOND COLOUR COMPONENT OF CURRENT BLOCK — S1803

PERFORM FIRST FILTERING ON FIRST PREDICTION BLOCK TO DETERMINE SECOND PREDICTION BLOCK FOR SECOND COLOUR COMPONENT OF CURRENT BLOCK — S1804

DETERMINE PREDICTION VALUE OF SECOND-COLOUR-COMPONENT SAMPLE IN CURRENT BLOCK ACCORDING TO SECOND PREDICTION BLOCK — S1901

DETERMINE RESIDUAL VALUE OF SECOND-COLOUR-COMPONENT SAMPLE IN CURRENT BLOCK ACCORDING TO ORIGINAL VALUE OF SECOND-COLOUR-COMPONENT SAMPLE IN CURRENT BLOCK AND PREDICTION VALUE OF SECOND-COLOUR-COMPONENT SAMPLE IN CURRENT BLOCK — S1902

ENCODE RESIDUAL VALUE OF SECOND-COLOUR-COMPONENT SAMPLE IN CURRENT BLOCK, AND SIGNAL OBTAINED ENCODED BITS INTO BITSTREAM — S1903

FIG. 19

FIG. 20

FIG. 21

320

DECODING APPARATUS

3201

SECOND
DETERMINING
UNIT

3202

SECOND
PREDICTING
UNIT

3204

DECODING
UNIT

3203

SECOND
FILTERING
UNIT

FIG. 22

330

DECODING DEVICE

3301

SECOND
COMMUNICATION
INTERFACE

3304

3303

SECOND
PROCESSOR

3302

SECOND
MEMORY

FIG. 23

340

3401

3402

ENCODER

DECODER

FIG. 24

## INTERNATIONAL SEARCH REPORT

International application No.

**PCT/CN2022/086471**

### A. CLASSIFICATION OF SUBJECT MATTER

H04N 19/159(2014.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

WPI, EPODOC, CNPAT, CNKI, JVET: 当前块, 目标块, 颜色, 色度, 分量, 第一, 第二, 参考, 采样, 样值, 加权, 预测, 滤波, 相邻, 邻近, current, target, block, color, chroma, component, weight, first, second, reference, sampling, value, weighting, predict +, filter, border, adjacent, neighbouring

### C. DOCUMENTS CONSIDERED TO BE RELEVANT

| Category* | Citation of document, with indication, where appropriate, of the relevant passages | Relevant to claim No. |
|---|---|---|
| A | WO 2020029187 A1 (GUANGDONG OPPO MOBILE TELECOMMUNICATIONS CORP., LTD.) 13 February 2020 (2020-02-13) <br> description, page 2, line 36 to page 10, line 29 | 1-96 |
| A | CN 113891082 A (GUANGDONG OPPO MOBILE COMMUNICATIONS CO., LTD.) 04 January 2022 (2022-01-04) <br> entire document | 1-96 |
| A | CN 113412617 A (SAMSUNG ELECTRONICS CO., LTD.) 17 September 2021 (2021-09-17) <br> entire document | 1-96 |
| A | Jani Lainema et al. "AHG12: Slope Adjustment for CCLM," <br> *Joint Video Experts Team (JVET) of ITU-T SG 16 WP 3 and ISO/IEC JTC 1/SC 29 25th Meeting, by teleconference, 12–21 January 2022*, 21 January 2022 (2022-01-21), <br> entire document | 1-96 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **18 November 2022** | **28 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/086471**

| Patent document cited in search report | | | Publication date (day/month/year) | Patent family member(s) | | | Publication date (day/month/year) |
|---|---|---|---|---|---|---|---|
| WO | 2020029187 | A1 | 13 February 2020 | KR | 20210042355 | A | 19 April 2021 |
| | | | | BR | 112021002191 | A2 | 04 May 2021 |
| | | | | EP | 3823278 | A1 | 19 May 2021 |
| | | | | US | 2021160515 | A1 | 27 May 2021 |
| | | | | AU | 2018435559 | A1 | 11 March 2021 |
| | | | | IL | 280692 | A | 25 March 2021 |
| | | | | CA | 3109008 | A1 | 13 February 2020 |
| | | | | JP | 2022500890 | A | 04 January 2022 |
| | | | | PH | 12021550290 | A1 | 11 October 2021 |
| | | | | SG | 11202101331 | A1 | 30 March 2021 |
| | | | | CN | 112534817 | A | 19 March 2021 |
| | | | | VN | 78094 | A | 25 May 2021 |
| | | | | CN | 113068028 | A | 02 July 2021 |
| | | | | IN | 202127009013 | A | 16 July 2021 |
| CN | 113891082 | A | 04 January 2022 | WO | 2021120122 | A1 | 24 June 2021 |
| | | | | CN | 113439440 | A | 24 September 2021 |
| | | | | EP | 3955574 | A1 | 16 February 2022 |
| | | | | US | 2022070476 | A1 | 03 March 2022 |
| | | | | IN | 202117051192 | A | 18 March 2022 |
| | | | | KR | 20220112668 | A | 11 August 2022 |
| CN | 113412617 | A | 17 September 2021 | KR | 20210073597 | A | 18 June 2021 |
| | | | | WO | 2020130745 | A1 | 25 June 2020 |
| | | | | KR | 20220116357 | A | 22 August 2022 |
| | | | | EP | 3902251 | A1 | 27 October 2021 |
| | | | | US | 2022078453 | A1 | 10 March 2022 |
| | | | | BR | 112021012196 | A2 | 31 August 2021 |
| | | | | VN | 81252 | A | 25 October 2021 |
| | | | | IN | 202127031638 | A | 18 March 2022 |

Form PCT/ISA/210 (patent family annex) (January 2015)